# EUROPEAN PATENT APPLICATION

(11) **EP 4 760 899 A1**
(43) Date of publication of application: **17.06.2026**
(21) Application number: 23949510.4
(22) Date of filing: 25.09.2023
(51) Int. Cl.: H01M 50/176, H01M 10/6568, H01M 50/112

(54) **BATTERY CELL, BATTERY, AND ELECTRIC DEVICE**

(30) Priority: 23.08.2023 CN 202311071807
(71) Applicant: Contemporary Amperex Technology Co., Limited, Ningde, Fujian 352100 (CN)
(72) Inventor: WU, Kai, Ningde, Fujian 352100 (CN); LUO, Weijie, Ningde, Fujian 352100 (CN); LIN, Wenfa, Ningde, Fujian 352100 (CN); ZHANG, Shengwu, Ningde, Fujian 352100 (CN); TANG, Minghao, Ningde, Fujian 352100 (CN); HUANG, Biao, Ningde, Fujian 352100 (CN)
(74) Representative: Gong, Jinping
(86) International application number: PCT/CN2023/121161
(87) International publication number: WO 2025/039326

(57) **Abstract**

A battery cell, a battery, and a power consuming apparatus, relating to the field of battery technologies. The battery cell includes a housing assembly and a sealing structure. The housing assembly defines an accommodating cavity and is provided with a flow channel in communication with the accommodating cavity. The sealing structure is engaged with the housing assembly and is configured to open or seal the flow channel.

## Description

### CROSS-REFERENCE TO RELATED APPLICATIONS

The present application claims priority to and benefits of Chinese Patent Application No. 202311071807.X, filed on August 23, 2023, which is incorporated herein by reference in its entirety.

### TECHNICAL FIELD

This application relates to the field of battery technologies, and in particular, to a battery cell, a battery, and a power consuming apparatus.

### BACKGROUND

In recent years, new energy vehicles have experienced leapfrog development. In the field of electric vehicles, power batteries, as the power source of electric vehicles, play an irreplaceable and critical role. A power battery consists of multiple battery cells, yet the operational reliability and service life of these battery cells still require further improvement.

### SUMMARY

Embodiments of this application provide a battery cell, a battery, and a power consuming apparatus, thereby improving the operational reliability and service life of battery cells.

According to a first aspect, embodiments of this application provide a battery cell, including a housing assembly and a sealing structure. The housing assembly defines an accommodating cavity and is provided with a flow channel in communication with the accommodating cavity. The sealing structure is engaged with the housing assembly and is configured to open or seal the flow channel.

In the foregoing technical solution, the sealing structure that can open and close the flow channel is disposed in the battery cell. In the production phase of the battery cell, the sealing structure enables the flow channel to be in an open state. In this case, an electrolyte solution may be filled into the accommodating cavity through the flow channel. After the electrolyte solution is filled, the sealing structure closes and seals the flow channel to keep the electrolyte solution from spilling, so that the battery cell can be normally used. In the process of using the battery cell, the consumption of the electrolyte solution leads to a reduction of the electrolyte solution in the housing assembly, affecting the service life of the battery cell. Therefore, the flow channel may be regularly opened through the sealing structure to add the electrolyte solution to the accommodating cavity through the flow channel, thereby improving the service life of the battery cell. In the process of using the battery cell, the electrolyte solution generates gases after participating in reactions, leading to an increase in the pressure in the housing assembly. When the pressure reaches a particular level, reliability issues arise. Therefore, in the process of using the battery cell, the flow channel may be regularly opened through the sealing structure to regularly relieve the pressure in the accommodating cavity through the flow channel, thereby improving the operational reliability of the battery cell. In short, the battery cell according to the embodiments of this application can enhance the service life and the operational reliability of the battery cell while meeting manufacturing requirements.

In some embodiments, the sealing structure is engaged with the housing assembly detachably.

In the foregoing technical solution, the sealing structure is disposed in a detachable form with respect to the housing assembly. Compared with a solution in which the sealing structure is movable with respect to the housing assembly to open and close the flow channel, the connection manner between the sealing structure and the housing assembly is simplified, the design and processing of the housing assembly are simplified, and the sealing reliability of the sealing structure for the housing assembly is improved. In addition, compared with a solution in which the sealing structure switches between different configurations to open and close the flow channel, the structural complexity of the sealing structure is reduced, thereby reducing the processing difficulty and processing costs of the sealing structure.

In some embodiments, the sealing structure includes a first structural member and a second structural member, the second structural member is sealingly engaged with the flow channel, and the first structural member is engaged with the housing assembly in a locking manner and is located on a side of the second structural member that is away from the accommodating cavity to restrict the second structural member to a position of sealing the flow channel.

In the foregoing technical solution, the second structural member is disposed in the sealing structure to seal the flow channel, and the first structural member is disposed to limit the second structural member, so that the second structural member is prevented from being disengaged away from the accommodating cavity, and the second structural member maintains a state of sealing the flow channel, thereby enhancing the sealing effect of the second structural member for the flow channel. In addition, because the sealing structure is formed by the first structural member and the second structural member, locking convenience and reliability may be mainly considered during the design of the first structural member, and sealing does not need to be considered or minimal consideration for sealing is required, so that the locking reliability and locking convenience of the first structural member can be enhanced. The sealing performance of the flow channel may be mainly considered during the design of the second structural member, and locking does not need to be considered or minimal consideration for locking is required, so that the sealing reliability of the second structural member for the flow channel can be enhanced. In addition, because fewer factors are considered during the design of both the first structural member and the second structural member, the first structural member and the second structural member may be designed relatively simple, thereby facilitating the processing of the first structural member and the second structural member.

In some embodiments, the first structural member is connected to the second structural member.

In the foregoing technical solution, during mounting, the first structural member and the second structural member may be first assembled and connected to form an assembly, and then the assembly formed by the first structural member and the second structural member is mounted together to the flow channel of the housing assembly, thereby enhancing the assembly efficiency of the sealing structure to the housing assembly. In addition, because the first structural member and the second structural member have a connection relationship, the first structural member reliably limits the second structural member, so that the first structural member may enable the second structural member to be more stably in a position of sealing the flow channel.

In some embodiments, the first structural member is connected to the second structural member detachably.

In the foregoing technical solution, because the first structural member is detachably connected to the second structural member, one of the first structural member and the second structural member can be detached and replaced when being damaged, thereby reducing the maintenance costs of the sealing structure.

In some embodiments, the connection between the first structural member and the second structural member enables the first structural member and the second structural member to remain in a connected state when the sealing structure is detached with respect to the housing assembly.

In the foregoing technical solution, when the first structural member is detached with respect to the housing assembly, the second structural member and the first structural member remain in a connected state, so that the second structural member can leave the housing assembly together with the first structural member, and the detachment efficiency of the sealing structure with respect to the housing assembly can be improved, thereby facilitating maintenance operations.

In some embodiments, a first mating portion is provided on a side of the first structural member that faces the second structural member, a second mating portion is provided on a side of the second structural member that faces the first structural member, one of the first mating portion and the second mating portion is a convex structure and the other is a concave structure, and the convex structure is engaged with the concave structure.

In the foregoing technical solution, the first structural member and the second structural member can be quickly assembled in a concave-convex plug-in manner, and the design and processing of the two are facilitated, thereby reducing the processing costs of the two.

In some embodiments, the convex structure forms an interference fit, a threaded engagement, or a limiting engagement via a limiting structure with the concave structure to prevent the convex structure from being disengaged from the concave structure.

In the foregoing technical solution, during mounting, the first structural member and the second structural member may be mounted in the housing assembly together, and during detachment, the second structural member leaves the housing assembly together with the first structural member, thereby improving the overall assembly efficiency and detachment efficiency of the sealing structure.

In some embodiments, at least a portion of the first structural member is inserted in the housing assembly.

In the foregoing technical solution, the engagement compactness of the sealing structure and the housing assembly is improved, thereby reducing the occupation of space outside the housing assembly by the first structural member. When the first structural member is fully inserted into the housing assembly and the first structural member does not protrude from the surface of the housing assembly, in this case, the probability of damage or unintended unlocking of the first structural member can be reduced, thereby improving the sealing reliability for the flow channel.

In some embodiments, the first structural member is configured to lock and unlock with the housing assembly via rotational motion.

In the foregoing technical solution, the locking and unlocking manners of the first structural member are simple, thereby facilitating operations.

In some embodiments, a tool mating hole is provided in a surface on a side of the first structural member that is away from the second structural member.

In the foregoing technical solution, the tool mating holes provided in the surface on the side of the first structural member that is away from the second structural member to facilitate the use of a tool to rotate the first structural member, thereby achieving the locking and unlocking of the first structural member. In addition, at least a portion of the first structural member does not need to protrude from the surface of the housing assembly to rotate the first structural member, and the rotation operation of the first structural member can also be achieved when at least a portion of the first structural member is inserted into the housing assembly.

In some embodiments, a positioning structure is provided on the surface on the side of the first structural member that is away from the second structural member.

In the foregoing technical solution, it is convenient to use the positioning structure to guide the mounting position of the first structural member to enable the first structural member to be quickly aligned with the mounting position, and/or, to use the positioning structure to detect the rotational angle of the first structural member to ensure that the first structural member rotates in position, thereby ensuring the locking reliability, and the like.

In some embodiments, the first structural member includes a central portion and a locking portion, the central portion is disposed corresponding to the flow channel, the locking portion is located in a peripheral region of the central portion, a stopper portion and an avoidance hole that are located around the flow channel and are alternately disposed are formed on the housing assembly, a receiving groove is formed on a side of the stopper portion that is close to the accommodating cavity, the avoidance hole penetrates a surface on a side of the housing assembly that is away from the accommodating cavity and is in communication with the receiving groove, and the locking portion rotates through the avoidance hole to enter/exit the receiving groove.

In the foregoing technical solution, only the operation of rotating the first structural member is required to switch between locking and unlocking of the first structural member and the housing assembly, and other excessive operations are not required, thereby reducing the operation difficulty and improving the assembly and disassembly efficiency of the first structural member. In addition, the structures of both the first structural member and the housing assembly are relatively simple, thereby facilitating processing. In addition, because the locking portion is located around the central portion, the design of the central portion is not affected. The size, configuration, and the like of the central portion may be flexibly designed according to engagement requirements with the flow channel, thereby improving the design flexibility. In addition, the locking portion may correspond to a surrounding region of the flow channel, and the design of the size, shape, and the like of the flow channel is not affected, so that the design requirements of the flow channel can be met.

In some embodiments, a plurality of avoidance holes are provided and are disposed at intervals around the flow channel, the stopper portion is disposed between every two adjacent avoidance holes, a plurality of locking portions are provided and are disposed at intervals around the central portion, and the plurality of locking portions are disposed corresponding to the plurality of avoidance holes respectively.

In the foregoing technical solution, through stop engagements between the plurality of locking portions and the plurality of stopper portions, the reliability of the locking engagement between the first structural member and the housing assembly can be improved. In addition, because the plurality of locking portions are disposed at intervals, the space between adjacent locking portions may be used for the passage of the electrolyte solution to mitigate the problem of electrolyte solution accumulation formed at the position of the locking engagement, thereby enhancing the reliability of the battery cell.

In some embodiments, the housing assembly includes a support portion, the second structural member includes a lapping portion, and the lapping portion is lapped on a side of the support portion that is away from the accommodating cavity and is supported on a side of the first structural member that is close to the accommodating cavity, or the first structural member is lapped on the side of the support portion that is away from the accommodating cavity.

In the foregoing technical solution, under the action of the support portion, a limit position for the first structural member to move toward the accommodating cavity can be restricted, and under the action of the stopper portion, a limit position for the first structural member to move away from the accommodating cavity can be restricted, so that under the joint action of the stopper portion and the support portion, the first structural member can stably remain in a locking position of forming a locking engagement with the housing assembly, thereby enhancing the reliability of the locking engagement. In addition, the support portion may further achieve positioning in an assembly process, making it convenient for a person to know that the locking portion reaches a position corresponding to the receiving groove. In this case, the first structural member may be rotated for locking, thereby improving the convenience of assembly.

In some embodiments, a first positioning structure is provided on a side of the stopper portion that faces the receiving groove, a second positioning structure is provided on a side of the locking portion that faces the stopper portion, and the first positioning structure forms a positioning engagement with the second positioning structure to prevent the locking portion from rotating with respect to the stopper portion.

In the foregoing technical solution, the first positioning structure and the second positioning structure are disposed, so that the stability of the locking engagement between the first structural member and the housing assembly can be improved, and the risk that the first structural member rotates under an indeterminate external force and as a result the locking portion is detached from the stopper portion to form unlocking is lowered, thereby improving the reliability of the locking engagement between the first structural member and the housing assembly.

In some embodiments, one of the first positioning structure and the second positioning structure is a protrusion structure, and the other is a recess structure, and the protrusion structure forms a concave-convex engagement with the recess structure.

In the foregoing technical solution, the positioning engagement between the first positioning structure and the second positioning structure can be simply and effectively achieved. In addition, the first positioning structure and the second positioning structure are easy to process and have low manufacturing costs.

In some embodiments, the protrusion structure includes a plurality of elongated ribs disposed at intervals in a rotational direction of the first structural member, the recess structure includes a plurality of elongated grooves disposed at intervals in the rotational direction of the first structural member, and the plurality of elongated ribs are engaged with the plurality of elongated grooves in a one-to-one correspondence.

In the foregoing technical solution, the reliability and stability of the positioning engagement can be enhanced, thereby effectively improving the stability of the locking engagement between the first structural member and the housing assembly.

In some embodiments, the protrusion structure includes a boss structure, the recess structure includes an arc-shaped groove extending along the rotational direction of the first structural member, and the boss structure is engaged with the arc-shaped groove.

In the foregoing technical solution, the processing precision can be reduced, so that the protrusion structure and the recess structure can easily achieve the positioning engagement.

In some embodiments, the central portion is embedded in the flow channel, and forms a cylindrical surface engagement with the flow channel.

In the foregoing technical solution, when the first structural member rotates, the central portion and the flow channel form no interference, thereby ensuring that the first structural member can rotate smoothly. In addition, a mating clearance between the central portion and the flow channel can be reduced, thereby reducing the possibility of the entry of contaminants and the like through the mating clearance, thereby improving the reliability of the battery cell.

In some embodiments, at least a portion of the second structural member is plugged in the flow channel, and forms an interference fit with the flow channel to seal the flow channel.

In the foregoing technical solution, through the interference fit, the second structural member can simply and effectively seal the flow channel, the sealing reliability is high, and the structural complexity and processing difficulty are reduced, thereby reducing production costs. In addition, the interference fit facilitates the detachment of the second structural member, thereby facilitating the opening of the flow channel.

In some embodiments, the first structural member forms a cylindrical surface plug-in engagement with the second structural member to make the first structural member rotatable with respect to the second structural member.

In the foregoing technical solution, due to the cylindrical surface plug-in engagement, the first structural member is rotatable with respect to the second structural member, that is, when the second structural member forms an interference fit with the flow channel, in a process of rotating the first structural member to achieve the locking of the first structural member, through the cylindrical surface plug-in engagement, the first structural member can rotate independently without driving the second structural member to rotate together. In this way, the force used to rotate the first structural member can be reduced, thereby improving the smoothness of rotating the first structural member.

In some embodiments, the flow channel includes a first channel section and a second channel section arranged in sequence in an electrolyte solution filling direction, a cross-sectional area of the first channel section is greater than a cross-sectional area of the second channel section, the second structural member is in an interference fit with the second channel section, and at least a portion of the first structural member is embedded in the first channel section.

In the foregoing technical solution, the first channel section with a relatively large cross-sectional area is disposed to be engaged with the first structural member, so that the locking design of the first structural member is facilitated, thereby achieving the locking and unlocking of the first structural member. The second channel section with a small cross-sectional area is disposed to form an interference fit with the second structural member, thereby reducing the sealing difficulty and improving the sealing effect.

In some embodiments, the housing assembly forms a stepped surface at a connection between the first channel section and the second channel section, and the second structural member is locally supported on a side of the stepped surface that is away from the accommodating cavity.

In the foregoing technical solution, the sealing effect of the second structural member for the flow channel can be improved to some extent. In addition, the second structural member is locally supported on the side of the stepped surface that is away from the accommodating cavity, thereby further facilitating the detachment of the second structural member.

In some embodiments, the housing assembly forms the stepped surface at the connection between the first channel section and the second channel section, and the stepped surface obliquely extends toward the accommodating cavity in a direction from a hole wall of the first channel section to the second channel section.

In the foregoing technical solution, the stepped surface has a flow-guiding function, so that the electrolyte solution that accumulates in the first channel section can be guided into the second channel section to mitigate the problem of electrolyte solution accumulation in the first channel section, thereby improving the reliability of the battery cell.

In some embodiments, the sealing structure is configured to be at least partially embedded in the flow channel through an inlet of the flow channel.

In the foregoing technical solution, in this way, it is convenient to operate the sealing structure to open or seal the flow channel. For example, when the sealing structure is detachably engaged with the housing assembly, the mounting and detachment of the sealing structure are facilitated. In addition, the sealing structure is at least partially embedded in the flow channel, that is, the sealing structure can be fully embedded in the flow channel, or only a portion of the sealing structure can be embedded in the flow channel. In this way, on one hand, the space in the flow channel can be fully utilized, thereby improving the sealing reliability of the sealing structure for the flow channel. On the other hand, the height by which the sealing structure protrudes from the flow channel can be reduced, and the occupation of space outside the housing assembly by the sealing structure can be reduced, thereby reducing the overall size of the battery cell.

In some embodiments, the housing assembly includes a mounting portion, the flow channel includes an electrolyte solution filling hole formed in the mounting portion, the mounting portion includes a base portion and a base seat mounted on the base portion, and the sealing structure is engaged with the base seat and is configured to open or seal the electrolyte solution filling hole.

In the foregoing technical solution, the sealing structure is engaged with the base seat, the base seat is disposed as a separately processed part, and the base seat is mounted on the base portion through an assembly procedure, so that the base seat can be processed into a shape that adapts to the engagement with the sealing structure, and the structural complexity of the base portion can be simplified, thereby reducing the processing difficulty of the base portion and facilitating the diversity of types of the base portion.

In some embodiments, the housing assembly includes a housing and a terminal post structure, the accommodating cavity is defined by the housing, the terminal post structure is disposed in the housing, the terminal post structure is the mounting portion, the flow channel is disposed at the mounting portion and includes the electrolyte solution filling hole, and the sealing structure is engaged with the mounting portion and is configured to open or seal the electrolyte solution filling hole.

In the foregoing technical solution, the flow channel that can be used for electrolyte solution filling is disposed at the mounting portion, and the terminal post structure is the mounting portion, so that the electrolyte solution can be filled at the terminal post structure. In this way, the flow channel does not need to be separately opened in the housing. Therefore, the flow channel does not occupy the space of the housing, and the size of the terminal post structure does not need to be reduced to avoid the flow channel, so that while the size of the housing is not increased, the area of the terminal post structure can be increased, and the flow area of the terminal post structure can be increased, thereby reducing flow resistance and improving flow efficiency and the like. In addition, the increase in the area of the terminal post structure further facilitates the assembly and connection of the terminal post structure and the housing. In addition, the size of the housing does not need to be increased to increase the area of the terminal post structure, thereby facilitating the miniaturization and lightweight of the housing.

In some embodiments, the terminal post structure includes a terminal post body and a terminal post cover plate, the terminal post body is mounted in the housing, the terminal post cover plate covers the terminal post body, the flow channel further includes a communication channel, the communication channel is formed in the terminal post body and is in communication with the accommodating cavity, the electrolyte solution filling hole is formed on the terminal post cover plate and is in communication with the communication channel, and the sealing structure is engaged with the terminal post cover plate to open or seal the electrolyte solution filling hole.

In the foregoing technical solution, because the flow channel includes the communication channel and the electrolyte solution filling hole, an electrolyte solution filling path can be extended to some extent, thereby buffering electrolyte solution filling to some extent. During the electrolyte solution filling or operation of the battery cell, the possibility of splashing or spilling of the electrolyte solution is reduced.

In some embodiments, the terminal post cover plate includes a cover plate portion and a first base seat portion, the cover plate portion covers the terminal post body, the first base seat portion is mounted at the cover plate portion, at least a portion of the electrolyte solution filling hole is formed on the first base seat portion, and the sealing structure is engaged with the first base seat portion.

In the foregoing technical solution, the separately processed first base seat portion is disposed, the first base seat portion is mounted on the cover plate portion through an assembly procedure, and the sealing structure is engaged with the first base seat portion, so that the first base seat portion can be processed into a shape that adapts to the engagement with the sealing structure, and the structural complexity of the cover plate portion can be reduced, thereby facilitating the processing of the cover plate portion.

In some embodiments, a first mounting groove that opens away from the accommodating cavity is provided in the cover plate portion, and at least a portion of the first base seat portion is embedded in the first mounting groove.

In the foregoing technical solution, the assembly efficiency of the cover plate portion and the first base seat portion and the connection stability between the cover plate portion and the first base seat portion are improved. In addition, the occupation of space outside the cover plate portion by the first base seat portion can be reduced.

In some embodiments, the communication channel includes a first accommodating groove and an electrolyte solution passage hole, the first accommodating groove opens toward the terminal post cover plate to communicate with the electrolyte solution filling hole, and the electrolyte solution passage hole penetrates a groove wall of the first accommodating groove and is in communication with the first accommodating groove and the accommodating cavity.

In the foregoing technical solution, because the communication channel includes the first accommodating groove formed in the terminal post body, the first accommodating groove can buffer the electrolyte solution. During the electrolyte solution filling or operation of the battery cell, splashing, spilling, and other problems of the electrolyte solution can be mitigated. In addition, during the filling of the electrolyte solution, because the first accommodating groove can buffer the electrolyte solution, thereby improving the filling efficiency of the electrolyte solution. In addition, a groove side wall of the first accommodating groove can block to some extent the electrolyte solution from splashing, thereby reducing contamination caused to the outside by the electrolyte solution.

In some embodiments, the communication channel further includes a second accommodating groove, the second accommodating groove is located on a side of the first accommodating groove that is close to the accommodating cavity, the second accommodating groove opens toward the accommodating cavity to be in communication with the accommodating cavity, and the electrolyte solution passage hole penetrates a groove wall of the second accommodating groove to be in communication with the first accommodating groove and the second accommodating groove.

In the foregoing technical solution, the second accommodating groove can have the function of buffering the electrolyte solution or gases. During the electrolyte solution filling of the battery cell, the second accommodating groove may be used to buffer the electrolyte solution, thereby mitigating splashing, spilling, and other problems of the electrolyte solution. During the operation of the battery cell, the electrolyte solution generates gases after participating in reactions, so that the second accommodating groove can be used to buffer the electrolyte solution or gases generated in the accommodating cavity, to mitigate the problem of spilling the electrolyte solution or excessively large gas pressure in the accommodating cavity, thereby improving the reliability of the battery cell.

In some embodiments, the battery cell includes a battery cell assembly, the battery cell assembly includes an active substance coating portion received in the accommodating cavity and a conductive portion connected to the active substance coating portion, a communication hole for communicating the first accommodating groove and the accommodating cavity is formed in the terminal post body, one or more communication holes are provided, at least one communication hole is used as the electrolyte solution passage hole, and the conductive portion is passed through the at least one communication hole to be at least partially received in the first accommodating groove.

In the foregoing technical solution, at least a portion of the conductive portion is received in the first accommodating groove to enable at least a portion of the conductive portion to occupy space in the first accommodating groove, so that the occupation of space in the accommodating cavity by the conductive portion can be reduced, and the space in the accommodating cavity is saved to receive the active substance coating portion with a larger size, thereby improving the energy density of the battery cell, or reducing the size of the battery cell while the energy density of the battery cell is kept unchanged.

In some embodiments, the terminal post structure includes a terminal post body, the terminal post body is mounted on the housing, the flow channel further includes an accommodating groove, both the accommodating groove and the electrolyte solution filling hole are formed in the terminal post body, the electrolyte solution filling hole penetrates a groove wall on a side of the accommodating groove that is away from a groove opening of the accommodating groove to communicate with the accommodating groove, and the sealing structure is engaged with the terminal post body to open or seal the electrolyte solution filling hole.

In the foregoing technical solution, the electrolyte solution filling hole is provided in the terminal post body, so that the terminal post cover plate can be omitted, or the electrolyte solution filling hole opened in the terminal post cover plate can be omitted, thereby simplifying the structure or simplifying processing. In addition, because the terminal post body is provided with the accommodating groove in communication with the electrolyte solution filling hole, while electrolyte solution filling requirements are met, the terminal post body has large buffer space, so that the function of buffering the electrolyte solution can be achieved to some extent. During the manufacturing or operation and use of the battery cell, the possibility of splashing or spilling of the electrolyte solution is reduced.

In some embodiments, the terminal post body includes a body portion and a second base seat portion, the body portion is mounted on the housing, the second base seat portion is mounted at the body portion, at least a portion of the electrolyte solution filling hole is formed on the second base seat portion, and the sealing structure is engaged with the second base seat portion.

In the foregoing technical solution, the separately processed second base seat portion is disposed, the second base seat portion is mounted on the body portion through an assembly procedure, and the sealing structure is engaged with the second base seat portion, so that the second base seat portion can be processed into a shape that adapts to the engagement with the sealing structure, and the structural complexity of the body portion can be reduced, thereby facilitating the processing of the body portion.

In some embodiments, the accommodating groove includes a third accommodating groove with a groove opening facing away from the accommodating cavity, and the electrolyte solution filling hole penetrates a groove wall on a side of the third accommodating groove that is close to the accommodating cavity.

In the foregoing technical solution, the third accommodating groove can buffer the electrolyte solution, to mitigate splashing, spilling, and other problems of the electrolyte solution. In addition, a side wall of the third accommodating groove can block to some extent the electrolyte solution from splashing, thereby reducing contamination caused to the outside by the electrolyte solution, and facilitating quick electrolyte solution filling. In addition, an electrolyte solution filling nozzle may be flexibly disposed. For example, the outlet of the electrolyte solution filling nozzle may be made bigger. For example, the outlet of the electrolyte solution filling nozzle is disposed to match the groove opening of the third accommodating groove, thereby further improving electrolyte solution filling efficiency.

In some embodiments, the accommodating groove further includes a fourth accommodating groove with a groove opening facing the accommodating cavity, the fourth accommodating groove is located on the side of the third accommodating groove that is close to the accommodating cavity, and the electrolyte solution filling hole penetrates a groove wall on a side of the fourth accommodating groove that is away from the accommodating cavity to communicate the third accommodating groove with the fourth accommodating groove.

In the foregoing technical solution, the fourth accommodating groove is disposed, so that the height of the electrolyte solution filling hole during electrolyte solution filling can be increased, thereby increasing the total filling amount of the electrolyte solution, and extending the cycle life of the battery cell. In addition, gases generated in the accommodating cavity or the electrolyte solution that tends to spill can enter the fourth accommodating groove, and the fourth accommodating groove can achieve a buffering function, thereby improving the operational reliability of the battery cell.

In some embodiments, the accommodating groove includes a fifth accommodating groove with a groove opening facing the accommodating cavity, and the electrolyte solution filling hole penetrates a groove wall on a side of the fifth accommodating groove that is away from the accommodating cavity.

In the foregoing technical solution, the fifth accommodating groove can buffer the electrolyte solution, and the side wall of the fifth accommodating groove can block the electrolyte solution from splashing, thereby facilitating quick electrolyte solution filling. In addition, the height of the electrolyte solution filling hole can be increased. When the electrolyte solution filling hole is blocked, gases generated in the accommodating cavity or the electrolyte solution can enter the fifth accommodating groove, and the fifth accommodating groove can achieve a buffering function, thereby improving the operational reliability of the battery cell.

In some embodiments, the housing assembly includes a housing and a pressure relief structure, the accommodating cavity is defined by the housing, the pressure relief structure is disposed on the housing, a weak region is provided on the pressure relief structure and/or at a connection between the pressure relief structure and the housing, the flow channel is disposed at the pressure relief structure and includes the electrolyte solution filling hole, and the sealing structure is engaged with the pressure relief structure and is configured to open or seal the electrolyte solution filling hole.

In the foregoing technical solution, the electrolyte solution filling hole is provided in the pressure relief structure, so that the electrolyte solution filling hole can be kept from separately occupying space on the housing. When the terminal post structure is disposed on the housing, large space may be saved for the terminal post structure to be disposed, thereby increasing the size of the terminal post structure. In addition, the housing does not need to be specially processed to open the electrolyte solution filling hole in the housing, thereby reducing the structural complexity and processing difficulty of the housing.

In some embodiments, the pressure relief structure includes a pressure relief body and a third base seat portion, the pressure relief body is disposed on the housing, the third base seat portion is mounted on the pressure relief body, at least a portion of the electrolyte solution filling hole is formed in the third base seat portion, and the sealing structure is engaged with the third base seat portion.

In the foregoing technical solution, the separately processed third base seat portion is disposed, the third base seat portion is mounted on the pressure relief body through an assembly procedure, and the sealing structure is engaged with the third base seat portion, so that the third base seat portion can be processed into a shape that adapts to the engagement with the sealing structure, and the structural complexity of the pressure relief body can be reduced, thereby facilitating the processing of the pressure relief body.

In some embodiments, the housing assembly includes a housing, the accommodating cavity is defined by the housing, a terminal post structure and a pressure relief structure are disposed on the housing, the housing includes a mounting housing wall spaced apart from the terminal post structure and the pressure relief structure, the flow channel is disposed at the mounting housing wall and includes the electrolyte solution filling hole, and the sealing structure is engaged with the mounting housing wall and is configured to open or seal the electrolyte solution filling hole.

In the foregoing technical solution, the electrolyte solution filling hole is provided in the mounting housing wall rather than being provided in the pressure relief structure and the terminal post structure, so that the processing difficulty of the pressure relief structure and the terminal post structure can be reduced, thereby reducing the processing costs of the pressure relief structure and the terminal post structure.

In some embodiments, the mounting housing wall includes a housing wall portion and a fourth base seat portion, the fourth base seat portion is mounted on the housing wall portion, at least a portion of the electrolyte solution filling hole is formed in the fourth base seat portion, and the sealing structure is engaged with the fourth base seat portion.

In the foregoing technical solution, the separately processed fourth base seat portion is disposed, the fourth base seat portion is mounted on the housing wall portion through an assembly procedure, and the sealing structure is engaged with the fourth base seat portion, so that the fourth base seat portion can be processed into a shape that adapts to the engagement with the sealing structure, and the structural complexity of the housing wall portion can be reduced, thereby facilitating the processing of the housing wall portion.

In some embodiments, the housing assembly includes the housing, the accommodating cavity is defined by the housing, the housing includes a first housing wall, a surface on a side of the first housing wall that faces the accommodating cavity is an inner surface, a surface on a side of the first housing wall that is away from the accommodating cavity is an outer surface, the flow channel includes the electrolyte solution filling hole that is directly or indirectly provided in the first housing wall, two ends of the electrolyte solution filling hole are respectively a hole outer end and a hole inner end, the hole outer end and the hole inner end are disposed in sequence in a direction from the outer surface to the inner surface of the first housing wall, and the hole inner end is located on a side of the inner surface of the first housing wall that is away from the accommodating cavity.

In the foregoing technical solution, the height of the electrolyte solution filling hole can be increased. Additional accommodating space is formed on an inner side of the electrolyte solution filling hole, so that a buffering function can be achieved. In this way, in the process of manufacturing, handling or using the battery cell, if the electrolyte solution tends to spill, the electrolyte solution that is about to spill can enter the accommodating space, thereby reducing the probability of the electrolyte solution spilling from the electrolyte solution filling hole, and mitigating the problem of the spilled electrolyte solution from contaminating parts on the first housing wall and the first housing wall, so that the electrolyte solution filling speed is increased during manufacturing to enhance the manufacturability of the battery cell, and the reliability of the battery cell is improved. In addition, because the height of the electrolyte solution filling hole is increased, when the height of the filled electrolyte solution reaches the hole inner end of the electrolyte solution filling hole, the filling height of the electrolyte solution is greater than the inner surface of the first housing wall, thereby increasing the total filling amount of the electrolyte solution in the housing, and extending the cycle life of the battery cell. It may be understood that, in the process of using the battery cell, the consumption of the electrolyte solution leads to a reduction of the electrolyte solution inside the battery cell, affecting the service life of the battery cell. The service life of the battery cell is increased by increasing the total filling amount of the electrolyte solution. In addition, in the process of using the battery cell, the electrolyte solution generates gases after participating in reactions, leading to an increase in the pressure in the housing. When the pressure reaches a particular level, reliability issues arise. When gases are formed in the housing, additional accommodating space formed on the inner side of the electrolyte solution filling hole can buffer gases to mitigate the reliability issues caused by the increase in pressure, thereby improving the operational reliability of the battery cell.

In some embodiments, the mounting portion is disposed on the first housing wall, at least a portion of the mounting portion protrudes from a side of the outer surface of the first housing wall that is away from the accommodating cavity, and the electrolyte solution filling hole is provided in the mounting portion.

In the foregoing technical solution, the electrolyte solution filling hole is provided in the mounting portion, so that it can be easy to obtain that the hole inner end of the electrolyte solution filling hole is located on a side of the inner surface of the first housing wall that is away from the accommodating cavity.

In some embodiments, the hole inner end is located on the side of the outer surface of the first housing wall that is away from the accommodating cavity.

In the foregoing technical solution, the height of the hole inner end of the electrolyte solution filling hole can be further enhanced, and more accommodating space is provided below the electrolyte solution filling hole.

In some embodiments, the housing assembly includes the housing, the accommodating cavity is defined by the housing, the housing includes the first housing wall, the flow channel is disposed at the first housing wall, the first housing wall is an integrally formed cover plate, or the first housing wall is integrally formed with at least one second housing wall, and the second housing wall extends toward a side in a thickness direction of the first housing wall.

In the foregoing technical solution, the position of the flow channel can be flexibly designed, thereby expanding the application scope of the battery cell.

According to a second aspect, embodiments of this application further provide a battery, including a bus component and the battery cell in any foregoing solution. A plurality of battery cells are provided, and at least two battery cells are electrically connected by the bus component.

In the foregoing technical solution, both the operational reliability and the service life of the battery cell according to the embodiments of this application are enhanced, thereby improving the operational reliability and the service life of the battery.

According to a third aspect, embodiments of this application further provide a power consuming apparatus, including the battery in any foregoing solution.

In the foregoing technical solution, the performance of the battery is enhanced, thereby enhancing the operational electrical performance of the power consuming apparatus.

### BRIEF DESCRIPTION OF THE DRAWINGS

To describe the technical solutions in the embodiments of this application more clearly, the following briefly introduces the accompanying drawings required for the embodiments. It should be understood that the following accompanying drawings show merely some embodiments of this application and therefore should not be considered as a limitation to the scope. Persons of ordinary skill in the art may still derive other related drawings from these accompanying drawings without creative efforts.
FIG. 1 is a schematic diagram of a structure of a vehicle according to some embodiments of this application;
FIG. 2 is a schematic exploded view of a battery according to some embodiments of this application;
FIG. 3 is a schematic diagram of a structure of a battery cell according to some embodiments of this application;
FIG. 4 is a schematic diagram of an orthographic projection of a battery cell according to some embodiments of this application;
FIG. 5 is a cross-sectional view along a line K-K in FIG. 4;
FIG. 6 is a partial enlarged view at a position H in FIG. 5;
FIG. 7 is a partial schematic diagram of a battery cell according to some embodiments of this application;
FIG. 8 is a partial schematic diagram of an orthographic projection of the battery cell shown in FIG. 7;
FIG. 9 is a cross-sectional view along a line G-G in FIG. 8;
FIG. 10 is a partial schematic diagram of a partial structure in FIG. 7;
FIG. 11 is a front view of a first structural member according to some embodiments of this application;
FIG. 12 is a three-dimensional diagram of the first structural member in FIG. 11;
FIG. 13 is a schematic diagram of an engagement between the first structural member in FIG. 12 and a base seat;
FIG. 14 is a cross-sectional view along a line S-S in FIG. 13;
FIG. 15 is a front view of a first structural member according to some embodiments of this application;
FIG. 16 is a three-dimensional diagram of the first structural member in FIG. 15;
FIG. 17 is a partial cross-sectional view of a battery cell according to some embodiments of this application;
FIG. 18 is a partial cross-sectional view of a battery cell according to some embodiments of this application;
FIG. 19 is a partial cross-sectional view of a battery cell according to some embodiments of this application;
FIG. 20 is a partial enlarged view of a position F1 circled in FIG. 19;
FIG. 21 is a partial cross-sectional view of a battery cell according to some embodiments of this application;
FIG. 22 is a schematic diagram of an engagement between a terminal post body and a conductive portion according to some embodiments of this application;
FIG. 23 is a schematic diagram of an engagement between a terminal post body and a conductive portion according to some embodiments of this application;
FIG. 24 is a schematic diagram of an orthographic projection of a battery cell according to some embodiments of this application;
FIG. 25 is a partial cross-sectional view of a battery cell according to some embodiments of this application;
FIG. 26 is a partial cross-sectional view of a battery cell according to some embodiments of this application;
FIG. 27 is a partial cross-sectional view of a battery cell according to some embodiments of this application;
FIG. 28 is a partial cross-sectional view of a battery cell according to some embodiments of this application;
FIG. 29 is a partial cross-sectional view of a battery cell according to some embodiments of this application;
FIG. 30 is a partial cross-sectional view of a battery cell according to some embodiments of this application;
FIG. 31 is a schematic diagram of a structure of a battery cell according to some embodiments of this application;
FIG. 32 is a partial enlarged view in FIG. 31;
FIG. 33 is a three-dimensional diagram of a battery cell according to some embodiments of this application;
FIG. 34 is a three-dimensional diagram of the battery cell shown in FIG. 33 from another perspective;
FIG. 35 is a partial enlarged view of a position J circled in FIG. 33;
FIG. 36 is a partial cross-sectional view of a battery cell according to some embodiments of this application; and
FIG. 37 is a schematic diagram of an engagement between a battery cell and a bus component according to some embodiments of this application.

Reference numerals: vehicle 1000; first direction X; second direction Y; third direction Z; battery 100; controller 200; motor 300; box body 101; first box body 1011; second box body 1012; battery cell 102; terminal post structure 1020; housing assembly 1021; flow channel 1021A; first channel section A1; second channel section A2; stopper portion 10211; avoidance hole 10212; receiving groove 10213; support portion 10214; first positioning structure 10215; stepped surface 10216; mounting portion 8; base portion 81; mounting groove 811; base seat 82; housing 1; accommodating cavity 1A; first housing wall 11; second housing wall 12; outer surface 11a of the first housing wall; inner surface 11b of the first housing wall; mounting housing wall 14; housing wall portion 141; fourth base seat portion 142; terminal post body 2; communication channel 2A; accommodating groove 21; first accommodating groove 211; second accommodating groove 212; third accommodating groove 213; fourth accommodating groove 214; fifth accommodating groove 215; communication hole 22; first communication hole 221; second communication hole 222; electrolyte solution passage hole 23; sink groove 25; mating clearance 26; outer stop portion 271; inner stop portion 272; body portion 28; second base seat portion 29; sealing structure 1022; terminal post cover plate 3; electrolyte solution filling hole 31; hole outer end 31a; hole inner end 31b; edge portion 32; first cover plate portion 331; second cover plate portion 332; boundary portion 34; cover plate portion 36; first mounting groove 361; first base seat portion 37; first structural member 61; first mating portion 611; tool mating hole 612; positioning structure 613; central portion 614; locking portion 615; second positioning structure 6151; second structural member 62; second mating portion 621; lapping portion 622; sealing pad 1023; insulating pad 1024; pressure relief structure 1025; pressure relief body 10251; third base seat portion 10252; battery cell assembly 7; active substance coating portion 71; conductive portion 72; first connection portion 73; bus component 103; and second connection portion 104.

### DETAILED DESCRIPTION

To make the objectives, technical solutions, and advantages of embodiments of this application clearer, the following clearly describes the technical solutions in embodiments of this application with reference to the accompanying drawings in embodiments of this application. It is clear that the described embodiments are merely some rather than all of embodiments of this application. All other embodiments obtained by persons of ordinary skill in the art based on the embodiments of this application without creative efforts fall within the protection scope of this application.

Unless otherwise defined, all technical and scientific terms used in this application have same meanings as commonly understood by persons skilled in the technical field of this application. The terms used in the filed specification in this application are merely for an objective of describing specific embodiments, and are not intended to limit this application. The terms "comprise", "include" and any variations thereof in the specification and claims of this application and in the above descriptions of the accompanying drawings are intended to cover non-exclusive inclusion. The terms such as "first" and "second" in the specification and claims of this application or the foregoing accompanying drawings are only used to distinguish between different objects, but are not used to describe a specific order or a primary and secondary relationship.

Reference to "an embodiment" in this application means that a particular feature, structure or characteristic described in combination with the embodiment may be included in at least one embodiment of this application. The phrase shown in various locations in the specification may not necessarily refer to a same embodiment, and is not an independent or alternative embodiment exclusive from another embodiment.

In the description of this application, it needs to be noted that unless otherwise expressly specified and defined, "mounted", "connected", "connection", and "attached" should be understood in a broad sense, for example, fixedly connected, detachably connected, or integrally connected; or connected directly or through an intermediate, or two elements communicated internally. Persons of ordinary skill in the art may understand specific meanings of the foregoing terms in this application according to specific cases.

The term "and/or" in this application describes only an association relationship for describing associated objects and represents that three relationships may exist. For example, A and/or B may represent the following three cases: Only A exists, both A and B exist, and only B exists. In addition, a character "I" in this application generally indicates an "or" relationship between contextually associated objects.

In the embodiments of this application, identical reference numerals designate identical components. For conciseness, detailed descriptions of identical components are omitted across different embodiments. It is to be understood that the dimensions including thicknesses, lengths, and widths of components illustrated in the embodiments of this application as well as dimensions such as the overall thickness, length, and width of the integrated device shown in the accompanying drawings are provided for exemplary purposes only and shall not be construed as limiting the scope of this application.

The term "a plurality of" as used in this application refers to two or more (inclusive of two).

The battery cell in this application may include a lithium-ion secondary battery, a lithium-ion primary battery, a lithium-sulfur battery, a sodium-lithium-ion battery, a sodium-ion battery, a magnesium-ion battery, or the like, which is not limited in the embodiments of this application. The battery cell may be cylindrical, flat-shaped, cuboid-shaped, or of another shape, which is also not limited in the embodiments of this application. Generally, battery cells are classified into three types based on encapsulating methods: columnar battery cells, prismatic battery cells, and pouch battery cells, which are also not limited in the embodiments of this application.

A battery mentioned in embodiments of this application is a single physical module including one or more battery cells to provide a higher voltage and a higher capacity. For example, the battery provided in this application may include a battery module, a battery pack, or the like. The battery module generally includes a plurality of battery cells. The battery pack generally includes a box body for packaging one or more battery cells or one or more battery modules. The box body can prevent electrolyte solution or other foreign objects from affecting the charging or discharging of the battery cells.

The battery cell includes a housing, a battery cell assembly, and an electrolyte solution. The housing is used for accommodating the battery cell assembly and the electrolyte solution. The battery cell assembly includes at least one electrode assembly. The electrode assembly is formed by a positive electrode plate, a negative electrode plate, and a separator. The electrode assembly may be a wound structure, a stacked structure, or the like. The battery cells work mainly relying on the movement of metal ions between the positive electrode plate and the negative electrode plate.

The positive electrode plate may generally include a positive electrode current collector and a positive electrode active substance layer, the positive electrode active substance layer is directly or indirectly coated to the positive electrode current collector, the positive electrode current collector not coated with the positive electrode active substance layer protrudes out of the positive electrode current collector already coated with the positive electrode active substance layer, and the positive electrode current collector not coated with the positive electrode active substance layer is used as a positive electrode tab. By using the lithium-ion battery as an example, a material of the positive electrode current collector may be aluminum, and a material of the positive electrode active substance layer may be lithium cobalt oxide, lithium iron phosphate, ternary lithium, lithium manganese oxide, or the like.

The negative electrode plate may generally include a negative electrode current collector and a negative electrode active substance layer, the negative electrode active substance layer is directly or indirectly coated to the negative electrode current collector, the negative electrode current collector not coated with the negative electrode active substance layer protrudes from the negative electrode collector already coated with the negative electrode active substance layer, and the negative electrode current collector not coated with the negative electrode active substance layer is used as a negative electrode tab. A material of the negative electrode current collector may be copper, and a material of the negative electrode active substance layer may be carbon, silicon, or the like.

To ensure that no fusing occurs when a large current passes through, a plurality of positive electrode tabs are provided and are laminated to form a tab portion of a positive electrode, and a plurality of negative electrode tabs are provided and are laminated to form a tab portion of a negative electrode. Terminal posts are disposed on the housing, the tab portion of the positive electrode is connected to the terminal post of the positive electrode, and the tab portion of the negative electrode is connected to the terminal post of the negative electrode. For example, the tab portion may be welded to the terminal post, to form a direct electrical connection between the tab portion and the terminal post. For another example, the battery cell assembly may include an adapter tab, the tab portion is welded to the adapter tab, and the adapter tab is welded to the terminal post, to form an indirect electrical connection between the tab portion and the terminal post.

The material of the separator is not limited, and may be, for example, polypropylene, polyethylene, or the like.

In a battery cell in existing technologies, an electrolyte solution generates gases after participating in reactions, leading to an increase in the pressure in a housing. When the pressure reaches a particular level, reliability issues arise. In addition, in the process of using the battery cell, the consumption of the electrolyte solution leads to a reduction of the electrolyte solution inside the housing, affecting the service life of the battery cell.

For this, embodiments of this application provide a battery cell, including a housing assembly and a sealing structure. The housing assembly defines an accommodating cavity and is provided with a flow channel in communication with the accommodating cavity. The sealing structure is engaged with the housing assembly and is configured to open or seal the flow channel.

In this way, in the production phase of the battery cell, the sealing structure enables the flow channel to be in an open state. In this case, an electrolyte solution may be filled into the accommodating cavity through the flow channel. After the electrolyte solution is filled, the sealing structure closes and seals the flow channel to keep the electrolyte solution from spilling, so that the battery cell can be normally used. In the process of using the battery cell, the consumption of the electrolyte solution leads to a reduction of the electrolyte solution in the housing assembly, affecting the service life of the battery cell. Therefore, the flow channel may be regularly opened through the sealing structure to add the electrolyte solution to the accommodating cavity through the flow channel, thereby improving the service life of the battery cell. In the process of using the battery cell, the electrolyte solution generates gases after participating in reactions, leading to an increase in the pressure in the housing assembly. When the pressure reaches a particular level, reliability issues arise. Therefore, in the process of using the battery cell, the flow channel may be regularly opened through the sealing structure to regularly relieve the pressure in the accommodating cavity through the flow channel, thereby improving the operational reliability of the battery cell.

In short, for the battery cell according to the embodiments of this application, the sealing structure that can open and close the flow channel is disposed. During normal use of the battery cell, the flow channel is closed and sealed through the sealing structure to meet the sealed use requirements of the battery cell. During manufacturing or maintenance of the battery cell, the flow channel is opened through the sealing structure, and an electrolyte solution is filled or added through the flow channel, and high pressure or the like in the battery cell is regularly relieved, thereby enhancing the service life and the operational reliability of the battery cell while meeting the manufacturing requirements of the battery cell.

Embodiments of this application provide a power consuming apparatus that uses a battery as a power supply. The power consuming apparatus may be, but is not limited to, a mobile phone, a tablet computer, a laptop computer, an electric toy, an electric tool, an electric scooter, an electric vehicle, a ship, spacecraft, or the like. The electric toy may be a stationary or mobile electric toy, for example, a game console, an electric vehicle toy, an electric ship toy, or an electric aircraft toy. The spacecraft may include an airplane, a rocket, a space shuttle, a spaceship, and the like.

For ease of description in the following embodiments, an example in which a power consuming apparatus in an embodiment of this application is a vehicle 1000 is used for description.

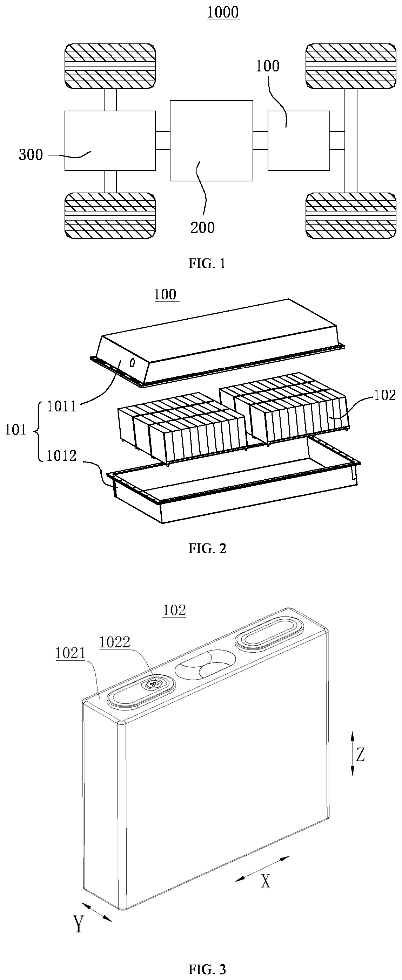

FIG. 1 is a schematic diagram of a structure of a vehicle 1000 according to some embodiments of this application. The vehicle 1000 may be a fuel powered vehicle, a gas powered vehicle, or a new energy vehicle. The new energy vehicle may be a pure electric vehicle, a hybrid electric vehicle, or an extended range vehicle, etc. The inner part of the vehicle 1000 is provided with a battery 100. The battery 100 may be disposed at the bottom, head, or tail of the vehicle 1000. The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to meet working power requirements during starting, navigation, and traveling of the vehicle 1000.

In some embodiments of this application, the battery 100 not only can serve as a power supply for operating the vehicle 1000, but also can serve as a power supply for driving the vehicle 1000, in place of or partially in place of fuel or natural gas, to provide driving power for the vehicle 1000.

FIG. 2 is a schematic exploded view of a battery 100 according to some embodiments of this application. The battery 100 includes a box body 101 and a plurality of battery cells 102, where the battery cells 102 are accommodated in the box body 101. The box body 101 is configured to provide an assembly space for the battery cells 102. The box body 101 may use a variety of structures. In some embodiments, the box body 101 may include a first box body 1011 and a second box body 1012, the first box body 1011 and the second box body 1012 cover each other, and the first box body 1011 and the second box body 1012 jointly define the assembly space for accommodating the battery cells 102. The second box body 1012 may be a hollow structure that is open at one end, the first box body 1011 may be a plate-like structure, and the first box body 1011 covers an open side of the second box body 1012, so that the first box body 1011 and the second box body 1012 jointly define the assembly space. Alternatively, the first box body 1011 and the second box body 1012 each may be a hollow structure that is open on one side, and an open side of the first box body 1011 covers an open side of the second box body 1012. Certainly, the box body 101 formed by the first box body 1011 and the second box body 1012 may be in various shapes, such as a cylinder, and a cuboid.

In the battery 100, the plurality of battery cells 102 can be connected in series, parallel, or series-parallel. Series-parallel connection means that both series connection and parallel connection exist among the plurality of battery cells 102. The plurality of battery cells 102 may be directly connected in series, parallel, or series-parallel together, and then the whole formed by the plurality of battery cells 102 may be accommodated in the box body 101. Certainly, the battery 100 may alternatively be in the form of a battery module formed by the plurality of battery cells 102 that are first connected in series, parallel, or series-parallel. A plurality of battery modules are then connected in series, parallel, or series-parallel to form a whole and accommodated in the box body 101. The battery 100 may further include other structures, for example, the battery 100 may further include a bus component for achieving the electrical connection between the plurality of battery cells 102.

Each battery cell 102 may be a secondary battery or a primary battery; or may be a lithium-sulfur battery, a sodium-ion battery, or a magnesium-ion battery, but is not limited thereto. The battery cell 102 may be cylindrical, flat, or cuboid. For example, referring to the embodiment shown in FIG. 3, a length direction of the battery cell 102 is a first direction X, a width direction of the battery cell 102 is a second direction Y, a height direction of the battery cell 102 is a third direction Z, and the first direction X, the second direction Y, and the third direction Z are pairwise mutually perpendicular.

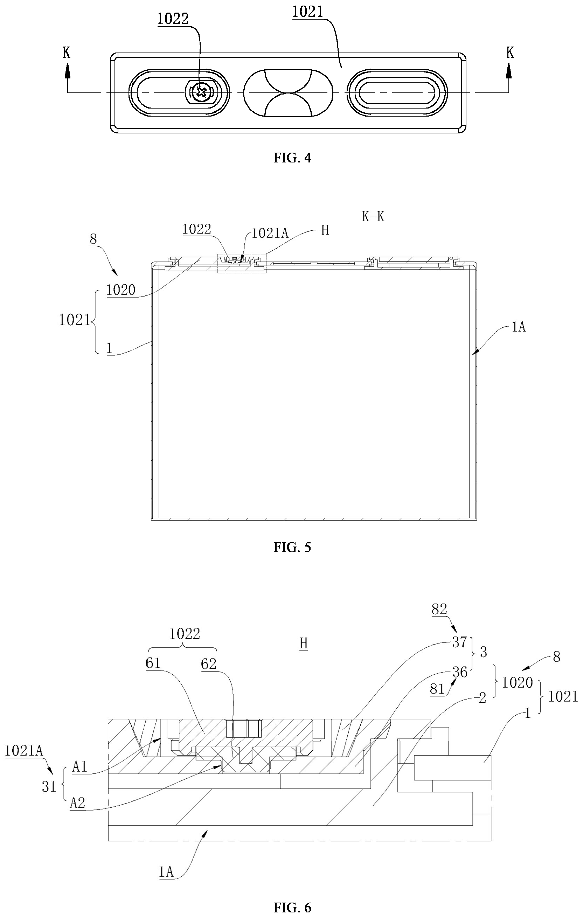

According to some embodiments of this application, with reference to FIG. 4 to FIG. 6, the battery cell 102 includes a housing assembly 1021 and a sealing structure 1022. The housing assembly 1021 defines an accommodating cavity 1A. The housing assembly 1021 is provided with a flow channel 1021A in communication with the accommodating cavity 1A. The sealing structure 1022 is engaged with the housing assembly 1021. The sealing structure 1022 is configured to open or seal the flow channel 1021A. That is, the engagement between the sealing structure 1022 and the housing 1 provides the sealing structure 1022 with the function of opening the flow channel 1021A and also with the function of closing the flow channel 1021A.

In the production phase of the battery cell 102, the sealing structure 1022 enables the flow channel 1021A to be in an open state. In this case, an electrolyte solution may be filled into the accommodating cavity 1A through the flow channel 1021A. After the electrolyte solution is filled, the sealing structure 1022 closes and seals the flow channel 1021A to keep the electrolyte solution from spilling, so that the battery cell 102 can be normally used. In the process of using the battery cell 102, the consumption of the electrolyte solution leads to a reduction of the electrolyte solution in the housing assembly 1021, affecting the service life of the battery cell 102. Therefore, the flow channel 1021A may be regularly opened through the sealing structure 1022 to add the electrolyte solution to the accommodating cavity 1A through the flow channel 1021A, thereby improving the service life of the battery cell 102. In the process of using the battery cell 102, the electrolyte solution generates gases after participating in reactions, leading to an increase in the pressure in the housing assembly 1021. When the pressure reaches a particular level, reliability issues arise. Therefore, in the process of using the battery cell 102, the flow channel 1021A may be regularly opened through the sealing structure 1022 to regularly relieve the pressure in the accommodating cavity 1A through the flow channel 1021A, thereby improving the operational reliability of the battery cell 102.

In short, for the battery cell 102 according to the embodiments of this application, the sealing structure 1022 that can open and close the flow channel 1021A is disposed. During normal use of the battery cell 102, the flow channel 1021A is closed and sealed through the sealing structure 1022 to meet the sealed use requirements of the battery cell 102. During manufacturing or maintenance of the battery cell 102, the flow channel 1021A is opened through the sealing structure 1022, and an electrolyte solution is filled or added through the flow channel 1021A, and high pressure or the like in the battery cell 102 is regularly relieved, thereby enhancing the service life and the operational reliability of the battery cell 102 while meeting the manufacturing requirements of the battery cell 102.

It should be noted that, to open or seal the flow channel 1021A through the sealing structure 1022, an engagement manner between the sealing structure 1022 and the housing assembly 1021 may be disposed in various forms.

For example, in some embodiments, the sealing structure 1022 may be disposed in a detachable engagement with the housing assembly 1021. When the sealing structure 1022 and the housing assembly 1021 are assembled in position, the sealing structure 1022 may seal the flow channel 1021A. When the sealing structure 1022 is detached from the housing assembly 1021, the flow channel 1021A may be opened.

Alternatively, in some other embodiments, the sealing structure 1022 and the housing assembly 1021 remain in a connected state, and the sealing structure 1022 is movable with respect to the housing assembly 1021 between an opening position and closing position. When the sealing structure 1022 moves to the opening position, the flow channel 1021A may be opened. When the sealing structure 1022 moves to the closed position, the sealing structure 1022 may close the flow channel 1021A. For example, the sealing structure 1022 may move between the two positions through rotation or translation.

Further alternatively, in some other embodiments, the sealing structure 1022 and the housing assembly 1021 remain in a connected state, and the sealing structure 1022 is switchable with respect to the housing assembly 1021 between a first configuration and a second configuration. When the sealing structure 1022 is switched to the first configuration, the flow channel 1021A may be opened. When the sealing structure 1022 is switched to the second configuration, the sealing structure 1022 may close the flow channel 1021A.

When the sealing structure 1022 is detachably engaged with the housing assembly 1021, in the production phase of the battery cell 102, before the sealing structure 1022 is mounted, the flow channel 1021A is in an open state. In this case, an electrolyte solution may be filled into the accommodating cavity 1A through the flow channel 1021A. After the electrolyte solution is filled, the sealing structure 1022 is mounted to the housing assembly 1021 and closes and seals the flow channel 1021A to keep the electrolyte solution from spilling, so that the battery cell 102 can be normally used. In the process of using the battery cell 102, the sealing structure 1022 may be regularly detached from the housing assembly 1021, and the flow channel 1021A is opened to add the electrolyte solution to the accommodating cavity 1A through the flow channel 1021A, thereby improving the service life of the battery cell 102, or high pressure in the accommodating cavity 1A is regularly relieved through the flow channel 1021A, thereby improving the operational reliability of the battery cell 102.

In this way, the sealing structure 1022 is disposed in a detachable form with respect to the housing assembly 1021. Compared with a solution in which the sealing structure 1022 is movable with respect to the housing assembly 1021 to open and close the flow channel 1021A, the connection manner between the sealing structure 1022 and the housing assembly 1021 is simplified, the design and processing of the housing assembly 1021 are simplified, and the sealing reliability of the sealing structure 1022 for the housing assembly 1021 is improved. In addition, compared with a solution in which the sealing structure 1022 switches between different configurations to open and close the flow channel 1021A, the structural complexity of the sealing structure 1022 is reduced, thereby reducing the processing difficulty and processing costs of the sealing structure 1022.

It should be noted that, the arrangement position, structural shape, and the like of the sealing structure 1022 may all be flexibly designed. Some optional embodiments are described below.

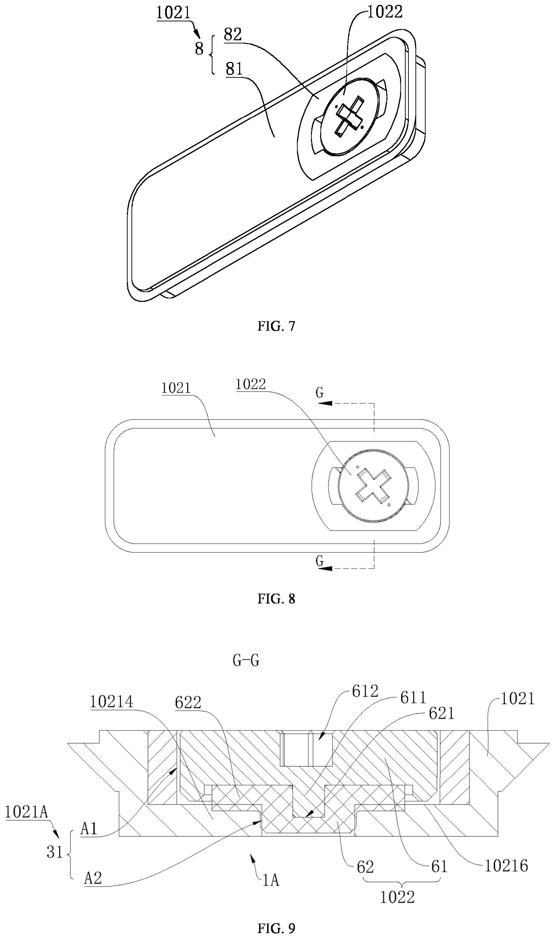

In some embodiments of this application, with reference to FIG. 8 and FIG. 9, the sealing structure 1022 includes a first structural member 61 and a second structural member 62, the first structural member 61 and the second structural member 62 are two separate parts, the second structural member 62 is sealingly engaged with the flow channel 1021A, and the first structural member 61 is engaged with the housing assembly 1021 in a locking manner and is located on a side of the second structural member 62 that is away from the accommodating cavity 1A to restrict the second structural member 62 to a position of sealing the flow channel 1021A.

The sealing structure 1022 at least seals the flow channel 1021A through the second structural member 62. For example, only the second structural member 62 seals the flow channel 1021A, and the first structural member 61 does not seal the flow channel 1021A. For another example, both the second structural member 62 and the first structural member 61 seal the flow channel 1021A.

The locking engagement between the first structural member 61 and the housing assembly 1021 is unlockable. When the first structural member 61 forms a locking engagement with the housing assembly 1021, the first structural member 61 stops the second structural member 62, to restrict the second structural member 62 to the position of sealing the flow channel 1021A. After the first structural member 61 is unlocked from the housing assembly 1021, the first structural member 61 may be detached from the housing assembly 1021 to release the restriction on the second structural member 62, so that the second structural member 62 can be removed (or both the first structural member 61 and the second structural member 62 are removed) to open the flow channel 1021A, thereby maintaining the flow channel 1021A, filling electrolyte solution through the flow channel 1021A, relieving pressure through the flow channel 1021A, and the like.

It should be noted that, "the first structural member 61 restricts the second structural member 62 to the position of sealing the flow channel 1021A" should be understood in a broad sense. For example, when the first structural member 61 forms a locking engagement with the housing assembly 1021, the second structural member 62 and the first structural member 61 may have a connection relationship of direct or indirect contact, to make the second structural member 62 fully unmovable under the limiting action of the first structural member 61, and the second structural member 62 remains in a state of sealing the flow channel 1021A. For another example, when the first structural member 61 forms a locking engagement with the housing assembly 1021, the second structural member 62 and the first structural member 61 are spaced apart and do not have a connection relationship of direct or indirect contact. The second structural member 62 is movable with respect to the first structural member 61 by a particular distance. However, within the range of the distance, the second structural member 62 remains in the state of sealing the flow channel 1021A. Therefore, the position of sealing the flow channel 1021A by the second structural member 62 is not limited to a point position, and may be a position in a range. As long as the second structural member 62 is in the state of sealing the flow channel 1021A, the position of the second structural member 62 is the position of sealing the flow channel 1021A.

In this way, the second structural member 62 is disposed in the sealing structure 1022 to seal the flow channel 1021A, and the first structural member 61 is disposed to limit the second structural member 62, so that the second structural member 62 is prevented from being disengaged away from the accommodating cavity 1A, and the second structural member 62 maintains a state of sealing the flow channel 1021A, thereby enhancing the sealing effect of the second structural member 62 for the flow channel 1021A. In addition, because the sealing structure 1022 is formed by the first structural member 61 and the second structural member 62, locking convenience and reliability may be mainly considered during the design of the first structural member 61, and sealing does not need to be considered or minimal consideration for sealing is required, so that the locking reliability and locking convenience of the first structural member 61 can be enhanced. The sealing performance of the flow channel 1021A may be mainly considered during the design of the second structural member 62, and locking does not need to be considered or minimal consideration for locking is required, so that the sealing reliability of the second structural member 62 for the flow channel 1021A can be enhanced.

In this way, for the sealing structure 1022 in the embodiments of this application, a combination of two structural members is used, and different functions are assigned to the two structural members, thereby effectively achieving a balance between the locking effect and the sealing effect. Because fewer factors are considered during the design of both the first structural member 61 and the second structural member 62, the first structural member 61 and the second structural member 62 may be designed relatively simple, thereby facilitating the processing of the first structural member 61 and the second structural member 62. In short, in the embodiments of this application, it is not necessary to design an excessively complex structural member that is difficult to process to achieve a balance between sealing and locking, it is also not necessary to slightly sacrifice the locking performance for the sealing performance of the structural member, and it is also not necessary to slightly sacrifice the sealing performance for the locking performance of the structural member.

In some embodiments of this application, as shown in FIG. 9, the first structural member 61 is connected to the second structural member 62. In this way, during mounting, the first structural member 61 and the second structural member 62 may be first assembled and connected to form an assembly, and then the assembly formed by the first structural member 61 and the second structural member 62 is mounted together to the flow channel 1021A of the housing assembly 1021, thereby enhancing the assembly efficiency of the sealing structure 1022 to the housing assembly 1021. In addition, because the first structural member 61 and the second structural member 62 have a connection relationship, the first structural member 61 reliably limits the second structural member 62, so that the first structural member 61 may enable the second structural member 62 to be more stably in a position of sealing the flow channel 1021A.

It should be noted that, a connection manner between the first structural member 61 and the second structural member 62 is not limited, and may be, for example, a detachable connection (for example, a threaded connection, plug-in, clamping, or an interference connection), or may be a nondetachable connection (for example, bonding or welding), and in addition, may be a direct connection, or may be an indirect connection (for example, an intermediate member is disposed to be connected to the two, or a fastening member is disposed to fix the two together), which may be specifically designed according to actual requirements.

In some embodiments, the first structural member 61 is connected to the second structural member 62 detachably. In this way, when one of the first structural member 61 and the second structural member 62 can be detached and replaced when being damaged, thereby reducing the maintenance costs of the sealing structure 1022.

In some embodiments, the connection between the first structural member 61 and the second structural member 62 enables the first structural member 61 and the second structural member 62 to remain in a connected state when the sealing structure 1022 is detached with respect to the housing assembly 1021. That is, the connection between the first structural member 61 and the second structural member 62 is disposed as that the connection between the first structural member 61 and the second structural member 62 enables the second structural member 62 to be detached from the housing assembly 1021 together with the first structural member 61 when the first structural member 61 is detached from the housing assembly 1021. In this way, when the first structural member 61 is detached with respect to the housing assembly 1021, the second structural member 62 and the first structural member 61 remain in a connected state, so that the second structural member 62 leaves the housing assembly 1021 together with the first structural member 61, and the detachment efficiency of the sealing structure 1022 with respect to the housing assembly 1021 can be improved, thereby facilitating maintenance operations.

It should be noted that, regardless of whether the first structural member 61 and the second structural member 62 have a detachable connection or a nondetachable connection, "the connection between the first structural member 61 and the second structural member 62 enables the first structural member 61 and the second structural member 62 to remain in a connected state when the sealing structure 1022 is detached with respect to the housing assembly 1021" can be achieved.

However, this application is not limited thereto. In other embodiments of this application, the connection between the first structural member 61 and the second structural member 62 may be disposed as that the first structural member 61 and the second structural member 62 are respectively sequentially detached from the housing assembly 1021. That is, during mounting, the first structural member 61 and the second structural member 62 may be mounted in the housing assembly 1021 together. However, when the first structural member 61 is pulled out, the second structural member 62 is separate from the first structural member 61. The first structural member 61 needs to be detached from the housing assembly 1021 first, and then the second structural member 62 is detached from the housing assembly 1021.

In some embodiments of this application, as shown in FIG. 9, a first mating portion 611 is provided on a side of the first structural member 61 that faces the second structural member 62, a second mating portion 621 is provided on a side of the second structural member 62 that faces the first structural member 61, one of the first mating portion 611 and the second mating portion 621 is a convex structure and the other is a concave structure, and the convex structure is engaged with the concave structure. In this way, the first structural member 61 and the second structural member 62 can be quickly assembled in a concave-convex plug-in manner, and the design and processing of the two are facilitated, thereby reducing the processing costs of the two.

When the first structural member 61 is engaged with the second structural member 62 through the convex structure and the concave structure, "the first structural member 61 and the second structural member 62 remain in a connected state when the sealing structure 1022 is detached with respect to the housing assembly 1021" may be achieved in various manners. For example, in some examples, the convex structure is in an interference fit with the concave structure, and the tightness of the interference fit is greater than the tightness of the interference fit between the second structural member 62 and the flow channel 1021A. For example, in some other examples, the convex structure is in a threaded engagement with the concave structure (for example, the convex structure is a threaded post, and the concave structure is a threaded hole). For example, in some other examples, the convex structure is in a limiting engagement with the concave structure via a limiting structure (for example, a barb structure or a shaft shoulder structure) to prevent the convex structure from being disengaged from the concave structure. In this way, during mounting, the first structural member 61 and the second structural member 62 may be mounted in the housing assembly 1021 together, and during detachment, the second structural member 62 leaves the housing assembly 1021 together with the first structural member 61, thereby improving the overall assembly efficiency and detachment efficiency of the sealing structure 1022.

In addition, when the first structural member 61 is connected to the second structural member 62 by a fastening member (for example, a screw, or a rivet), or when the first structural member 61 is fixedly connected to the second structural member 62 through bonding, welding, or the like, "the first structural member 61 and the second structural member 62 remain in a connected state when the sealing structure 1022 is detached with respect to the housing assembly 1021" can also be achieved.

When the first structural member 61 is engaged with the second structural member 62 through the convex structure and the convex structure, "the connection between the first structural member 61 and the second structural member 62 is disposed as that the first structural member 61 and the second structural member 62 are respectively sequentially detached from the housing assembly 1021" can also be achieved. For example, the convex structure is in an interference fit with the concave structure, and the tightness of the interference fit is less than the tightness of the interference fit between the second structural member 62 and the flow channel 1021A. During mounting, the first structural member 61 and the second structural member 62 may be mounted in the housing assembly 1021 together. However, when the first structural member 61 is pulled out, the second structural member 62 is separate from the first structural member 61. The first structural member 61 needs to be detached from the housing assembly 1021 first, and then the second structural member 62 is detached from the housing assembly 1021.

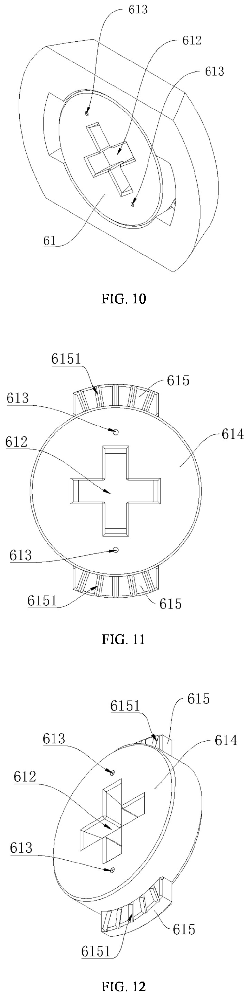

In some embodiments, for example, as shown in FIG. 9 and FIG. 10, at least a portion of the first structural member 61 is inserted into the housing assembly 1021. That is, the first structural member 61 may only be locally inserted into the housing assembly 1021, or the first structural member 61 may be fully inserted into the housing assembly 1021. In this way, at least a portion of the first structural member 61 is inserted into the housing assembly 1021, so that the engagement compactness of the sealing structure 1022 and the housing assembly 1021 is improved, thereby reducing the occupation of space outside the housing assembly 1021 by the first structural member 61. When the first structural member 61 is fully inserted into the housing assembly 1021 and the first structural member 61 does not protrude from the surface of the housing assembly 1021, in this case, the probability of damage or unintended unlocking of the first structural member 61 can be reduced, thereby improving the sealing reliability for the flow channel 1021A.

In some embodiments of this application, the first structural member 61 is configured to lock and unlock with the housing assembly 1021 via rotational motion. In this way, the locking and unlocking manners of the first structural member 61 are simple, thereby facilitating operations.

In some embodiments, as shown in FIG. 9 and FIG. 10, the first structural member 61 may be provided with a tool mating hole 612. For example, the tool mating hole 612 may be provided in a surface on a side of the first structural member 61 that is away from the second structural member 62. For example, the tool mating hole 612 may be a slotted hole, a cross-shaped hole, a hexagonal hole, or the like, thereby facilitating the use of a tool to rotate the first structural member 61 to achieve the locking and unlocking of the first structural member 61. In addition, at least a portion of the first structural member 61 does not need to protrude from the surface of the housing assembly 1021 to rotate the first structural member 61, and the rotation operation of the first structural member 61 can also be achieved when at least a portion of the first structural member 61 is inserted into the housing assembly 1021.

However, this application is not limited thereto. When the first structural member 61 needs to protrude from the surface of the housing assembly 1021, certainly, at least a portion of the first structural member 61 may protrude from the surface of the housing assembly 1021. For example, if the tool mating hole 612 is not provided in the first structural member 61, the first structural member 61 may be locally disposed as a noncircular shape (for example, a rectangular shape, or a hexagonal shape), and protrude from the surface of the housing assembly 1021, thereby facilitating the use of a tool to apply a force to the position of the noncircurlar shape of the first structural member 61 to rotate the first structural member 61 to perform a locking or unlocking operation.

For example, during mounting of the first structural member 61 in a manner of being inserted into the housing assembly 1021, the tool mating hole 612 is provided in the first structural member 61, thereby facilitating the locking and unlocking operations of the first structural member 61. When the first structural member 61 protrudes from the housing assembly 1021, the first structural member 61 may be provided with the tool mating hole 612, or may not be provided with the tool mating hole 612.

In some embodiments, as shown in FIG. 10, the first structural member 61 may be provided with the positioning structure 613. For example, the positioning structure 613 may be disposed on the surface on the side of the first structural member 61 that is away from the second structural member 62. For example, the positioning structure 613 may be a pit, a protrusion, a pattern, or the like, so that it is convenient to use the positioning structure 613 to guide the mounting position of the first structural member 61 to enable the first structural member 61 to be quickly aligned with the mounting position, and/or, to use the positioning structure 613 to detect the rotational angle of the first structural member 61 to ensure that the first structural member 61 rotates in position, thereby ensuring the locking reliability, and the like.

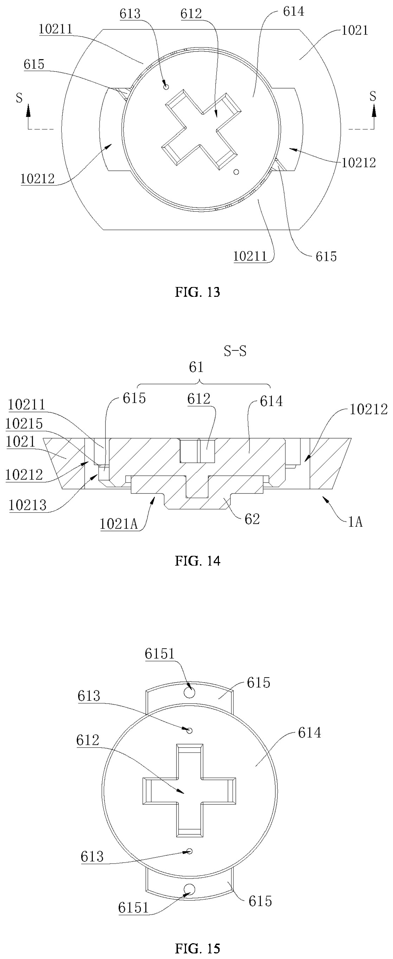

In some embodiments of this application, as shown in FIG. 11 and FIG. 12, the first structural member 61 includes a central portion 614 and a locking portion 615, the central portion 614 is disposed corresponding to the flow channel 1021A, and the locking portion 615 is located in a peripheral region of the central portion 614. As shown in FIG. 13 and FIG. 14, a stopper portion 10211 and an avoidance hole 10212 that are located around the flow channel 1021A and are alternately disposed are formed on the housing assembly 1021, a receiving groove 10213 is formed on a side of the stopper portion 10211 that is close to the accommodating cavity 1A, the avoidance hole 10212 penetrates a surface on a side of the housing assembly 1021 that is away from the accommodating cavity 1A and is in communication with the receiving groove 10213, and the locking portion 615 rotates through the avoidance hole 10212 to enter/exit the receiving groove 10213.

During assembly, the locking portion 615 may be aligned with the avoidance hole 10212, and the locking portion 615 is recessed into the avoidance hole 10212. When the locking portion 615 reaches a position corresponding to the receiving groove 10213, the first structural member 61 may be rotated to enable the locking portion 615 to enter the receiving groove 10213. In this case, the stopper portion 10211 stops on a side of the locking portion 615 that is away from the accommodating cavity 1A, to restrict the locking portion 615 to be disengaged away from the accommodating cavity 1A, thereby achieving a locking state in which the first structural member 61 forms a locking engagement with the housing assembly 1021. When the first structural member 61 is rotated again to enable the locking portion 615 to move out from the receiving groove 10213 into the avoidance hole 10212, the locking portion 615 is no longer stopped by the stopper portion 10211, and the first structural member 61 and the housing assembly 1021 may enter an unlocked state. In this case, the first structural member 61 is dragged away from the accommodating cavity 1A, so that the locking portion 615 can move out from the avoidance hole 10212, thereby achieving the detachment of the first structural member 61 from the housing assembly 1021.

In this way, only the operation of rotating the first structural member 61 is required to switch between locking and unlocking of the first structural member 61 and the housing assembly 1021, and other excessive operations are not required, thereby reducing the operation difficulty and improving the assembly and disassembly efficiency of the first structural member 61. In addition, the structures of both the first structural member 61 and the housing assembly 1021 are relatively simple, thereby facilitating processing. In addition, because the locking portion 615 is located around the central portion 614, the design of the central portion 614 is not affected. The size, configuration, and the like of the central portion 614 may be flexibly designed according to engagement requirements with the flow channel 1021A, thereby improving the design flexibility. In addition, the locking portion 615 may correspond to a surrounding region of the flow channel 1021A, and the design of the size, shape, and the like of the flow channel 1021A is not affected, so that the design requirements of the flow channel 1021A can be met.

In some embodiments of this application, as shown in FIG. 13 and FIG. 14, a plurality of avoidance holes 10212 are provided and are disposed at intervals around the flow channel 1021A, the stopper portion 10211 is disposed between every two adjacent avoidance holes 10212, so that the plurality of stopper portions 10211 and the plurality of avoidance holes 10212 are circumferentially and alternately disposed along the flow channel 1021A. A plurality of locking portions 615 are provided and are disposed at intervals around the central portion 614, and the plurality of locking portions 615 are disposed corresponding to the plurality of avoidance holes 10212 respectively. During assembly, the plurality of locking portions 615 may be respectively aligned with the plurality of avoidance holes 10212. That is, the plurality of locking portions 615 correspond one to one to the plurality of avoidance holes 10212. The first structural member 61 is rotated. The plurality of locking portions 615 are respectively rotated to a side of the plurality of stopper portions 10211 that are close to the accommodating cavity 1A, that is, each locking portion 615 is stopped by one stopper portion 10211.

In this way, through stop engagements between the plurality of locking portions 615 and the plurality of stopper portions 10211, the reliability of the locking engagement between the first structural member 61 and the housing assembly 1021 can be improved. In addition, because the plurality of locking portions 615 are disposed at intervals, the space between adjacent locking portions 615 may be used for the passage of the electrolyte solution to mitigate the problem of electrolyte solution accumulation formed at the position of the locking engagement, thereby enhancing the reliability of the battery cell 102.

Certainly, this application is not limited thereto. For example, in other embodiments of this application, the first structural member 61 and the housing assembly 1021 may further be disposed as being in a locking engagement via a threaded structure or the like, so that the first structural member 61 is configured to lock and unlock with the housing assembly 1021 via rotational motion. Alternatively, the first structural member 61 may not lock and unlock with the housing assembly 1021 via rotational motion. For example, the housing assembly 1021 may be disposed as a relatively complex structure to switch between locking and unlocking. For example, the housing assembly 1021 may include a locking mechanism. The locking mechanism may be switched to a locking state of locking the first structural member 61, or may be switched to an unlocked state of relieving the first structural member 61.

In some embodiments of this application, as shown in FIG. 9, the housing assembly 1021 includes a support portion 10214. For example, the support portion 10214 may be disposed around a section (for example, a second channel section A2) of the flow channel 1021A. The second structural member 62 includes a lapping portion 622. The lapping portion 622 is lapped on a side of the support portion 10214 that is away from the accommodating cavity 1A, and is supported on a side of the first structural member 61 that is close to the accommodating cavity 1A. That is, the lapping portion 622 is lapped on an outer side (that is, a side away from the accommodating cavity 1A) of the support portion 10214 and supports the first structural member 61 from the inner side (that is, a side close to the accommodating cavity 1A). Alternatively, in some other embodiments, when the housing assembly 1021 includes the support portion 10214 disposed around the flow channel 1021A, the first structural member 61 may be directly lapped on the outer side (that is, a side away from the accommodating cavity 1A) of the support portion 10214.

In this way, under the action of the support portion 10214, a limit position for the first structural member 61 to move toward the accommodating cavity 1A can be restricted, and under the action of the stopper portion 10211, a limit position for the first structural member 61 to move away from the accommodating cavity 1A can be restricted, so that under the joint action of the stopper portion 10211 and the support portion 10214, the first structural member 61 can stably remain in a locking position of forming a locking engagement with the housing assembly 1021, thereby enhancing the reliability of the locking engagement.

For example, in the process of assembling the sealing structure 1022, when the first structural member 61 or the second structural member 62 reaches the position of being lapped on the support portion 10214, the locking portion 615 in the avoidance hole 10212 reaches the position corresponding to the receiving groove 10213, that is, the first structural member 61 reaches the position of being rotatable. Specifically, during assembly, the locking portion 615 of the first structural member 61 is aligned with the avoidance hole 10212 on the housing assembly 1021, and the first structural member 61 and the second structural member 62 are pushed toward the accommodating cavity 1A. When the first structural member 61 or the second structural member 62 is lapped on the support portion 10214, under the support of the support portion 10214, the first structural member 61 and the second structural member 62 can no longer move toward the accommodating cavity 1A. In this case, the locking portion 615 of the first structural member 61 reaches the position corresponding to the receiving groove 10213, so that the first structural member 61 can be rotated to enable the locking portion 615 to enter the receiving groove 10213, thereby achieving a locking engagement. In this way, the support portion 10214 may further achieve positioning in an assembly process, making it convenient for a person to know that the locking portion 615 reaches a position corresponding to the receiving groove 10213. In this case, the first structural member 61 may be rotated for locking, thereby improving the convenience of assembly.

However, this application is not limited thereto. When the housing assembly 1021 includes the support structure located on a side of the receiving groove 10213 that is close to the accommodating cavity 1A, the support portion 10214 may be omitted. In this case, a person may determine whether the locking portion 615 corresponds to the receiving groove 10213. When the locking portion 615 corresponds to the receiving groove 10213, the first structural member 61 is rotated to enable the locking portion 615 to be lapped on the support structure, so that the first structural member 61 can stably remain in a locking position of forming a locking engagement with the housing assembly 1021, thereby enhancing the reliability of the locking engagement.

In some embodiments of this application, a first positioning structure 10215 is provided on a side of the stopper portion 10211 that faces the receiving groove 10213, a second positioning structure 6151 is provided on a side of the locking portion 615 that faces the stopper portion 10211, and the first positioning structure 10215 forms a positioning engagement with the second positioning structure 6151 to prevent the locking portion 615 from rotating with respect to the stopper portion 10211. In this way, the first positioning structure 10215 and the second positioning structure 6151 are disposed, so that the stability of the locking engagement between the first structural member 61 and the housing assembly 1021 can be improved, and the risk that the first structural member 61 rotates under an indeterminate external force and as a result the locking portion 615 is detached from the stopper portion 10211 to form unlocking is lowered, thereby improving the reliability of the locking engagement between the first structural member 61 and the housing assembly 1021.

For example, one of the first positioning structure 10215 and the second positioning structure 6151 is a protrusion structure, the other is a recess structure, and the protrusion structure forms a concave-convex engagement with the recess structure. In this way, the positioning engagement between the first positioning structure 10215 and the second positioning structure 6151 can be simply and effectively achieved. In addition, the first positioning structure 10215 and the second positioning structure 6151 are easy to process and have low manufacturing costs.

It should be noted that, a specific configuration of protrusion structure is not limited. For example, in some specific examples, as shown in FIG. 11 and FIG. 12, the protrusion structure includes a plurality of elongated ribs disposed at intervals in a rotational direction of the first structural member 61, the recess structure includes a plurality of elongated grooves disposed at intervals in the rotational direction of the first structural member 61, and the plurality of elongated ribs are engaged with the plurality of elongated grooves in a one-to-one correspondence. In this way, the reliability and stability of the positioning engagement can be enhanced, thereby effectively improving the stability of the locking engagement between the first structural member 61 and the housing assembly 1021.

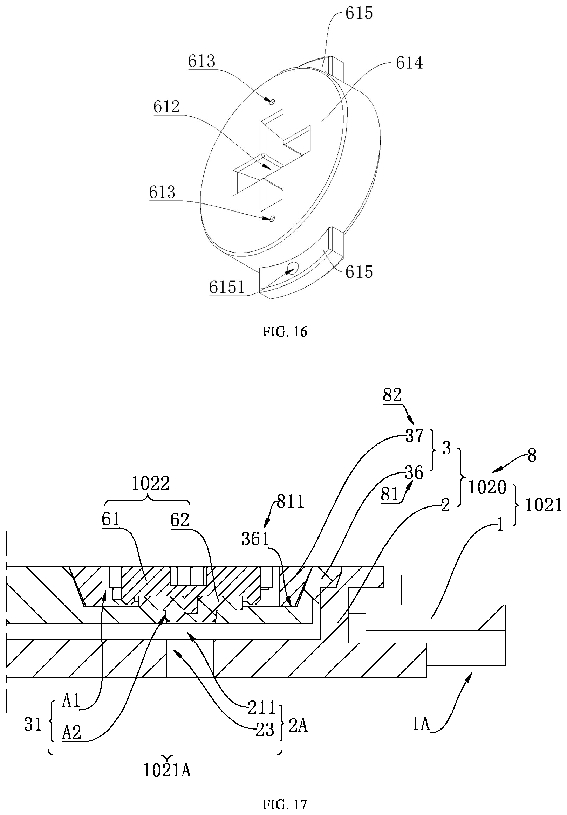

For example, in some other specific examples, as shown in FIG. 15 and FIG. 16, the protrusion structure includes a boss structure, the recess structure includes an arc-shaped groove extending along the rotational direction of the first structural member 61, and the boss structure is engaged with the arc-shaped groove. In this way, the processing precision can be reduced, so that the protrusion structure and the recess structure can easily achieve the positioning engagement.

In the embodiments of this application, a protrusion surface of the protrusion structure may be a curved surface, thereby providing good guidance, so that when entering the recess structure and leaving the recess structure, the protrusion structure is not prone to damage, thereby protecting the structure, improving the service life, and in addition improving the smoothness of operations.

Certainly, this application is not limited thereto. The first positioning structure 10215 and the second positioning structure 6151 may alternatively be disposed in other forms. For example, one of the first positioning structure 10215 and the second positioning structure 6151 is a telescopic positioning pin pushed by a spring, and the other is a pin hole. When the first structural member 61 rotates to a locking position, the positioning pin may enter the pin hole under the action of the spring, thereby achieving the locking engagement.

In the embodiments of this application, a manner in which the central portion 614 is disposed corresponding to the flow channel 1021A is not limited. For example, the central portion 614 may cover a side of the flow channel 1021A that is away from the accommodating cavity 1A. For another example, the central portion 614 may be at least partially embedded in the flow channel 1021A. When the central portion 614 is embedded in the flow channel 1021A, the central portion 614 and the flow channel 1021A may be disposed to form a cylindrical surface engagement. That is, an outer circumferential surface of the central portion 614 is a cylindrical surface, the flow channel 1021A includes a circular hole section, and the central portion 614 is located in the circular hole section of the flow channel 1021A. In this way, when the first structural member 61 rotates, the central portion 614 and the flow channel 1021A form no interference, thereby ensuring that the first structural member 61 can rotate smoothly. In addition, a mating clearance 26 between the central portion 614 and the flow channel 1021A can be reduced, thereby reducing the possibility of the entry of contaminants and the like through the mating clearance 26, thereby improving the reliability of the battery cell 102.

In some embodiments of this application, as shown in FIG. 9, at least a portion of the second structural member 62 is plugged in the flow channel 1021A, and forms an interference fit with the flow channel 1021A to seal the flow channel 1021A. In this way, through the interference fit, the second structural member 62 can simply and effectively seal the flow channel 1021A, the sealing reliability is high, and the structural complexity and processing difficulty are reduced, thereby reducing production costs. In addition, the interference fit facilitates the detachment of the second structural member 62, thereby facilitating the opening of the flow channel 1021A. Certainly, this application is not limited thereto. The second structural member 62 may be disposed covering a cross-section of the flow channel 1021A, thereby achieving the sealing and the like of the flow channel 1021A.

In some embodiments, when at least a portion of the second structural member 62 is plugged in the flow channel 1021A and forms an interference fit with the flow channel 1021A to seal the flow channel 1021A, the first structural member 61 and the second structural member 62 may be disposed to form a cylindrical surface plug-in engagement. For example, one of the first structural member 61 and the second structural member 62 is provided with a cylindrical convex structure, and the other is provided with a tubular concave structure. The convex structure is engaged in the concave structure to form the cylindrical surface plug-in engagement. In this way, due to the cylindrical surface plug-in engagement, the first structural member 61 is rotatable with respect to the second structural member 62, that is, when the second structural member 62 forms an interference fit with the flow channel 1021A, in a process of rotating the first structural member 61 to achieve the locking of the first structural member 61, through the cylindrical surface plug-in engagement, the first structural member 61 can rotate independently without driving the second structural member 62 to rotate together. In this way, the force used to rotate the first structural member 61 can be reduced, thereby improving the smoothness of rotating the first structural member 61.

It may be understood that, when the convex structure forms a cylindrical surface plug-in engagement with the concave structure, the convex structure may form an interference fit with the concave structure to enable the first structural member 61 and the second structural member 62 to form a connection. However, the tightness of the interference fit between the convex structure and the concave structure may be less than the tightness of the interference fit between the second structural member 62 and the flow channel 1021A, thereby enabling the first structural member 61 to independently rotate without driving the second structural member 62 to rotate together.

In some embodiments of this application, as shown in FIG. 9, the flow channel 1021A includes a first channel section A1 and a second channel section A2 arranged in sequence in an electrolyte solution filling direction, a cross-sectional area of the first channel section A1 is greater than a cross-sectional area of the second channel section A2, the second structural member 62 is in an interference fit with the second channel section A2, and at least a portion of the first structural member 61 is embedded in the first channel section A1. In this way, the first channel section A1 with a relatively large cross-sectional area is disposed to be engaged with the first structural member 61, so that the locking design of the first structural member 61 is facilitated, thereby achieving the locking and unlocking of the first structural member 61. The second channel section A2 with a small cross-sectional area is disposed to form an interference fit with the second structural member 62, thereby reducing the sealing difficulty and improving the sealing effect.

In some embodiments, as shown in FIG. 9, the housing assembly 1021 forms a stepped surface 10216 at a connection between the first channel section A1 and the second channel section A2, and the second structural member 62 is locally supported on a side of the stepped surface 10216 that is away from the accommodating cavity 1A. For example, the housing assembly 1021 includes the support portion 10214, the support portion 10214 includes the foregoing stepped surface 10216, the second structural member 62 includes the lapping portion 622, and the lapping portion 622 is lapped on an outer side (that is, a side away from the accommodating cavity 1A) of the stepped surface 10216. In this way, the second structural member 62 is locally supported on a side of the stepped surface 10216 that is away from the accommodating cavity 1A, so that the sealing effect of the second structural member 62 for the flow channel 1021A can be improved to some extent. In addition, the second structural member 62 is locally supported on the side of the stepped surface 10216 that is away from the accommodating cavity 1A, thereby further facilitating the detachment of the second structural member 62.

For example, even if the second structural member 62 and the first structural member 61 are in a separable form, a force can be easily applied to a portion of the second structural member 62 that is lapped on the stepped surface 10216 to detach the second structural member 62. Certainly, this application is not limited thereto. When the first structural member 61 can drive the second structural member 62 to be detached together or the second structural member 62 is provided with a tool engagement structure, the second structural member 62 may alternatively be disposed to be fully inserted into the flow channel 1021A.

In some embodiments, the housing assembly 1021 forms the stepped surface 10216 at the connection between the first channel section A1 and the second channel section A2, and the stepped surface 10216 obliquely extends toward the accommodating cavity 1A in a direction from a hole wall of the first channel section A1 to the second channel section A2. For example, when the first channel section A1 is located above the second channel section A2 and the accommodating cavity 1A is located below the second channel section A2, the stepped surface 10216 gradually extends downward obliquely from an edge to the center. In this way, the stepped surface 10216 has a flow-guiding function, so that the electrolyte solution that accumulates in the first channel section A1 can be guided into the second channel section A2 to mitigate the problem of electrolyte solution accumulation in the first channel section A1, thereby improving the reliability of the battery cell 102.

In some embodiments, the stepped surface 10216 extends obliquely toward the accommodating cavity 1A in the direction from the hole wall of the first channel section A1 to the second channel section A2, and the second structural member 62 is locally supported on the side of the stepped surface 10216 that is away from the accommodating cavity 1A. In this case, the local shape of the second structural member 62 may be disposed matching the shape of the stepped surface 10216, thereby enhancing the engagement stability of the second structural member 62 and the flow channel 1021A, and enhancing the sealing effect of the second structural member 62 for the flow channel 1021A.

Certainly, this application is not limited thereto. The sealing structure 1022 in the embodiments of this application may alternatively be not formed by the first structural member 61 and the second structural member 62. For example, in some embodiments, the sealing structure 1022 may be an integrally formed member, that is, can form an interference fit with the flow channel 1021A and can also be locked with the housing assembly 1021. For example, the first structural member 61 and the second structural member 62 in the foregoing structural form may be made into a whole, thereby reducing production costs.

In some embodiments of this application, the sealing structure 1022 is configured to be at least partially embedded in the flow channel 1021A through an inlet of the flow channel 1021A. In this way, it is convenient to operate the sealing structure 1022 to open or seal the flow channel 1021A. For example, when the sealing structure 1022 is detachably engaged with the housing assembly 1021, the mounting and detachment of the sealing structure 1022 are facilitated. In addition, the sealing structure 1022 is at least partially embedded in the flow channel 1021A, that is, the sealing structure 1022 can be fully embedded in the flow channel 1021A, or only a portion of the sealing structure 1022 can be embedded in the flow channel 1021A. In this way, on one hand, the space in the flow channel 1021A can be fully utilized, thereby improving the sealing reliability of the sealing structure 1022 for the flow channel 1021A. On the other hand, the height by which the sealing structure 1022 protrudes from the flow channel 1021A can be reduced, and the occupation of space outside the housing assembly 1021 by the sealing structure 1022 can be reduced, thereby reducing the overall size of the battery cell 102. Certainly, this application is not limited thereto. The sealing structure 1022 may be disposed fully covering the outside of the flow channel 1021A. Details are not described herein.

For example, with reference to FIG. 6, when the flow channel 1021A includes the first channel section A1 and the second channel section A2 that are arranged in sequence in the electrolyte solution filling direction in the foregoing embodiments and the cross-sectional area of the first channel section A1 is greater than the cross-sectional area of the second channel section A2, an inlet of the first channel section A1 may be disposed as the inlet of the flow channel 1021A. In this case, the sealing structure 1022 may extend into the flow channel 1021A through the inlet of the first channel section A1, and is at least embedded in the first channel section A1. For example, the sealing structure 1022 may be only embedded in the first channel section A1. Alternatively, for another example, a portion of the sealing structure 1022 may alternatively be embedded in the first channel section A1, and the remaining portion is embedded in the second channel section A2.

In some embodiments of this application, with respect to FIG. 5 to FIG. 7, the housing assembly 1021 includes a mounting portion 8, the flow channel 1021A includes an electrolyte solution filling hole 31 formed in the mounting portion 8, the mounting portion 8 includes a base portion 81 and a base seat 82 mounted on the base portion 81, and the sealing structure 1022 is engaged with the base seat 82 and is configured to open or seal the electrolyte solution filling hole 31. It should be noted that, the electrolyte solution filling hole 31 may be only formed on the base portion 81, and the electrolyte solution filling hole 31 may alternatively be formed in both the base portion 81 and the base seat 82 (that is, a portion of the electrolyte solution filling hole 31 is formed in the base portion 81, and another portion is formed in the base seat 82). This is not limited herein.

The base seat 82 is a separately processed part, and is mounted on the base portion 81 through an assembly procedure. For example, a manner may be selected from various manners such as welding, bonding, clamping, and an interference fit to achieve the assembly and connection of the base portion 81 and the base seat 82. This is not limited herein. In this way, the base seat 82 is disposed, and the sealing structure 1022 is engaged with the base seat 82. For example, the two may be engaged detachably, engaged in a relatively movable manner, or the like, so that the base seat 82 can be processed into a shape that adapts to an engagement with the sealing structure 1022, so that the structural complexity of the base portion 81 can be simplified, thereby reducing the processing difficulty of the base portion 81.

For example, the base portion 81 and the base seat 82 are made of the same metal material and welded together, so that the connection reliability of the two can be improved, thereby improving the sealing performance at the connection position of the two. In addition, the structural reliability of the base seat 82 is high, and the engagement stability of the sealing structure 1022 is high.

In some embodiments, with reference to FIG. 17, the base portion 81 may be provided with the mounting groove 811 that opens away from the accommodating cavity 1A, and at least a portion of the base seat 82 is embedded in the mounting groove 811, thereby improving the assembly efficiency of the base seat 82 and the base portion 81 and the connection stability of the base seat 82 and the base portion 81. In addition, the occupation of space outside the base portion 81 by the base seat 82 can be reduced.

For example, in some embodiments, when the sealing structure 1022 is detachably engaged with the housing assembly 1021, the sealing structure 1022 may be detachably engaged with the base seat 82. For example, when the sealing structure 1022 includes the first structural member 61 in the foregoing embodiments, the first structural member 61 may be disposed to form locking and unlocking engagements with the base seat 82. For example, when the stopper portion 10211 and the avoidance hole 10212 that are located around the flow channel 1021A and are alternately disposed in the foregoing embodiments are formed on the housing assembly 1021, both the stopper portion 10211 and the avoidance hole 10212 may be processed on the base seat 82, thereby reducing the processing difficulty of the base portion 81.

In addition, when the types of the base portion 81 are varied or indeterminate, the base seat 82 that can be engaged with the sealing structure 1022 is disposed, so that the interchangeability can be improved, thereby enriching use scenarios. For example, the base portion 81 may be a portion of the pressure relief structure, a portion of the terminal post cover plate, or a portion of the housing. Only a hole needs to be opened in the base portion 81 to meet the mounting requirements of the base seat 82 to mount the sealing structure 1022, and a related structure (for example, the stopper portion 10211, or the avoidance hole 10212) to be engaged with the sealing structure 1022 does not need to be disposed on the base portion 81, thereby simplifying the design and processing of the base portion 81.

For example, in some embodiments, when the electrolyte solution filling hole 31 includes the first channel section A1 and the second channel section A2 that are arranged in sequence in the electrolyte solution filling direction in the foregoing embodiments and the cross-sectional area of the first channel section A1 is greater than the cross-sectional area of the second channel section A2, an inlet of the first channel section A1 may be disposed as an inlet of the electrolyte solution filling hole 31, and the inlet of the electrolyte solution filling hole 31 forms the inlet of the flow channel 1021A. In this case, the sealing structure 1022 may extend into the flow channel 1021A through the inlet (that is, the inlet of the electrolyte solution filling hole 31) of the first channel section A1. For example, the base seat 82 defines the first channel section A1, and the base portion 81 defines the second channel section A2. In addition, when the sealing structure 1022 includes the foregoing first structural member 61 and second structural member 62, the second structural member 62 forms an interference fit with the second channel section A2 of the base portion 81, at least a portion of the first structural member 61 is embedded in the first channel section A1 of the base seat 82, and the first structural member 61 forms locking and unlocking engagements with the base seat 82.

A battery cell, an electrolyte solution filling hole, a terminal post, an explosion-proof vent, and the like in existing technologies are disposed at intervals on a top cover of the housing. Because the electrolyte solution filling hole is separately provided in the top cover and occupies an area of the top cover, resulting in a small area of the terminal post. If the area of the terminal post needs to be increased, the size of the top cover needs to be increased, and the larger top cover also accordingly has an increase weight, making it difficult to achieve the miniaturization and lightweight of the top cover. In addition, because the electrolyte solution filling hole needs to be separately processed in the top cover, the structure of the top cover is relatively complex, the processing difficulty is high, and it is not easy to process the electrolyte solution filling hole. In addition, in consideration of sealing performance, a sealing nail needs to be welded on the top cover to block the electrolyte solution filling hole. However, as the energy density of the battery cell increases, the top cover is made increasingly thin, and the top cover is prone to a collapse defect or a weld penetration problem at the position where the sealing nail is welded. To mitigate the problem, a portion of the top cover at which the sealing nail is welded is usually thickened, leading to increased material and manufacturing costs of the top cover, or the top cover needs to be thickened as a whole. In this case, the requirements of a light weight and a small thickness of the top cover fails to be met, affecting the enhancement of the energy density of the battery cell. In addition, to ensure the insulativity at the sealing nail and avoid interference between the sealing nail and the battery cell assembly in the housing, a lower plastic structure below the top cover needs to be thickened. The thickened lower plastic structure leads to higher material costs, and also occupies more space in the accommodating cavity, affecting the enhancement of the energy density of the battery cell.

In some embodiments of this application, as shown in FIG. 6, the housing assembly 1021 includes a housing 1 and a terminal post structure 1020, the accommodating cavity 1A is defined by the housing 1, the terminal post structure 1020 is disposed in the housing 1, the terminal post structure 1020 is the mounting portion 8, the flow channel 1021A is disposed at the terminal post structure 1020 (for example, disposed at the mounting portion 8) and includes the electrolyte solution filling hole 31, and the sealing structure 1022 is engaged with the terminal post structure 1020 (for example, engaged with the mounting portion 8) and is configured to open or seal the electrolyte solution filling hole 31. In this way, the flow channel 1021A that can be used for electrolyte solution filling is disposed at the mounting portion 8, and the terminal post structure 1020 is the mounting portion 8, so that the electrolyte solution can be filled at the terminal post structure 1020. In this way, the flow channel 1021A does not need to be separately opened in the housing 1. Therefore, the flow channel 1021A does not occupy the space of the housing 1, and the size of the terminal post structure 1020 does not need to be reduced to avoid the flow channel 1021A, so that while the size of the housing 1 is not increased, the area of the terminal post structure 1020 can be increased, and the flow area of the terminal post structure 1020 can be increased, thereby reducing flow resistance and improving flow efficiency and the like. In addition, the increase in the area of the terminal post structure 1020 further facilitates the assembly and connection of the terminal post structure 1020 and the housing 1. In addition, the size of the housing 1 does not need to be increased to increase the area of the terminal post structure 1020, thereby facilitating the miniaturization and lightweight of the housing 1.

In addition, the housing 1 does not need to be specially processed to open the flow channel 1021A in the housing 1, thereby reducing the structural complexity and processing difficulty of the housing 1. In addition, the housing 1 does not need to be locally thickened to weld the sealing nail on the housing 1, so that the structure and processing of the housing 1 can further be simplified, and the housing 1 does not need to be thickened as a whole to weld the sealing nail on the housing 1, thereby meeting the requirements of a light weight and a small thickness of the housing 1, enhancing the energy density of the battery cell 102, and reducing the weight and material costs of the housing 1. In addition, the flow channel 1021A is disposed at the terminal post structure 1020, so that the manufacturing and processing of the flow channel 1021A can be facilitated, making it easier for the size, the shape, and the like of the flow channel 1021A to meet design requirements and application requirements, reducing the processing difficulty of the flow channel 1021A, and reducing the processing costs of the flow channel 1021A.

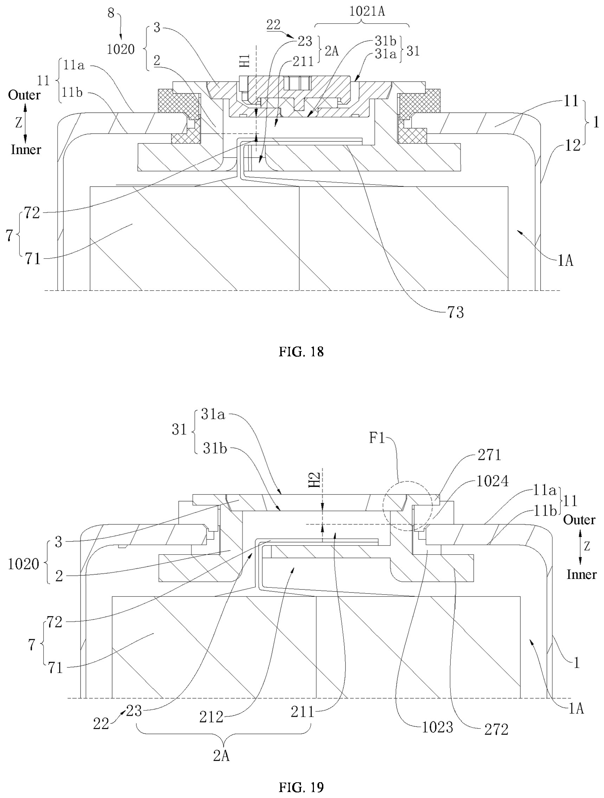

In some embodiments of this application, as shown in FIG. 17 and FIG. 18, the terminal post structure 1020 includes a terminal post body 2 and a terminal post cover plate 3, the terminal post body 2 is mounted in the housing 1, the terminal post cover plate 3 covers the terminal post body 2, the flow channel 1021A further includes a communication channel 2A, the communication channel 2A is formed in the terminal post body 2 and is in communication with the accommodating cavity 1A, the electrolyte solution filling hole 31 is formed on the terminal post cover plate 3 and is in communication with the communication channel 2A, and the sealing structure 1022 is engaged with the terminal post cover plate 3 to open or seal the electrolyte solution filling hole 31.

Because the terminal post cover plate 3 covers the terminal post body 2, in an filled electrolyte solution circulation direction, the electrolyte solution filling hole 31 is located upstream the communication channel 2A. That is, when the electrolyte solution is filled into the battery cell 102, the electrolyte solution first flows through the electrolyte solution filling hole 31, and then flows through the communication channel 2A. In this way, when an electrolyte solution needs to be filled into the accommodating cavity 1A in the battery cell 102, the electrolyte solution may be filled through the electrolyte solution filling hole 31. Because the electrolyte solution filling hole 31 is in communication with the communication channel 2A, the electrolyte solution that enters the electrolyte solution filling hole 31 may flow into the communication channel 2A, and because the communication channel 2A is in communication with the accommodating cavity 1A, the electrolyte solution that enters the communication channel 2A may flow into the accommodating cavity 1A, thereby achieving electrolyte solution filling into the accommodating cavity 1A through the electrolyte solution filling hole 31 and the communication channel 2A.

In this way, because the flow channel 1021A includes the communication channel 2A and the electrolyte solution filling hole 31, an electrolyte solution filling path can be extended to some extent, thereby buffering electrolyte solution filling to some extent. During the electrolyte solution filling or operation of the battery cell 102, the possibility of splashing or spilling of the electrolyte solution is reduced. In addition, the electrolyte solution filling hole 31 is provided in the terminal post cover plate 3, and the terminal post body 2 is further provided on a side of the terminal post cover plate 3 that is close to the accommodating cavity 1A. Therefore, even if the sealing nail is disposed at the electrolyte solution filling hole 31, the lower plastic structure and the sealing nail are further separated by the terminal post body 2. Therefore, the lower plastic structure does not need to be thickened to ensure the insulativity at the sealing nail, and the lower plastic structure also does not need to be thickened to avoid interference between a long sealing nail and the battery cell assembly. Therefore, the thinning of the lower plastic structure is facilitated, and material costs are reduced. In addition, the occupation of space in the accommodating cavity 1A by the lower plastic structure is reduced, thereby enhancing the energy density of the battery cell 102. Certainly, in some embodiments of this application, when the sealing structure 1022 is disposed, the sealing nail may no longer be disposed.

A specific engagement manner of the sealing structure 1022 and the cover plate portion 36 is not limited, provided that the electrolyte solution filling hole 31 can be opened or sealed. For example, in some embodiments, as shown in FIG. 17, the terminal post cover plate 3 includes a cover plate portion 36 and a first base seat portion 37, the cover plate portion 36 covers the terminal post body 2, the first base seat portion 37 is mounted at the cover plate portion 36, at least a portion of the electrolyte solution filling hole 31 is formed on the first base seat portion 37, and the sealing structure 1022 is engaged with the first base seat portion 37.

For example, the electrolyte solution filling hole 31 includes the second channel section A2 formed on the cover plate portion 36 and the first channel section A1 formed on the first base seat portion 37, and the sealing structure 1022 is engaged with the first base seat portion 37. It may be understood that, in this embodiment, when the mounting portion 8 includes the base portion 81 and the base seat 82 mounted on the base portion 81 and the sealing structure 1022 is engaged with the base seat 82 and is configured to open or seal the electrolyte solution filling hole 31, if the terminal post structure 1020 is the mounting portion 8, the cover plate portion 36 is used as the base portion 81, and the first base seat portion 37 is used as the base seat 82.

For example, when the sealing structure 1022 is detachably engaged with the housing assembly 1021, the sealing structure 1022 may be detachably engaged with the first base seat portion 37. For example, when the sealing structure 1022 includes the first structural member 61 in the foregoing embodiments, the first structural member 61 may be disposed to form locking and unlocking engagements with the first base seat portion 37. For example, when the stopper portion 10211 and the avoidance hole 10212 that are located around the flow channel 1021A and are alternately disposed in the foregoing embodiments are formed on the housing assembly 1021, both the stopper portion 10211 and the avoidance hole 10212 may be processed on the first base seat portion 37, thereby reducing the processing difficulty of the cover plate portion 36.

It should be noted that, an assembly manner of the cover plate portion 36 and the first base seat portion 37 is not limited. For example, a manner may be selected from various manners such as welding, bonding, clamping, and an interference fit. For example, the cover plate portion 36 and the first base seat portion 37 are made of the same metal material and welded together, so that the connection reliability of the two can be improved, thereby improving the sealing performance at the connection position of the two. In addition, the structural reliability of the first base seat portion 37 is high, and the engagement stability of the sealing structure 1022 is high. In addition, when the cover plate portion 36 and the first base seat portion 37 are welded using the same material, in a process of filling the electrolyte solution, even if the electrolyte solution comes into contact with a welding position between the cover plate portion 36 and the first base seat portion 37, the position is not prone to contamination and corrosion, thereby effectively ensuring the connection reliability of the cover plate portion 36 and the first base seat portion 37.

In some embodiments, with reference to FIG. 17, the cover plate portion 36 is provided with the first mounting groove 361 that opens away from the accommodating cavity 1A, and at least a portion of the first base seat portion 37 is embedded in the first mounting groove 361, thereby improving the assembly efficiency of the first base seat portion 37 and the cover plate portion 36 and the connection stability of the first base seat portion 37 and the cover plate portion 36. In addition, the occupation of space outside the cover plate portion 36 by the first base seat portion 37 can be reduced.

For example, as shown in FIG. 18, the terminal post cover plate 3 may alternatively not include the first base seat portion 37 and the cover plate portion 36, and is, for example, an aluminum cover plate or copper-aluminum composite cover plate. The electrolyte solution filling hole 31, the stopper portion 10211, the avoidance hole 10212, and the like are directly processed on the terminal post cover plate 3 without the first base seat portion 37 for an engagement with the sealing structure 1022, thereby omitting the first base seat portion 37, reducing parts, and improving assembly efficiency.

In some embodiments, as shown in FIG. 17 and FIG. 18, the communication channel 2A includes a first accommodating groove 211 and an electrolyte solution passage hole 23, the first accommodating groove 211 opens toward the terminal post cover plate 3 to communicate with the electrolyte solution filling hole 31, and the electrolyte solution passage hole 23 penetrates a groove wall of the first accommodating groove 211 and is in communication with the first accommodating groove 211 and the accommodating cavity 1A.

For example, the communication channel 2A includes the first accommodating groove 211 and the electrolyte solution passage hole 23. The first accommodating groove 211 opens toward the terminal post cover plate 3 (that is, opens toward a side of the first accommodating groove 211 that is away from the accommodating cavity 1A, or in other words, a groove opening of the first accommodating groove 211 is located on a side of the accommodating groove 21 that is away from the accommodating cavity 1A), so that the first accommodating groove 211 is in communication with the electrolyte solution filling hole 31. The electrolyte solution passage hole 23 penetrates a groove wall on a side of the first accommodating groove 211 that is away from the terminal post cover plate 3 (that is, the electrolyte solution passage hole 23 is located on a side of the first accommodating groove 211 that is close to the accommodating cavity 1A, and penetrates a groove wall a side of the first accommodating groove 211 that is close to the accommodating cavity 1A), so that the electrolyte solution passage hole 23 is in communication with the first accommodating groove 211 and the accommodating cavity 1A. Alternatively, the electrolyte solution passage hole 23 may penetrate a groove wall at another position of the first accommodating groove 211, provided that the first accommodating groove 211 and the accommodating cavity 1A can be communicated.

When an electrolyte solution needs to be filled into the accommodating cavity 1A in the battery cell 102, the electrolyte solution may be filled through the electrolyte solution filling hole 31. Because the electrolyte solution filling hole 31 is in communication with the first accommodating groove 211, the electrolyte solution that enters the electrolyte solution filling hole 31 may flow into the first accommodating groove 211, and because the first accommodating groove 211 is in communication with the accommodating cavity 1A through the electrolyte solution passage hole 23, the electrolyte solution that enters the first accommodating groove 211 may flow into the accommodating cavity 1A through the electrolyte solution passage hole 23, thereby achieving electrolyte solution filling into the accommodating cavity 1A through the electrolyte solution filling hole 31, the first accommodating groove 211, and the electrolyte solution passage hole 23.

In this way, because the communication channel 2A includes the first accommodating groove 211 formed in the terminal post body 2, the first accommodating groove 211 can buffer the electrolyte solution. During the electrolyte solution filling or operation of the battery cell 102, splashing, spilling, and other problems of the electrolyte solution can be mitigated. In addition, during the filling of the electrolyte solution, because the first accommodating groove 211 can buffer the electrolyte solution, thereby improving the filling efficiency of the electrolyte solution. In addition, a groove side wall (that is, a groove wall extending from an opens side of the first accommodating groove 211 toward the accommodating cavity 1A) of the first accommodating groove 211 can block to some extent the electrolyte solution from splashing, thereby reducing contamination caused to the outside by the electrolyte solution.

In addition, it should be noted that, when the communication channel 2A includes the first accommodating groove 211, the electrolyte solution passage hole 23 may be disposed on a side of the first accommodating groove 211 that is close to the accommodating cavity 1A, and penetrates a groove wall on the side of the first accommodating groove 211 that is close to the accommodating cavity 1A. In this case, the first accommodating groove 211 is equivalent to a recessed structure to enable the electrolyte solution passage hole 23 to be away from the groove opening of the first accommodating groove 211, and the electrolyte solution passage hole 23 is relatively far away from a connection between the terminal post cover plate 3 and the terminal post body 2. When the electrolyte solution spills from the electrolyte solution passage hole 23, the spilled electrolyte solution does not easily come into contact with a connection position (for example, welding or bonding) between the terminal post cover plate 3 and the terminal post body 2, so that corrosion, contamination, and the like at the connection position can be reduced.

In some embodiments of this application, a cross-sectional shape of the first accommodating groove 211 matches a cross-sectional shape of the terminal post body 2. In this way, the space of the terminal post body 2 can be fully utilized, so that the size of the first accommodating groove 211 is maximized, thereby improving the buffering, receiving, and other functions of the first accommodating groove 211.

Certainly, this application is not limited thereto. For example, in some embodiments of this application, the terminal post body 2 may not be provided with the first accommodating groove 211 and is only provided with the electrolyte solution passage hole 23, and the electrolyte solution filling hole 31 is opposite to and in communication with the electrolyte solution passage hole 23, so that electrolyte solution filling requirements can also be met.

It may be understood that, the terminal post cover plate 3 is located on an outer side (that is, a side away from the accommodating cavity 1A) of at least a portion of the terminal post body 2, to present the form of the terminal post cover plate 3 covering the terminal post body 2. In this way, the electrolyte solution filling hole 31 may be located upstream the communication channel 2A in the terminal post body 2. However, it should be noted that, an assembly manner of the terminal post cover plate 3 and the terminal post body 2 is not limited. For example, the terminal post cover plate 3 may be fully located on an outer side (that is, a side away from the accommodating cavity 1A) of the terminal post body 2. Alternatively, the terminal post cover plate 3 may be partially embedded in the terminal post body 2.

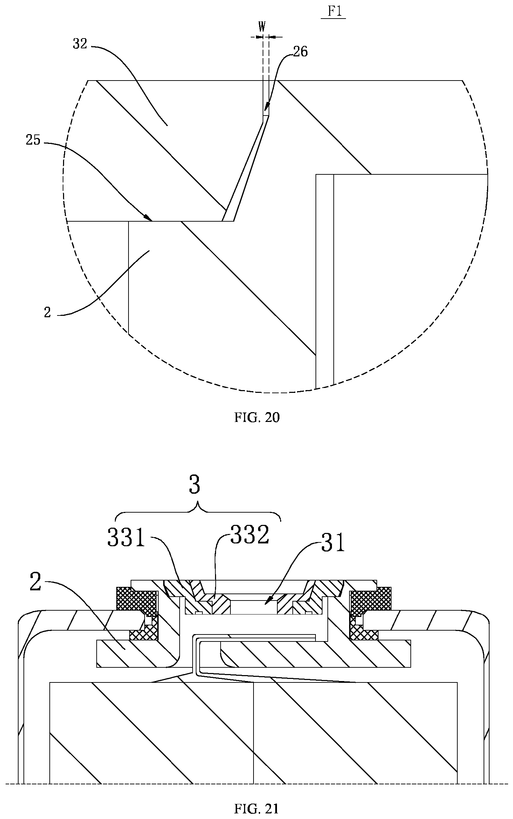

For example, in some embodiments of this application, as shown in FIG. 19 and FIG. 20, at least a portion of the terminal post cover plate 3 is embedded in the first accommodating groove 211. Because the first accommodating groove 211 is used as a portion of the communication channel 2A, it indicates that a cavity is formed between the terminal post cover plate 3 and the groove wall of the first accommodating groove 211. In this way, while the terminal post cover plate 3 occupies space in the first accommodating groove 211, it is ensured that the first accommodating groove 211 still has space for the electrolyte solution to flow, to enable the electrolyte solution filled through the electrolyte solution filling hole 31 to enter the electrolyte solution passage hole 23 through the cavity, thereby meeting electrolyte solution filling requirements. In addition, the cavity can also buffer the electrolyte solution, thereby mitigating splashing, spilling, and other problems of the electrolyte solution.

In addition, during the use of the battery cell 102, the cavity may be used for buffering generated gases in the battery cell 102 or the electrolyte solution that spills from the accommodating cavity 1A, thereby improving the operational reliability of the battery cell 102. In addition, during the production of the battery cell 102, the cavity may also buffer the filled electrolyte solution, thereby mitigating the spilling of the electrolyte solution, and improving electrolyte solution filling efficiency. In addition, at least a portion of the terminal post cover plate 3 is embedded in the first accommodating groove 211, so that the occupation of space outside the terminal post body 2 by the terminal post cover plate 3 can be reduced, thereby improving structural compactness.

In some embodiments of this application, as shown in FIG. 19 and FIG. 20, an edge portion 32 is provided at an edge of the terminal post cover plate 3, and the edge portion 32 is lapped on a side of the terminal post body 2 that is away from the accommodating cavity 1A. In this way, the engagement and connection between the terminal post cover plate 3 and the terminal post body 2 are facilitated, and the height of the cavity between the terminal post cover plate 3 and the groove wall of the first accommodating groove 211 is easily controlled, thereby enabling the size of the cavity to meet design requirements.

For example, as shown in FIG. 19 and FIG. 20, when the communication channel 2A includes the first accommodating groove 211, a sink groove 25 disposed around the first accommodating groove 211 is provided on the surface on the side of the terminal post body 2 that is away from the accommodating cavity 1A, and at least a portion of the edge portion 32 is embedded in the sink groove 25, so that the edge portion 32 is lapped on the side of the terminal post body 2 that is away from the accommodating cavity 1A. In this way, the sink groove 25 may be used to achieve positioning, thereby improving the assembly efficiency of the terminal post body 2 and the terminal post cover plate 3. In addition, the sink groove 25 may be used to achieve limiting to some extent, thereby improving the engagement stability and reliability of the terminal post body 2 and the terminal post cover plate 3. In addition, the sink groove 25 is disposed, so that the terminal post cover plate 3 can further be embedded in the terminal post body 2, to make the terminal post cover plate 3 less protruding or non-protruding from the terminal post body 2, thereby reducing the occupation of space outside the terminal post body 2.

In some embodiments, when the edge portion 32 and the terminal post body 2 are welded and the electrolyte solution passage hole 23 is provided in the terminal post body 2, the edge portion 32 may be far away from the electrolyte solution passage hole 23. When the electrolyte solution spills through the electrolyte solution passage hole 23, the electrolyte solution may be kept away from a welding position of the edge portion 32 and the terminal post body 2, thereby mitigating corrosion, contamination, and other problems at the welding position. It should be noted that, a welding manner of the edge portion 32 and the terminal post body 2 is not limited. For example, fusion welding or brazing may be used. For example, the edge portion 32 and the terminal post body 2 may be welded by using continuous laser.

In some embodiments of this application, as shown in FIG. 19 and FIG. 20, the mating clearance 26 may be provided between the edge portion 32 and the side wall of the sink groove 25. A size W of an end of the mating clearance 26 that is away from the accommodating cavity 1A is less than 0.05 mm, that is, the mating clearance 26 has a size greater than 0 mm and less than 0.05 mm. In this way, on one hand, the edge portion 32 of the terminal post cover plate 3 may be smoothly assembled with the sink groove 25 of the terminal post body 2, and on the other hand, the mating clearance 26 between the two is not excessively large. When the edge portion 32 and the terminal post body 2 are connected through welding, the welding yield of the edge portion 32 and the terminal post body 2 can be improved.

In some embodiments of this application, the shape of the terminal post cover plate 3 matches the cross-sectional shape of the first accommodating groove 211. In this way, the terminal post cover plate 3 may be used to cover the first accommodating groove 211. After the electrolyte solution filling hole 31 is sealed, the sealing of the first accommodating groove 211 can be achieved, thereby simplifying the sealing measures of the first accommodating groove 211, reducing the use of parts, simplifying the structure, facilitating assembly, and reducing costs. Further, the cross-sectional shape of the edge portion 32 matches that of the sink groove 25. In this way, it can be effectively ensured that the mating clearance 26 between the edge portion 32 and the side wall of the sink groove 25 is uniform.

In some embodiments of this application, as shown in FIG. 19 and FIG. 20, the terminal post body 2 may include an outer stop portion 271 positioned outside the housing 1 for limiting and an inner stop portion 272 positioned inside the housing 1 for limiting, the edge portion 32 is lapped on the outer stop portion 271, and the terminal post body 2 is riveted on the housing 1 to form the outer stop portion 271. That is, the terminal post body 2 is fixed on the housing 1 in a riveting manner, and the terminal post body 2 is riveted to form the outer stop portion 271. That is, before the terminal post body 2 is riveted, the outer stop portion 271 is not provided. After the terminal post body 2 is riveted, the outer stop portion 271 may be formed. For example, the terminal post body 2 may be first formed by using a stamping process, and then the terminal post body 2 is fixed on the housing 1 in a riveting manner.

In this way, pre-processing (for example, a stamping process) before the terminal post body 2 is riveted can be simplified, so that the outer stop portion 271 can be conveniently obtained. When the structure of the outer stop portion 271 is relatively complex, a mold (for example, a stamping mold) for pre-processing the terminal post body 2 can be simplified, thereby reducing production costs. In addition, the terminal post body 2 riveted on the housing 1 may be an integrally formed member, so that the terminal post body 2 can be reliably connected to the housing 1, and the connection between the outer stop portion 271 and the inner stop portion 272 is stable and reliable, thereby improving the connection reliability of the terminal post body 2 and the terminal post cover plate 3.

Certainly, this application is not limited thereto. For example, in other embodiments, the inner stop portion 272 may be processed through riveting. Alternatively, in other embodiments, the terminal post body 2 may be obtained by using another process besides riveting. For example, the terminal post body 2 may include two portions, which are connected through welding to be fixed on the housing 1.

For example, as shown in FIG. 19 and FIG. 20, the battery cell 102 may further include a sealing pad 1023 (for example, a sealing ring) and an insulating pad 1024 (for example, a plastic pad). The sealing pad 1023 and the insulating pad 1024 are sandwiched between the terminal post body 2 and the housing 1, and are riveted to the housing 1 through the terminal post body 2, to enable the sealing pad 1023 and the insulating pad 1024 to be fixed between the terminal post body 2 and the housing 1, so that production efficiency can be improved, and an adverse thermal impact caused by a welding process to the sealing pad 1023 and the insulating pad 1024 can be avoided. For example, during riveting, a compression amount (that is, a difference between a thickness after deformation and a thickness before deformation of the sealing pad 1023 divided by the thickness before deformation) of the sealing pad 1023 may be greater than or equal to 15%, thereby ensuring sealing performance.

In some embodiments of this application, the electrolyte solution filling hole 31 may be provided at the terminal post cover plate 3 of the cathode. Generally, the material of the terminal post cover plate 3 of the cathode is the same as that of the terminal post body 2 of the cathode. For example, the terminal post cover plate 3 needs to be welded to the terminal post body 2, and the terminal post cover plate 3 further needs to be welded to the bus component 103. When the material of the terminal post cover plate 3 is the same as that of the terminal post body 2, the welding yields of the two are high. When the material of the terminal post cover plate 3 is the same as that of the bus component 103, the welding yields of the two are high. The material of the terminal post body 2 of the cathode is usually aluminum, and the material of the bus component 103 of the cathode is usually aluminum. Therefore, the material of the terminal post cover plate 3 of the cathode may also be aluminum, so that each of the terminal post cover plate 3 of the cathode, the terminal post body 2 of the cathode, and the bus component 103 of the cathode has a high welding yield. When the electrolyte solution filling hole 31 is disposed at the terminal post cover plate 3 of the cathode, the electrolyte solution flows to a welding position between the terminal post cover plate 3 of the cathode and the terminal post body 2 of the cathode. The welding position is a combination of the same material (for example, aluminum), and therefore the welding position is not prone to corrosion, thereby improving the connection reliability of the terminal post cover plate 3 and the terminal post body 2.

In some embodiments of this application, with reference to FIG. 21, the terminal post cover plate 3 includes the first cover plate portion 331 and the second cover plate portion 332, the material of the first cover plate portion 331 is the same as that of the terminal post body 2, the first cover plate portion 331 is connected to the terminal post body 2, the second cover plate portion 332 is connected to the first cover plate portion 331, and the electrolyte solution filling hole 31 is disposed on the first cover plate portion 331 or the second cover plate portion 332. When the material of the first cover plate portion 331 is the same as that of the terminal post body 2, the electrolyte solution flows to a welding position between the first cover plate portion 331 and the terminal post body 2. The welding position is a combination of the same material, and therefore the welding position is not prone to corrosion, thereby improving the connection reliability of the terminal post cover plate 3 and the terminal post body 2. In this way, the electrolyte solution filling hole 31 may be disposed at either the terminal post cover plate 3 of the cathode or the terminal post cover plate 3 of the anode.

It should be noted that, an assembly manner of the first cover plate portion 331 and the second cover plate portion 332 is not limited. For example, an orthographic projection is performed along an axial direction of the electrolyte solution filling hole 31, an orthographic projection of the first cover plate portion 331 and an orthographic projection of the second cover plate portion 332 have a nonoverlapping portion, and the electrolyte solution filling hole 31 may be provided in the nonoverlapping portion. In this way, the filled electrolyte solution does not easily cause corrosion and contamination to the welding position between the first cover plate portion 331 and the second cover plate portion 332, thereby improving the reliability of the terminal post cover plate 3.

For example, the material of the terminal post body 2 of the anode is usually copper, and the material of the bus component 103 of the anode is usually aluminum. If the terminal post cover plate 3 of the anode is made of aluminum, when the electrolyte solution filling hole 31 is provided in the terminal post cover plate 3 of the anode, the electrolyte solution flows to a welding position between the terminal post cover plate 3 of the anode and the terminal post body 2 of the anode. The welding position is a combination of different materials (for example, aluminum and copper), and therefore the welding position is prone to corrosion. For this, in some embodiments of this application, the terminal post cover plate 3 of the anode may be disposed as a copper-aluminum composite material, the first cover plate portion 331 processed using a copper material of the terminal post cover plate 3 of the anode is welded to the terminal post body 2 of the anode, and the second cover plate portion 332 processed using an aluminum material of the terminal post cover plate 3 of the anode is welded to the bus component 103 of the anode, so that the terminal post cover plate 3 of the anode has high welding yields with both the terminal post body 2 of the anode and the bus component 103 of the anode. In this way, when the electrolyte solution filling hole 31 is provided in the terminal post cover plate 3 of the anode of the composite material, or may be provided in the first cover plate portion 331, or may be provided in the second cover plate portion 332, and the electrolyte solution flows to the welding position between the terminal post cover plate 3 of the anode and the terminal post body 2 of the anode. The welding position is a combination of the same material (for example, copper), and therefore the welding position is not prone to corrosion, thereby improving the connection reliability of the terminal post cover plate 3 and the terminal post body 2.

In some embodiments, as shown in FIG. 18 and FIG. 19, the battery cell 102 further includes a battery cell assembly 7, the battery cell assembly 7 includes an active substance coating portion 71 and a conductive portion 72, the active substance coating portion 71 is received in the accommodating cavity 1A, and the conductive portion 72 is connected to the active substance coating portion 71. For example, the conductive portion 72 may be connected to the terminal post structure 1020 to form an electrical connection, thereby achieving an output of the battery cell assembly 7 from an electrode at the terminal post structure 1020. For example, the conductive portion 72 may be connected to the terminal post structure 1020 through welding or the like. It may be understood that, the active substance coating portion 71 may include a current collector coated with an active substance layer, and the conductive portion 72 may include only a tab portion, may include the tab portion and an adapter tab electrically connected to the tab portion, or the like. This is not limited herein.

As shown in FIG. 18 and FIG. 19, a communication hole 22 for communicating the first accommodating groove 211 and the accommodating cavity 1A is formed in the terminal post body 2, one or more communication holes 22 are provided, at least one communication hole 22 is used as the electrolyte solution passage hole 23, and the conductive portion 72 is passed through the at least one communication hole 22 to be at least partially received in the first accommodating groove 211. For example, the first accommodating groove 211 and the communication hole 22 are formed in the terminal post body 2, the first accommodating groove 211 opens away from the accommodating cavity 1A to communicate with the electrolyte solution filling hole 31, the communication hole 22 is located on the side of the first accommodating groove 211 that is close to the accommodating cavity 1A, the communication hole 22 penetrates the groove wall on the side of the first accommodating groove 211 that is close to the accommodating cavity 1A to communicate the first accommodating groove 211 and the accommodating cavity 1A, at least one communication hole 22 is the electrolyte solution passage hole 23, and the conductive portion 72 may be passed through the communication hole 22 used as the electrolyte solution passage hole 23 (that is, the communication hole 22 through which the conductive portion 72 is passed can still be used for the electrolyte solution to flow through after the conductive portion 72 is passed through) or may be passed through the communication hole 22 that is not used as the electrolyte solution passage hole 23 (that is, the communication hole 22 through which the conductive portion 72 is passed cannot be not used for the electrolyte solution to flow through after the conductive portion 72 is passed through).

In this way, at least a portion of the conductive portion 72 is received in the first accommodating groove 211 to enable at least a portion of the conductive portion 72 to occupy space in the first accommodating groove 211, so that the occupation of space in the accommodating cavity 1A by the conductive portion 72 can be reduced, and the space in the accommodating cavity 1A is saved to receive the active substance coating portion 71 with a larger size, thereby improving the energy density of the battery cell 102, or reducing the size of the battery cell 102 while the energy density of the battery cell 102 is kept unchanged.

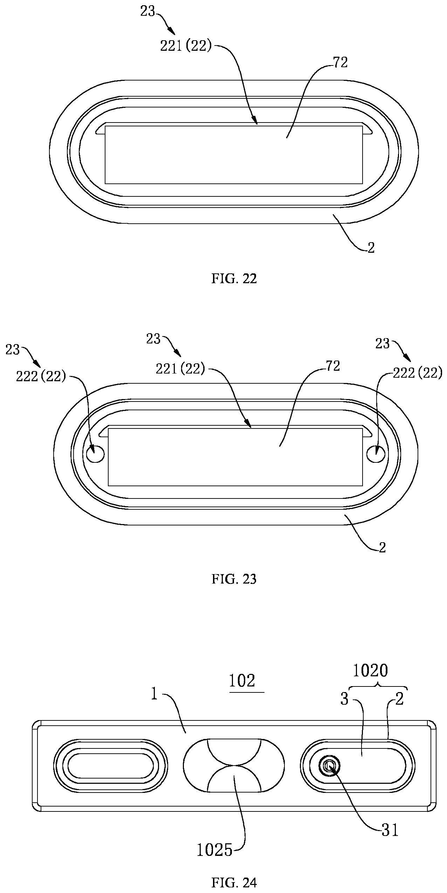

In some embodiments, with reference to FIG. 22, the communication hole 22 through which the conductive portion 72 is passed is the first communication hole 221 (that is, the conductive portion 72 is passed through at least one communication hole 22, and the communication hole 22 through which the conductive portion 72 is passed is the first communication hole 221), and at least the first communication hole 221 may be used as the electrolyte solution passage hole 23. In this way, when the terminal post body 2 is provided with the first communication hole 221 through which the conductive portion 72 is passed, regardless of whether the terminal post body 2 is provided with the second communication hole 222 through which the conductive portion 72 is not passed described below, the first communication hole 221 through which the conductive portion 72 is passed also has an electrolyte solution passage function, that is, an electrolyte solution passage spacing is further provided after the conductive portion 72 is passed through the first communication hole 221. During electrolyte solution filling, the electrolyte solution may be filled into the first accommodating groove 211 through the electrolyte solution filling hole 31, and then at least part of the electrolyte solution may flow into the accommodating cavity 1A through the first communication hole 221 through which the conductive portion 72 is passed.

In some embodiments, with reference to FIG. 23, the communication hole 22 through which the conductive portion 72 is passed is the first communication hole 221, a plurality of communication holes 22 are provided and further include at least one second communication hole 222 through which the conductive portion 72 is not passed (that is, the conductive portion 72 is not passed through at least one the communication hole 22, and the communication hole 22 through which the conductive portion 72 is not passed is the second communication hole 222), and at least the second communication hole 222 may be used as the electrolyte solution passage hole 23.

For example, when the first communication hole 221 also has an electrolyte solution passage function (that is, the first communication hole 221 further has an electrolyte solution passage spacing after the conductive portion 72 is passed through), both the first communication hole 221 and the second communication hole 222 are used as the electrolyte solution passage holes 23. During electrolyte solution filling, the electrolyte solution is filled into the first accommodating groove 211 through the electrolyte solution filling hole 31, a portion of which may then flow into the accommodating cavity 1A through the first communication hole 221 through which the conductive portion 72 is passed, and a portion of which may flow into the accommodating cavity 1A through the second communication hole 222 through which the conductive portion 72 is not passed.

For another example, when the first communication hole 221 does not have an electrolyte solution passage function (that is, the first communication hole 221 is blocked and does not allow electrolyte solution passage after the conductive portion 72 is passed through), only the second communication hole 222 is used as the electrolyte solution passage hole 23. During electrolyte solution filling, the electrolyte solution is filled into the first accommodating groove 211 through the electrolyte solution filling hole 31, and then only flows into the accommodating cavity 1A through the second communication hole 222 through which the conductive portion 72 is not passed.

In the embodiments of this application, when at least the first communication hole 221 is used as the electrolyte solution passage hole 23, the first communication hole 221 also has an electrolyte solution passage function, that is, may be used for the electrolyte solution to flow through after the conductive portion 72 is passed through the first communication hole 221. In this case, at least the first communication hole 221 may be used for the electrolyte solution to flow through, so that it may be selected as required whether to arrange the communication hole 22 (for example, the second communication hole 222) through which the conductive portion 72 is not passed, thereby reducing a total opening quantity of the communication holes 22, simplifying the structure and processing of the terminal post body 2, and improving the structural strength of the terminal post body 2.

In the embodiments of this application, when at least the second communication hole 222 is used as the electrolyte solution passage hole 23, at least the second communication hole 222 may be used for the electrolyte solution to flow through. In this case, it is not necessary to set a large hole diameter or quantity of the first communication holes 221 for the electrolyte solution to flow through the first communication hole 221, it is also not necessary to set the conductive portion 72 to a small size for the electrolyte solution to flow through the first communication hole 221, and it is only necessary to design that the size of the first communication hole 221 is slightly greater than the size of the conductive portion 72 to allow the conductive portion 72 to be passed through, so that the problem that foreign matter or the like drops into the accommodating cavity 1A through a gap between the conductive portion 72 and the first communication hole 221 can be mitigated, the problem that the size of the first communication hole 221 is excessively large and as a result a portion of the terminal post body 2 has low strength can also be mitigated, and the size of the conductive portion 72 can be relatively large, thereby improving current passage efficiency. In addition, because the electrolyte solution is not affected by the conductive portion 72 when flowing through the second communication hole 222, electrolyte solution filling efficiency can be improved, and the electrolyte solution does not easily cause contamination, corrosion, and other problems to the conductive portion 72.

For example, in Example 1 of this application, at least one communication hole 22 is provided, and the conductive portion 72 is passed through each communication hole 22. Therefore, each communication hole 22 is the first communication hole 221. In this case, at least one first communication hole 221 forms the electrolyte solution passage hole 23. After the electrolyte solution is filled into the first accommodating groove 211 through the electrolyte solution filling hole 31, and flows into the accommodating cavity 1A through the first communication hole 221 through which the conductive portion 72 is passed.

For example, in Example 2 of this application, at least two communication holes 22 are provided, at least one communication hole 22 is the first communication hole 221 through which the conductive portion 72 is passed, and at least one communication hole 22 is the second communication hole 222 through which the conductive portion 72 is not passed. In this case, both the first communication hole 221 and the second communication hole 222 form the electrolyte solution passage holes 23. After the electrolyte solution is filled into the first accommodating groove 211 through the electrolyte solution filling hole 31, a portion of which flows into the accommodating cavity 1A through the first communication hole 221 through which the conductive portion 72 is passed, and the remaining portion of which may flow into the accommodating cavity 1A through the second communication hole 222 through which the conductive portion 72 is not passed.

For example, in Example 3 of this application, at least two communication holes 22 are provided, at least one communication hole 22 is the first communication hole 221 through which the conductive portion 72 is passed, at least one communication hole 22 is the second communication hole 222 through which the conductive portion 72 is not passed, and the first communication hole 221 is blocked and does not allow electrolyte solution passage after the conductive portion 72 is passed through. In this case, only the second communication hole 222 forms the electrolyte solution passage hole 23. After being filled into the first accommodating groove 211 through the electrolyte solution filling hole 31, the electrolyte solution flows into the accommodating cavity 1A through the second communication hole 222 through which the conductive portion 72 is not passed.

In some embodiments, the first accommodating groove 211 opens away from the accommodating cavity 1A, the groove opening of the first accommodating groove 211 is located on a side of the first accommodating groove 211 that is away from the accommodating cavity 1A, the groove wall on the side of the first accommodating groove 211 that is close to the accommodating cavity 1A is a groove bottom wall, the conductive portion 72 is connected to the groove bottom wall to form the first connection portion 73, and an orthographic projection of the electrolyte solution filling hole 31 onto the groove bottom wall is staggered from the first connection portion 73. The "staggered" means no overlap.

For example, when the conductive portion 72 is welded to the groove bottom wall of the first accommodating groove 211 to form a weld mark, the electrolyte solution filling hole 31 may be disposed having an orthographic projection onto the groove bottom wall of the first accommodating groove 211 staggered from the weld mark. In this way, the electrolyte solution filled through the electrolyte solution filling hole 31 may avoid the first connection portion 73 (for example, the weld mark) between the conductive portion 72 and the terminal post body 2 as much as possible, thereby reducing contamination and corrosion caused to the first connection portion 73 (for example, the weld mark) by the electrolyte solution.

In some embodiments, with reference to FIG. 22 and FIG. 23, the terminal post body 2 is formed as an elongated structure, and the first communication hole 221 through which the conductive portion 72 is passed is formed as an elongated hole with a length greater than a width and extending from one lengthwise end to the other lengthwise end of the terminal post body 2 in a length direction. In this way, the space of the terminal post body 2 can be fully utilized, and the length of the first communication hole 221 is maximized, so that the first communication hole 221 allows the conductive portion 72 with a larger size to be passed through, and therefore facilitates an increase in the size of the conductive portion 72, thereby improving current passage efficiency. When the first communication hole 221 is used as the electrolyte solution passage hole 23, the length of the first communication hole 221 is increased, thereby further improving electrolyte solution filling efficiency.

In some embodiments, with reference to FIG. 23 and FIG. 24, when the terminal post body 2 is formed as an elongated structure and the first communication hole 221 through which the conductive portion 72 is passed is formed as the elongated hole with the length greater than the width and extending from one lengthwise end to the other lengthwise end of the terminal post body 2 in the length direction, the terminal post cover plate 3 is an elongated cover plate, that is, the terminal post cover plate 3 has a length greater than a width, and the electrolyte solution filling hole 31 is eccentrically disposed in the length direction of the terminal post cover plate 3, that is, the electrolyte solution filling hole 31 is located on a side of a central point of the terminal post cover plate 3 in the length direction of the terminal post cover plate 3. In this way, the electrolyte solution filling hole 31 can avoid the conductive portion 72 as much as possible, thereby reducing contamination and corrosion caused to the first connection portion 73 (for example, the weld mark) between the conductive portion 72 and the terminal post body 2 by the filled electrolyte solution.

In addition, the terminal post body 2 is formed as an elongated structure and the terminal post cover plate 3 is an elongated cover plate, thereby facilitating a full engagement between the terminal post body 2 and the terminal post cover plate 3, increasing the area of the terminal post cover plate 3, and facilitating the assembly and connection of the terminal post cover plate 3 and the terminal post body 2. For example, the shape of the terminal post cover plate 3 may be an oblong shape, a rectangular shape, an elliptical shape, or the like. The oblong shape may also be referred to as a racetrack shape, that is, two lengthwise ends of a rectangle are respectively spliced to two semicircles. The electrolyte solution filling hole 31 may be located in a semicircular region or a boundary between a semicircular region and the rectangular region. Certainly, this application is not limited thereto. In other embodiments of this application, for example, the electrolyte solution filling hole 31 may be provided at the center of the terminal post cover plate 3, that is, the position of the electrolyte solution filling hole 31 may be flexibly selected according to an actual case.

In some embodiments of this application, the terminal post body 2 is formed as an elongated structure, the first accommodating groove 211 is formed as an elongated groove body, that is, the first accommodating groove 211 has a length greater than a width, and the first accommodating groove 211 extends from one lengthwise end to the other lengthwise end of the terminal post body 2 in the length direction, thereby fully utilizing the space of the terminal post body 2, increasing the size of the first accommodating groove 211, and improving electrolyte solution filling efficiency.

In some embodiments of this application, the groove wall on the side of the first accommodating groove 211 that is close to the accommodating cavity 1A may be disposed as a slope that extends downward obliquely toward the electrolyte solution passage hole 23, thereby facilitating quick flowing of the electrolyte solution in the first accommodating groove 211 toward the electrolyte solution passage hole 23, thereby improving electrolyte solution filling efficiency, and in addition can mitigate the electrolyte solution accumulation problem of the first accommodating groove 211.

In some embodiments of this application, the cross-sectional shape of the terminal post body 2 may be disposed as matching the cross-sectional shape of the first accommodating groove 211, thereby fully utilizing space, maximizing the size of the first accommodating groove 211, and improving the buffering amount of the first accommodating groove 211.

In some embodiments of this application, when the first accommodating groove 211 is formed as an elongated groove body, for example, the cross-sectional shape of the first accommodating groove 211 may be disposed as an oblong shape, a rectangular shape, an elliptical shape, or the like, thereby achieving flexible arrangement. The oblong shape may also be referred to as a racetrack shape, that is, two lengthwise ends of a rectangle are respectively spliced to two semicircles.

In some embodiments, when the communication hole 22 through which the conductive portion 72 is passed is the first communication hole 221, both a plurality of first communication holes 221 and a plurality of conductive portions 72 are provided. At least one conductive portion 72 is passed through each first communication hole 221. In this case, the conductive portion 72 is passed through each of at least two communication holes 22, thereby mitigating the problem that the size of a single first communication hole 221 is large and as a result a portion of the terminal post body 2 has weak strength. In addition, if the first communication hole 221 is used as the electrolyte solution passage hole 23, the quantity of the first communication hole 221 is increased, thereby further improving electrolyte solution filling efficiency.

For example, when the first communication hole 221 is formed as an elongated hole with the length greater than the width and extending from one lengthwise end to the other lengthwise end of the terminal post body 2 in the length direction, and the plurality of first communication holes 221 may be disposed at intervals in the width direction of the terminal post body 2. In this way, the space on the terminal post body 2 can be fully utilized, thereby mitigating the problem that the size of a single first communication hole 221 is large and as a result a portion of the terminal post body 2 has weak strength. In addition, if the first communication hole 221 is used as the electrolyte solution passage hole 23, the quantity of the first communication hole 221 is increased, so that electrolyte solution filling efficiency is improved.

In some embodiments, with reference to FIG. 23, when both the first communication hole 221 and the second communication hole 222 are provided in the terminal post body 2, if the first communication hole 221 is formed as an elongated hole with the length greater than the width and extending from one lengthwise end to the other lengthwise end of the terminal post body 2 in the length direction, the second communication hole 222 may be provided in at least one end of two ends of the length of the first communication hole 221. In this way, the electrolyte solution may be relatively far away from the weld mark between the conductive portion 72 and the terminal post body 2, thereby reducing contamination or corrosion caused by the filled electrolyte solution to the weld mark. In addition, when the second communication hole 222 is provided in each of two ends of the length of the first communication hole 221, electrolyte solution filling efficiency can be improved, thereby reducing the size of each second communication hole 222 and mitigating the problem that a portion of the terminal post body 2 is weak.

Certainly, in the embodiments of this application, the shape of the first communication hole 221 and a relative position relationship between the first communication hole 221 and the second communication hole 222 are not limited to foregoing description, and may be adjusted according to an actual case.

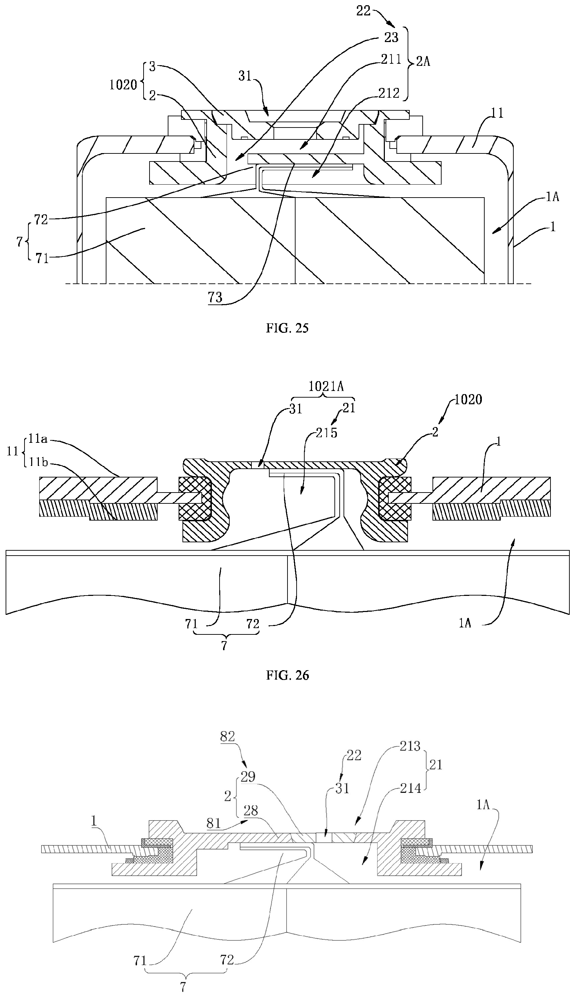

Certainly, this application is not limited thereto. In other embodiments of this application, the conductive portion 72 may not be passed through the communication hole 22 and does not extend into the first accommodating groove 211. In this case, as shown in FIG. 25, the conductive portion 72 may be connected to a wall surface on a side of the terminal post body 2 that faces the accommodating cavity 1A, so that the entire conductive portion 72 is located on the side of the first accommodating groove 211 that is close to the accommodating cavity 1A. In this case, each communication hole 22 may be used as the electrolyte solution passage hole 23. In this way, when entering the first accommodating groove 211, the electrolyte solution filled through the electrolyte solution filling hole 31 does not come into contact with the first connection portion 73 (for example, the weld mark) between the conductive portion 72 and the terminal post body 2, so that contamination and corrosion caused to the first connection portion 73 between the conductive portion 72 and the terminal post body 2 by the filled electrolyte solution can be reduced. In addition, the opening position of the electrolyte solution filling hole 31 may be flexible selected, and it is not necessary to select the position of the electrolyte solution filling hole 31 to avoid the first connection portion 73 between the conductive portion 72 and the terminal post body 2.

In some embodiments, as shown in FIG. 25, the communication channel 2A further includes a second accommodating groove 212, the second accommodating groove 212 is located on a side of the first accommodating groove 211 that is close to the accommodating cavity 1A, the second accommodating groove 212 opens toward the accommodating cavity 1A to be in communication with the accommodating cavity 1A, the communication hole 22 is in communication with the first accommodating groove 211 and the second accommodating groove 212 is formed in the terminal post body 2, one or more communication holes 22 are provided, and at least one communication hole 22 is used as the electrolyte solution passage hole 23, so that the electrolyte solution passage hole 23 penetrates a groove wall of the second accommodating groove 212 to be in communication with the first accommodating groove 211 and the second accommodating groove 212.

When an electrolyte solution needs to be filled into the accommodating cavity 1A in the battery cell 102, the electrolyte solution may be filled through the electrolyte solution filling hole 31. Because the electrolyte solution filling hole 31 is in communication with the first accommodating groove 211, the electrolyte solution that enters the electrolyte solution filling hole 31 may flow into the first accommodating groove 211, because the first accommodating groove 211 is in communication with the second accommodating groove 212 through the communication hole 22 and at least one communication hole 22 is the electrolyte solution passage hole 23 through which the electrolyte solution is allowed to be passed through, the electrolyte solution that enters the first accommodating groove 211 may flow into the second accommodating groove 212 through the electrolyte solution passage hole 23, and because the second accommodating groove 212 is in communication with the accommodating cavity 1A, the electrolyte solution that flows into the second accommodating groove 212 may enter the accommodating cavity 1A, thereby achieving electrolyte solution filling to the accommodating cavity 1A through the electrolyte solution filling hole 31, the first accommodating groove 211, the electrolyte solution passage hole 23, and the second accommodating groove 212.

In this way, the second accommodating groove 212 can have the function of buffering the electrolyte solution or gases. During the electrolyte solution filling of the battery cell 102, the second accommodating groove 212 may be used to buffer the electrolyte solution, thereby mitigating splashing, spilling, and other problems of the electrolyte solution. During the operation of the battery cell 102, the electrolyte solution generates gases after participating in reactions, so that the second accommodating groove 212 can be used to buffer the electrolyte solution or gases generated in the accommodating cavity 1A, to mitigate the problem of spilling the electrolyte solution or excessively large gas pressure in the accommodating cavity 1A, thereby improving the reliability of the battery cell 102.

In some embodiments, as shown in FIG. 19, when the second accommodating groove 212 is provided in the terminal post body 2, the conductive portion 72 may be passed through at least one communication hole 22 and extend into the first accommodating groove 211, and the hole through which the conductive portion 72 is passed is the first communication hole 221. In this case, the first communication hole 221 may be used as the electrolyte solution passage hole 23, and the first communication hole 221 may not be used as the electrolyte solution passage hole 23. In addition, the communication hole 22 that communicates the first accommodating groove 211 and the second accommodating groove 212 may be disposed as further including at least one second communication hole 222 through which the conductive portion 72 is not passed, and the second communication hole 222 may be used as the electrolyte solution passage hole 23. For the above, refer to the description of the foregoing embodiment without the second accommodating groove 212. Details are not described herein.

For example, when the second accommodating groove 212 is provided in the terminal post body 2, as shown in FIG. 25, the conductive portion 72 may alternatively not be passed through the communication hole 22 to be fully located on the side of the first accommodating groove 211 that is close to the accommodating cavity 1A. For example, the conductive portion 72 is connected to the wall surface on the side of the terminal post body 2 that faces the accommodating cavity 1A, to enable the conductive portion 72 to be connected to a groove wall (for example, a groove top wall of the second accommodating groove 212) on a side of the second accommodating groove 212 that is away from the accommodating cavity 1A. In this case, at least a portion of the conductive portion 72 may be received in the second accommodating groove 212, so that the occupation of space in the accommodating cavity 1A by the conductive portion 72 can be reduced, the space in the accommodating cavity 1A is saved to receive the active substance coating portion 71 with a larger size, thereby improving the energy density of the battery cell 102, or reducing the size of the battery cell 102 while the energy density of the battery cell 102 remains unchanged.

In addition, as shown in FIG. 25, when the second accommodating groove 212 is provided in the terminal post body 2 and the conductive portion 72 is connected to the wall surface on the side of the terminal post body 2 that faces the accommodating cavity 1A, each communication hole 22 may be used as the electrolyte solution passage hole 23. In this way, when entering the first accommodating groove 211, the electrolyte solution filled through the electrolyte solution filling hole 31 does not come into contact with the first connection portion 73 (for example, the weld mark) between the conductive portion 72 and the terminal post body 2 in the second accommodating groove 212, so that contamination and corrosion caused to the first connection portion 73 between the conductive portion 72 and the terminal post body 2 by the filled electrolyte solution can be reduced. Therefore, the opening position of the electrolyte solution filling hole 31 may be flexible selected, and it is not necessary to select the position of the electrolyte solution filling hole 31 to avoid the first connection portion 73 between the conductive portion 72 and the terminal post body 2.

In some embodiments of this application, the electrolyte solution filling hole 31 is disposed opposite to the electrolyte solution passage hole 23. That is, an orthographic projection is performed along the axial direction of the electrolyte solution filling hole 31, and an orthographic projection of the electrolyte solution passage hole 23 overlaps at least a portion of an orthographic projection of the electrolyte solution filling hole 31. In this way, the electrolyte solution filled through the electrolyte solution filling hole 31 may directly flow toward the electrolyte solution passage hole 23 disposed opposite to the electrolyte solution filling hole 31, so that electrolyte solution filling can be achieved more quickly and more efficiently, thereby improving electrolyte solution filling efficiency. It should be noted that, neither of the quantity of the electrolyte solution filling holes 31 and the quantity of the electrolyte solution passage holes 23 is limited. At least one electrolyte solution filling hole 31 may be provided, and at least one electrolyte solution passage hole 23 may also be provided, provided that the at least one electrolyte solution filling hole 31 is disposed opposite at least one electrolyte solution passage hole 23. In addition, it should be noted that, the shape of the electrolyte solution filling hole 31 and the shape of the electrolyte solution passage hole 23 may be the same or different, and may both be flexibly selected according to an actual case.

For example, when the communication hole 22 does not include the second communication hole 222 and includes only the first communication hole 221, the first communication hole 221 is used as the electrolyte solution passage hole 23. In this case, the electrolyte solution filling hole 31 may be disposed opposite to the first communication hole 221, that is, an orthographic projection is performed along the axial direction of the electrolyte solution filling hole 31, and an orthographic projection of the first communication hole 221 overlaps at least a portion of the orthographic projection of the electrolyte solution filling hole 31. In this way, the electrolyte solution filled through the electrolyte solution filling hole 31 may directly flow toward the first communication hole 221 disposed opposite to the electrolyte solution filling hole 31, so that electrolyte solution filling can be achieved quickly and efficiently, thereby improving electrolyte solution filling efficiency.

For example, when both the first communication hole 221 and the second communication hole 222 are provided in the terminal post body 2 and at least the second communication hole 222 is used as the electrolyte solution passage hole 23, the second communication hole 222 may be disposed opposite to the electrolyte solution filling hole 31, that is, an orthographic projection is performed along the axial direction of the electrolyte solution filling hole 31, and an orthographic projection of the second communication hole 222 overlaps with at least a portion of the orthographic projection of the electrolyte solution filling hole 31. In this way, the electrolyte solution filled through the electrolyte solution filling hole 31 may directly flow toward the second communication hole 222 disposed opposite to the electrolyte solution filling hole 31, so that electrolyte solution filling can be achieved quickly and efficiently, thereby improving electrolyte solution filling efficiency.

Further, the first communication hole 221 and the electrolyte solution filling hole 31 may be staggered, that is, an orthographic projection is performed along the axial direction of the electrolyte solution filling hole 31, and the orthographic projection of the first communication hole 221 does not overlap with the orthographic projection of the electrolyte solution filling hole 31. In this way, the electrolyte solution filled through the electrolyte solution filling hole 31 can avoid the direction of the first communication hole 221, thereby reducing the risk that the electrolyte solution contaminates the first connection portion 73 between the conductive portion 72 that is passed through the first communication hole 221 and the terminal post body 2. However, this is not limited thereto. In some embodiments of this application, the electrolyte solution filling hole 31 may be disposed as required to be opposite to both the second communication hole 222 and the first communication hole 221.

In addition, when the conductive portion 72 is connected to the wall surface on the side of the terminal post body 2 that faces the accommodating cavity 1A (regardless of whether the communication channel 2A includes the second accommodating groove 212), each communication hole 22 may be used as the electrolyte solution passage hole 23. In some embodiments, the electrolyte solution filling hole 31 may be disposed to be opposite to at least one communication hole 22, and each communication hole 22 is staggered from the first connection portion 73 (for example, the weld mark) between the conductive portion 72 and the terminal post body 2, that is, an orthographic projection is performed along the axial direction of the electrolyte solution filling hole 31, an orthographic projection of each communication hole 22 does not overlap with an orthographic projection of the first connection portion 73, thereby reducing contamination and corrosion of the weld mark by the electrolyte solution while improving electrolyte solution filling efficiency.

The embodiments of this application are not limited to the electrolyte solution filling hole 31 being disposed in the terminal post cover plate 3. For example, in some other embodiments of this application, the electrolyte solution filling hole 31 may be disposed in the terminal post body 2. For example, with reference to FIG. 26, the terminal post structure 1020 includes the terminal post body 2, the terminal post body 2 is mounted on the housing 1, the flow channel 1021A further includes the accommodating groove 21, both the accommodating groove 21 and the electrolyte solution filling hole are formed in the terminal post body 2, and the electrolyte solution filling hole 31 penetrates a groove wall on a side of the accommodating groove 21 that is away from a groove opening of the accommodating groove 21 (for example, the groove opening of the accommodating groove 21 opens upward, the electrolyte solution filling hole 31 penetrates the bottom wall of the accommodating groove 21, or for another example, the groove opening of the accommodating groove 21 opens downward, the electrolyte solution filling hole 31 penetrates a top wall of the accommodating groove 21), so that the electrolyte solution filling hole 31 is in communication with the accommodating groove 21, and the sealing structure 1022 is engaged with the terminal post body 2 to open or seal the electrolyte solution filling hole 31.

It should be noted that, an opening direction of the groove opening of the accommodating groove 21 is not limited. For example, if the groove opening of the accommodating groove 21 opens toward an outer side (that is, away from the accommodating cavity 1A), the accommodating groove 21 may be in communication with the outside of the housing 1. In this case, the electrolyte solution filling hole 31 may penetrate a groove wall on a side of the accommodating groove 21 that is close to an inner side (that is, close to the accommodating cavity 1A) to be in communication with the inside of the housing 1, so that the accommodating groove 21 in communication upstream the electrolyte solution filling hole 31, and the electrolyte solution may be first filled into the accommodating groove 21, and then enters the accommodating cavity 1A through the electrolyte solution filling hole 31. For another example, if the groove opening of the accommodating groove 21 opens toward an inner side (that is, close to the accommodating cavity 1A), the accommodating groove 21 may be in communication with the inside of the housing 1. In this case, the electrolyte solution filling hole 31 may penetrate a groove wall on a side of the accommodating groove 21 that is close to an outer side (that is, away from the accommodating cavity 1A) to be in communication with the outside of the housing 1, so that the electrolyte solution filling hole 31 is in communication upstream the accommodating groove 21, and the electrolyte solution may be first filled through the electrolyte solution filling hole 31, then enter the accommodating groove 21, and subsequently enter the accommodating cavity 1A.

In this way, the electrolyte solution filling hole 31 is provided in the terminal post body 2, so that the terminal post cover plate 3 can be omitted, or the electrolyte solution filling hole 31 opened in the terminal post cover plate 3 can be omitted, thereby simplifying the structure or simplifying processing. In addition, because the terminal post body 2 is provided with the accommodating groove 21 in communication with the electrolyte solution filling hole 31, while electrolyte solution filling requirements are met, the terminal post body 2 has large buffer space, so that the function of buffering the electrolyte solution can be achieved to some extent. During the manufacturing or operation and use of the battery cell 102, the possibility of splashing or spilling of the electrolyte solution is reduced.

In some embodiments, as shown in FIG. 27, the terminal post body 2 includes a body portion 28 and a second base seat portion 29, the body portion 28 is mounted on the housing 1, the second base seat portion 29 is mounted at the body portion 28, at least a portion of the electrolyte solution filling hole 31 is formed on the second base seat portion 29, and the sealing structure 1022 is engaged with the second base seat portion 29.

It may be understood that, in this embodiment, when the mounting portion 8 includes the base portion 81 and the base seat 82 mounted on the base portion 81 and the sealing structure 1022 is engaged with the base seat 82 and is configured to open or seal the electrolyte solution filling hole 31, if the terminal post structure 1020 is the mounting portion 8, the body portion 28 is used as the base portion 81, and the second base seat portion 29 is used as the base seat 82.

For example, when the sealing structure 1022 is detachably engaged with the housing assembly 1021, the sealing structure 1022 may be detachably engaged with the second base seat portion 29. For example, when the sealing structure 1022 includes the first structural member 61 in the foregoing embodiments, the first structural member 61 may be disposed to form locking and unlocking engagements with the second base seat portion 29. For example, when the stopper portion 10211 and the avoidance hole 10212 that are located around the flow channel 1021A and are alternately disposed in the foregoing embodiments are formed on the housing assembly 1021, both the stopper portion 10211 and the avoidance hole 10212 may be processed on the second base seat portion 29, thereby reducing the processing difficulty of the body portion 28. For example, in some embodiments, the body portion 28 may include the outer stop portion 271 positioned outside the housing 1 for limiting, the inner stop portion 272 positioned inside the housing 1 for limiting, and the like in the foregoing embodiments.

It should be noted that, an assembly manner of the body portion 28 and the second base seat portion 29 is not limited. For example, a manner may be selected from various manners such as welding, bonding, clamping, and an interference fit. For example, the body portion 28 and the second base seat portion 29 are made of the same metal material and welded together, so that the connection reliability of the two can be improved, thereby improving the sealing performance at the connection position of the two. In addition, the structural reliability of the second base seat portion 29 is high, and the engagement stability of the sealing structure 1022 is high. In addition, when the body portion 28 and the second base seat portion 29 are welded using the same material, in a process of filling the electrolyte solution, even if the electrolyte solution comes into contact with a welding position between the body portion 28 and the second base seat portion 29, the position is not prone to contamination and corrosion, thereby effectively ensuring the connection reliability of the body portion 28 and the second base seat portion 29.

In some embodiments, the body portion 28 is provided with the second mounting groove that opens away from the accommodating cavity 1A, and at least a portion of the second base seat portion 29 is embedded in the second mounting groove, thereby improving the assembly efficiency of the second base seat portion 29 and the body portion 28 and the connection stability of the second base seat portion 29 and the body portion 28. In addition, the occupation of space outside the body portion 28 by the second base seat portion 29 can be reduced.

For example, the terminal post body 2 may alternatively not include the second base seat portion 29 and the body portion 28. In this case, the electrolyte solution filling hole 31, the stopper portion 10211, the avoidance hole 10212, and the like may be directly processed on the terminal post body 2 without the second base seat portion 29 for an engagement with the sealing structure 1022, thereby omitting the second base seat portion 29, reducing parts, and improving assembly efficiency.

In some embodiments of this application, as shown in FIG. 27, the accommodating groove 21 includes a third accommodating groove 213 with a groove opening facing away from the accommodating cavity 1A, and the electrolyte solution filling hole 31 penetrates a groove wall on a side of the third accommodating groove 213 that is close to the accommodating cavity 1A. In this way, when the electrolyte solution is filled into the battery cell 102, the electrolyte solution is first filled into the third accommodating groove 213 through a groove opening of the third accommodating groove 213, and the electrolyte solution that enters the third accommodating groove 213 flows toward the accommodating cavity 1A via the electrolyte solution filling hole 31.

In this way, the third accommodating groove 213 can buffer the electrolyte solution, to mitigate splashing, spilling, and other problems of the electrolyte solution. In addition, a side wall (that is, a groove wall that extends from the groove opening of the third accommodating groove 213 toward the accommodating cavity 1A) of the third accommodating groove 213 can block to some extent the electrolyte solution from splashing, thereby reducing contamination caused to the outside by the electrolyte solution, and facilitating quick electrolyte solution filling. In addition, an electrolyte solution filling nozzle may be flexibly disposed. For example, the outlet of the electrolyte solution filling nozzle may be made bigger. For example, the outlet of the electrolyte solution filling nozzle is disposed to match the groove opening of the third accommodating groove 213, thereby further improving electrolyte solution filling efficiency. Alternatively, in some optional embodiments, the electrolyte solution filling nozzle may be directly aligned with the electrolyte solution filling hole 31 to perform electrolyte solution filling. This is not limited herein.

In some embodiments of this application, as shown in FIG. 27, the accommodating groove 21 further includes a fourth accommodating groove 214 with a groove opening facing the accommodating cavity 1A, the fourth accommodating groove 214 is located on the side of the third accommodating groove 213 that is close to the accommodating cavity 1A, and the electrolyte solution filling hole 31 penetrates a groove wall on a side of the fourth accommodating groove 214 that is away from the accommodating cavity 1A to communicate the third accommodating groove 213 with the fourth accommodating groove 214. In this way, when the electrolyte solution is filled into the battery cell 102, the electrolyte solution is first filled into the third accommodating groove 213 through a groove opening of the third accommodating groove 213, and the electrolyte solution that enters the third accommodating groove 213 enters the fourth accommodating groove 214 through the electrolyte solution filling hole 31, and then flows toward the accommodating cavity 1A through an opening of the fourth accommodating groove 214.

In this way, the fourth accommodating groove 214 is disposed, so that the height of the electrolyte solution filling hole 31 during electrolyte solution filling can be increased, thereby increasing the total filling amount of the electrolyte solution, and extending the cycle life of the battery cell 102. In addition, the sealing structure 1022 disposed at the electrolyte solution filling hole 31 is not prone to interference or electrical conduction with the battery cell assembly 7 below the terminal post body 2, so that it is not necessary to thicken the lower plastic structure below the terminal post body 2, thereby facilitating the thinning of the lower plastic structure, and reducing material costs. In addition, the occupation of space in the accommodating cavity 1A by the lower plastic structure is reduced, thereby enhancing the energy density of the battery cell 102. In addition, gases generated in the accommodating cavity 1A or the electrolyte solution that tends to spill can enter the fourth accommodating groove 214, and the fourth accommodating groove 214 can achieve a buffering function, thereby improving the operational reliability of the battery cell 102.

In some embodiments of this application, cross-sectional shapes of the third accommodating groove 213 and/or the fourth accommodating groove 214 match the cross-sectional shape of the terminal post body 2. In this way, the space of the terminal post body 2 can be fully utilized, so that the sizes of the third accommodating groove 213 and/or the fourth accommodating groove 214 is maximized, thereby improving the buffering, receiving, and other functions of the third accommodating groove 213 and/or the fourth accommodating groove 214.

In some embodiments of this application, the battery cell 102 includes the battery cell assembly 7. The battery cell assembly 7 includes the active substance coating portion 71 received in the accommodating cavity 1A and the conductive portion 72 connected to the active substance coating portion 71. For example, the conductive portion 72 may be connected to the terminal post body 2 to form an electrical connection, thereby achieving an output of the battery cell assembly 7 from an electrode at the terminal post body 2. For example, the conductive portion 72 may be connected to the terminal post body 2 through welding or the like. It may be understood that, the active substance coating portion 71 may include a current collector coated with an active substance layer, and the conductive portion 72 may include only a tab portion, may include the tab portion and an adapter tab electrically connected to the tab portion, or the like. This is not limited herein.

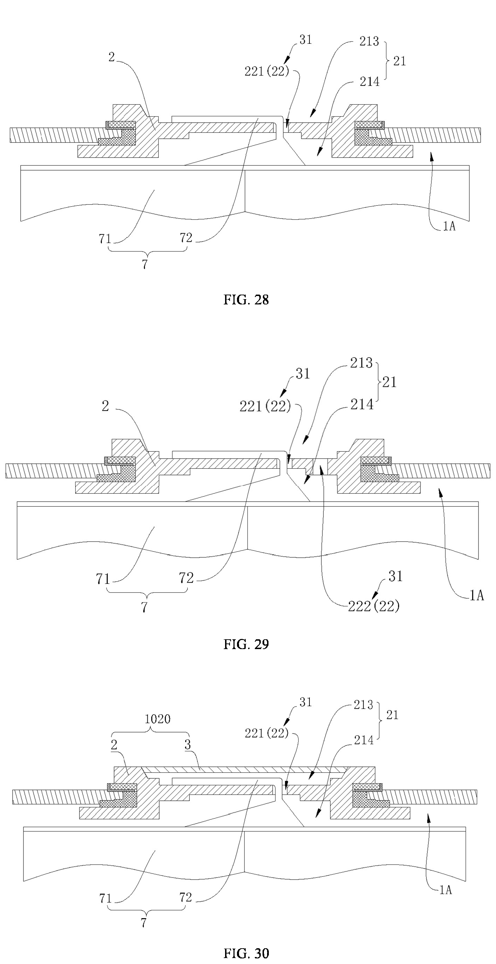

In some embodiments, as shown in FIG. 28, a communication hole 22 for communicating the third accommodating groove 213 and the accommodating cavity 1A is formed in the terminal post body 2, one or more communication holes 22 are provided, at least one communication hole 22 is used as the electrolyte solution filling hole 31, and the conductive portion 72 is passed through the at least one communication hole 22 to be at least partially received in the third accommodating groove 213. The conductive portion 72 may be passed through the communication hole 22 used as the electrolyte solution filling hole 31 (that is, the communication hole 22 through which the conductive portion 72 is passed can still be used for the electrolyte solution to flow through after the conductive portion 72 is passed through) or may be passed through the communication hole 22 that is not used as the electrolyte solution filling hole 31 (that is, the communication hole 22 through which the conductive portion 72 is passed cannot be not used for the electrolyte solution to flow through after the conductive portion 72 is passed through).

In this way, at least a portion of the conductive portion 72 is received in the third accommodating groove 213 to enable at least a portion of the conductive portion 72 to occupy space in the third accommodating groove 213, so that the occupation of space in the accommodating cavity 1A by the conductive portion 72 can be reduced, and the space in the accommodating cavity 1A is saved to receive the active substance coating portion 71 with a larger size, thereby improving the energy density of the battery cell 102, or reducing the size of the battery cell 102 while the energy density of the battery cell 102 is kept unchanged.

In some embodiments, with reference to FIG. 28, the communication hole 22 through which the conductive portion 72 is passed is the first communication hole 221 (that is, the conductive portion 72 is passed through at least one communication hole 22, and the communication hole 22 through which the conductive portion 72 is passed is the first communication hole 221), and at least the first communication hole 221 may be used as the electrolyte solution filling hole 31. In this way, when the terminal post body 2 is provided with the first communication hole 221 through which the conductive portion 72 is passed, regardless of whether the terminal post body 2 is provided with the second communication hole 222 through which the conductive portion 72 is not passed described below, the first communication hole 221 through which the conductive portion 72 is passed also has an electrolyte solution passage function, that is, an electrolyte solution passage spacing is further provided after the conductive portion 72 is passed through the first communication hole 221. During electrolyte solution filling, after the electrolyte solution is filled into the third accommodating groove 213, and at least part of the electrolyte solution may flow into the accommodating cavity 1A through the first communication hole 221 through which the conductive portion 72 is passed. In this case, at least the first communication hole 221 may be used for the electrolyte solution to flow through, so that it may be selected as required whether to arrange the communication hole 22 (for example, the second communication hole 222) through which the conductive portion 72 is not passed, thereby reducing a total opening quantity of the communication holes 22, simplifying the structure and processing of the terminal post body 2, and improving the structural strength of the terminal post body 2.

In some embodiments, with reference to FIG. 29, the communication hole 22 through which the conductive portion 72 is passed is the first communication hole 221, a plurality of communication holes 22 are provided and further include at least one second communication hole 222 through which the conductive portion 72 is not passed (that is, the conductive portion 72 is not passed through at least one the communication hole 22, and the communication hole 22 through which the conductive portion 72 is not passed is the second communication hole 222), and at least the second communication hole 222 may be used as the electrolyte solution filling hole 31. In this case, it is not necessary to set a large hole diameter or quantity of the first communication holes 221 for the electrolyte solution to flow through the first communication hole 221, it is also not necessary to set the conductive portion 72 to a small size for the electrolyte solution to flow through the first communication hole 221, and it is only necessary to design that the size of the first communication hole 221 is slightly greater than the size of the conductive portion 72 to allow the conductive portion 72 to be passed through, so that the problem that foreign matter or the like drops into the accommodating cavity 1A through a gap between the conductive portion 72 and the first communication hole 221 can be mitigated, the problem that the size of the first communication hole 221 is excessively large and as a result a portion of the terminal post body 2 has low strength can also be mitigated, and the size of the conductive portion 72 can be relatively large, thereby improving current passage efficiency. In addition, because the electrolyte solution is not affected by the conductive portion 72 when flowing through the second communication hole 222, electrolyte solution filling efficiency can be improved, and the electrolyte solution does not easily cause contamination, corrosion, and other problems to the conductive portion 72.

Certainly, this application is not limited thereto. In other embodiments of this application, as shown in FIG. 27, the conductive portion 72 may not be passed through the communication hole 22 and does not extend into the third accommodating groove 213. In this case, the conductive portion 72 may be connected to a wall surface on a side of the terminal post body 2 that faces the accommodating cavity 1A, so that the entire conductive portion 72 is located on the side of the third accommodating groove 213 that is close to the accommodating cavity 1A. In this case, each communication hole 22 may be used as the electrolyte solution filling hole 31. In this way, when entering the third accommodating groove 213, the electrolyte solution does not come into contact with the connection portion (for example, the weld mark) formed by connecting the conductive portion 72 and the terminal post body 2, so that contamination and corrosion caused to the connection portion between the conductive portion 72 and the terminal post body 2 by the filled electrolyte solution can be reduced.

For example, when the fourth accommodating groove 214 is provided in the terminal post body 2, as shown in FIG. 27, the conductive portion 72 may alternatively not be passed through the communication hole 22 to be fully located on the side of the third accommodating groove 213 that is close to the accommodating cavity 1A. For example, the conductive portion 72 is connected to the wall surface on the side of the terminal post body 2 that faces the accommodating cavity 1A, to enable the conductive portion 72 to be connected to a groove wall (for example, a groove top wall of the fourth accommodating groove 214) on a side of the fourth accommodating groove 214 that is away from the accommodating cavity 1A. In this case, at least a portion of the conductive portion 72 may be received in the fourth accommodating groove 214, so that the occupation of space in the accommodating cavity 1A by the conductive portion 72 can be reduced, the space in the accommodating cavity 1A is saved to receive the active substance coating portion 71 with a larger size, thereby improving the energy density of the battery cell 102, or reducing the size of the battery cell 102 while the energy density of the battery cell 102 remains unchanged.

In addition, when the fourth accommodating groove 214 is provided in the terminal post body 2 and the conductive portion 72 is connected to the wall surface on the side of the terminal post body 2 that faces the accommodating cavity 1A, each communication hole 22 may be used as the electrolyte solution filling hole 31. In this way, when entering the third accommodating groove 213, the electrolyte solution does not come into contact with the connection portion (for example, the weld mark) formed between the conductive portion 72 in the fourth accommodating groove 214 and the terminal post body 2, so that contamination and corrosion caused to the connection portion between the conductive portion 72 and the terminal post body 2 by the filled electrolyte solution can be reduced.

In some embodiments, as shown in FIG. 30, the terminal post structure 1020 further includes the terminal post cover plate 3, and the terminal post cover plate 3 covers the terminal post body 2 and seals the groove opening of the third accommodating groove 213. In this way, after electrolyte solution filling, the terminal post cover plate 3 may be used to cover the terminal post body 2, and the terminal post cover plate 3 is used to seal the groove opening of the third accommodating groove 213 in the terminal post body 2, so that the third accommodating groove 213 is in a sealed state, to prevent the electrolyte solution from spilling and prevent an external foreign object from entering the battery cell 102, thereby improving the reliability of the battery cell 102. It should be noted that, the terminal post cover plate 3 is a non-perforated cover plate, thereby ensuring the reliability of sealing. In addition, it needs to be noted that, the material of the terminal post cover plate 3 is not limited, and may be a single-material member, for example, an aluminum cover plate, or may be a composite material member, for example, a copper-aluminum composite cover plate. Details are not described herein.

In addition, because the electrolyte solution filling hole 31 penetrates a groove wall on the side of the third accommodating groove 213 that is close to the accommodating cavity 1A. In this case, the third accommodating groove 213 is equivalent to a recessed structure to enable the electrolyte solution filling hole 31 to be away from the groove opening of the third accommodating groove 213, and the electrolyte solution filling hole 31 is relatively far away from a connection between the terminal post cover plate 3 and the terminal post body 2. When the electrolyte solution spills from the electrolyte solution filling hole 31, the spilled electrolyte solution does not easily come into contact with a connection position (for example, welding or bonding) between the terminal post body 2 and the terminal post cover plate 3, so that corrosion, contamination, and the like at the connection position can be reduced.

In some embodiments of this application, the terminal post body 2 may alternatively not be provided with the third accommodating groove 213, for example, with reference to FIG. 26, the accommodating groove 21 may include a fifth accommodating groove 215 with a groove opening facing the accommodating cavity 1A, and the electrolyte solution filling hole 31 penetrates a groove wall on a side of the fifth accommodating groove 215 that is away from the accommodating cavity 1A. In this way, when the electrolyte solution is filled into the battery cell 102, the electrolyte solution enters the fifth accommodating groove 215 through the electrolyte solution filling hole 31, and then flows toward the accommodating cavity 1A through a groove opening of the fifth accommodating groove 215.

In this way, the fifth accommodating groove 215 can buffer the electrolyte solution, and the side wall of the fifth accommodating groove 215 can block the electrolyte solution from splashing, thereby facilitating quick electrolyte solution filling. In addition, the height of the electrolyte solution filling hole 31 can be increased. When the electrolyte solution filling hole 31 is blocked, gases generated in the accommodating cavity 1A or the electrolyte solution can enter the fifth accommodating groove 215, and the fifth accommodating groove 215 can achieve a buffering function, thereby improving the operational reliability of the battery cell 102. In addition, because the height of the electrolyte solution filling hole 31 is high, the sealing structure 1022 disposed at the electrolyte solution filling hole 31 is not prone to interference or electrical conduction with the battery cell assembly 7 below the terminal post body 2, so that it is not necessary to thicken the lower plastic structure below the terminal post body 2, thereby facilitating the thinning of the lower plastic structure, and reducing material costs. In addition, the occupation of space in the accommodating cavity 1A by the lower plastic structure is reduced, thereby enhancing the energy density of the battery cell 102.

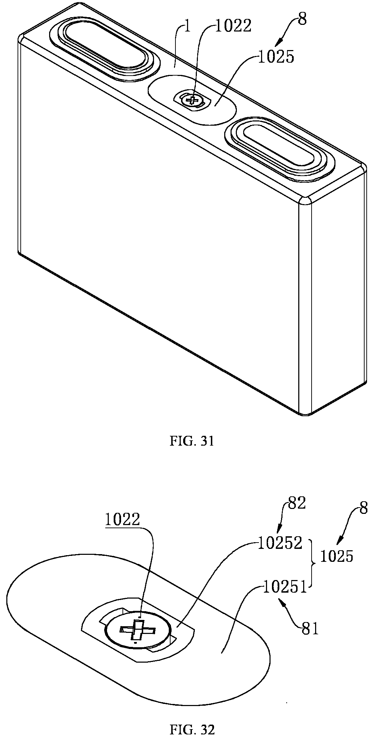

It should be noted that, the mounting portion 8 according to the embodiments of this application is not limited to the terminal post structure 1020. Therefore, the electrolyte solution filling hole 31 is also not limited to being only processed on the terminal post structure 1020. For example, in some embodiments, as shown in FIG. 31, the housing assembly 1021 includes a housing 1 and a pressure relief structure 1025, the accommodating cavity 1A is defined by the housing 1, the pressure relief structure 1025 is disposed in the housing 1, a weak region is provided on the pressure relief structure 1025 and/or at a connection between the pressure relief structure 1025 and the housing 1, the pressure relief structure 1025 is the mounting portion 8, the flow channel 1021A is disposed at the pressure relief structure 1025 (for example, disposed at the mounting portion 8) and includes the electrolyte solution filling hole 31, and the sealing structure 1022 is engaged with the pressure relief structure 1025 (for example, engaged with the mounting portion 8) and is configured to open or seal the electrolyte solution filling hole 31.

For example, the weak region may be a thinned region, a notch, or the like. When the pressure in the accommodating cavity 1A exceeds a threshold, the weak region may be preferentially ruptured, to enable the housing 1 to perform directional pressure relief, thereby improving the reliability of the battery cell 102. It should be noted that, the pressure relief structure 1025 and the housing 1 may be integrally formed, or may be separately formed and then assembled and connected. This is not limited herein.

In the foregoing technical solution, the electrolyte solution filling hole 31 is provided in the pressure relief structure 1025, so that the electrolyte solution filling hole 31 can be kept from separately occupying space on the housing 1. When the terminal post structure 1020 is disposed on the housing 1, large space may be saved for the terminal post structure 1020 to be disposed, thereby increasing the size of the terminal post structure 1020. In addition, the housing 1 does not need to be specially processed to open the electrolyte solution filling hole 31 in the housing 1, thereby reducing the structural complexity and processing difficulty of the housing 1.

For example, in some embodiments, as shown in FIG. 32, the pressure relief structure 1025 includes a pressure relief body 10251 and a third base seat portion 10252, the pressure relief body 10251 covers the terminal post body 2, the third base seat portion 10252 is mounted at the pressure relief body 10251, at least a portion of the electrolyte solution filling hole 31 is formed on the third base seat portion 10252, and the sealing structure 1022 is engaged with the third base seat portion 10252. It may be understood that, in this embodiment, when the mounting portion 8 includes the base portion 81 and the base seat 82 mounted on the base portion 81 and the sealing structure 1022 is engaged with the base seat 82 and is configured to open or seal the electrolyte solution filling hole 31, if the pressure relief structure 1025 is the mounting portion 8, the pressure relief body 10251 is used as the base portion 81, and the third base seat portion 10252 is used as the base seat 82.

For example, when the sealing structure 1022 is detachably engaged with the housing assembly 1021, the sealing structure 1022 may be detachably engaged with the third base seat portion 10252. For example, when the sealing structure 1022 includes the first structural member 61 in the foregoing embodiments, the first structural member 61 may be disposed to form locking and unlocking engagements with the third base seat portion 10252. For example, when the stopper portion 10211 and the avoidance hole 10212 that are located around the flow channel 1021A and are alternately disposed in the foregoing embodiments are formed on the housing assembly 1021, both the stopper portion 10211 and the avoidance hole 10212 may be processed on the third base seat portion 10252, thereby reducing the processing difficulty of the pressure relief body 10251.

It should be noted that, an assembly manner of the pressure relief body 10251 and the third base seat portion 10252 is not limited. For example, a manner may be selected from various manners such as welding, bonding, clamping, and an interference fit. For example, the pressure relief body 10251 and the third base seat portion 10252 are made of the same metal material and welded together, so that the connection reliability of the two can be improved, thereby improving the sealing performance at the connection position of the two. In addition, the structural reliability of the third base seat portion 10252 is high, and the engagement stability of the sealing structure 1022 is high. In addition, when the pressure relief body 10251 and the third base seat portion 10252 are welded using the same material, in a process of filling the electrolyte solution, even if the electrolyte solution comes into contact with a welding position between the pressure relief body 10251 and the third base seat portion 10252, the position is not prone to contamination and corrosion, thereby effectively ensuring the connection reliability of the pressure relief body 10251 and the third base seat portion 10252.

In some embodiments, the pressure relief body 10251 is provided with the third mounting groove that opens away from the accommodating cavity 1A, and at least a portion of the third base seat portion 10252 is embedded in the third mounting groove, thereby improving the assembly efficiency of the third base seat portion 10252 and the pressure relief body 10251 and the connection stability of the third base seat portion 10252 and the pressure relief body 10251. In addition, the occupation of space outside the pressure relief body 10251 by the third base seat portion 10252 can be reduced.

For example, the pressure relief structure 1025 may alternatively not include the third base seat portion 10252 and the pressure relief body 10251. The electrolyte solution filling hole 31, the stopper portion 10211, the avoidance hole 10212, and the like are directly processed on the pressure relief structure 1025 without the third base seat portion 10252 for an engagement with the sealing structure 1022, thereby omitting the third base seat portion 10252, reducing parts, and improving assembly efficiency.

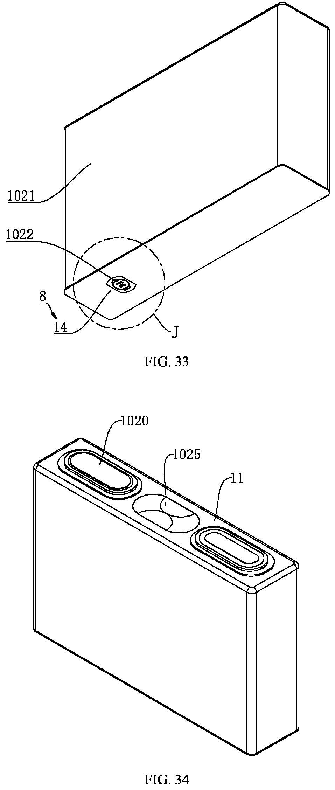

It should be noted that, the mounting portion 8 according to the embodiments of this application is also not limited to the pressure relief structure 1025. Therefore, the electrolyte solution filling hole 31 is also not limited to being only processed on the pressure relief structure 1025. For example, in some embodiments, as shown in FIG. 33 to FIG. 35, the housing assembly 1021 includes a housing 1, the accommodating cavity 1A is defined by the housing 1, a terminal post structure 1020 and a pressure relief structure 1025 are disposed on the housing 1, the housing 1 includes a mounting housing wall 14 spaced apart from the terminal post structure 1020 and the pressure relief structure 1025, the flow channel 1021A is disposed at the mounting housing wall 14 (for example, disposed at the mounting portion 8) and includes the electrolyte solution filling hole 31, and the sealing structure 1022 is engaged with the mounting housing wall 14 (for example, engaged with the mounting portion 8) and is configured to open or seal the electrolyte solution filling hole 31.

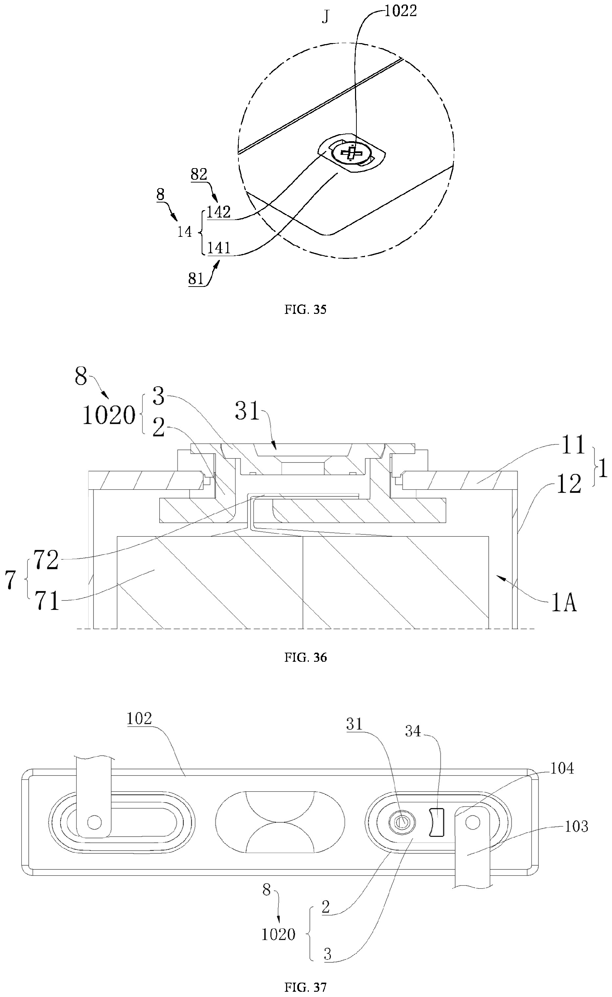

For example, in some embodiments, as shown in FIG. 35, the mounting housing wall 14 includes a housing wall portion 141 and a fourth base seat portion 142, the fourth base seat portion 142 is mounted on the housing wall portion 141, at least a portion of the electrolyte solution filling hole 31 is formed in the fourth base seat portion 142, and the sealing structure 1022 is engaged with the fourth base seat portion 142. It may be understood that, in this embodiment, when the mounting portion 8 includes the base portion 81 and the base seat 82 mounted on the base portion 81 and the sealing structure 1022 is engaged with the base seat 82 and is configured to open or seal the electrolyte solution filling hole 31, if the mounting housing wall 14 is the mounting portion 8, the housing wall portion 141 is used as the base portion 81, and the fourth base seat portion 142 is used as the base seat 82.

For example, when the sealing structure 1022 is detachably engaged with the housing assembly 1021, the sealing structure 1022 may be detachably engaged with the fourth base seat portion 142. For example, when the sealing structure 1022 includes the first structural member 61 in the foregoing embodiments, the first structural member 61 may be disposed to form locking and unlocking engagements with the fourth base seat portion 142. For example, when the stopper portion 10211 and the avoidance hole 10212 that are located around the flow channel 1021A and are alternately disposed in the foregoing embodiments are formed on the housing assembly 1021, both the stopper portion 10211 and the avoidance hole 10212 may be processed on the fourth base seat portion 142, thereby reducing the processing difficulty of the housing wall portion 141.

It should be noted that, an assembly manner of the housing wall portion 141 and the fourth base seat portion 142 is not limited. For example, a manner may be selected from various manners such as welding, bonding, clamping, and an interference fit. For example, the housing wall portion 141 and the fourth base seat portion 142 are made of the same metal material and welded together, so that the connection reliability of the two can be improved, thereby improving the sealing performance at the connection position of the two. In addition, the structural reliability of the fourth base seat portion 142 is high, and the engagement stability of the sealing structure 1022 is high. In addition, when the housing wall portion 141 and the fourth base seat portion 142 are welded using the same material, in a process of filling the electrolyte solution, even if the electrolyte solution comes into contact with a welding position between the housing wall portion 141 and the fourth base seat portion 142, the position is not prone to contamination and corrosion, thereby effectively ensuring the connection reliability of the housing wall portion 141 and the fourth base seat portion 142.

In some embodiments, the housing wall portion 141 is provided with the fourth mounting groove that opens away from the accommodating cavity 1A, and at least a portion of the fourth base seat portion 142 is embedded in the fourth mounting groove, thereby improving the assembly efficiency of the fourth base seat portion 142 and the housing wall portion 141 and the connection stability of the fourth base seat portion 142 and the housing wall portion 141. In addition, the occupation of space outside the housing wall portion 141 by the fourth base seat portion 142 can be reduced.

For example, the mounting housing wall 14 may alternatively not include the housing wall portion 141 and the fourth base seat portion 142. For example, the electrolyte solution filling hole 31, the stopper portion 10211, the avoidance hole 10212, and the like are directly processed on a housing wall of the housing 1 for an engagement with the sealing structure 1022, thereby omitting the fourth base seat portion 142, reducing parts, and improving assembly efficiency.

In a battery cell in existing technologies, an electrolyte solution filling hole is usually opened in a top cover of a housing, and a terminal post, an explosion-proof vent, and the like are disposed on the top cover. An outer end of the electrolyte solution filling hole is flush with an outer surface of the top cover, and an inner end of the electrolyte solution filling hole is flush with an inner surface of the top cover. After a tab portion is electrically connected to the terminal post, an electrolyte solution is filled into the housing through the electrolyte solution filling hole. During electrolyte solution filling, if an electrolyte solution filling speed is excessively fast, the electrolyte solution backflows and spills from the electrolyte solution filling hole, leading to a reduced electrolyte solution filling speed. In addition, the spilled electrolyte solution further tends to contaminate and corrode to the top cover and contaminate and corrode the terminal post, the explosion-proof vent, and the like on the top cover, affecting the reliability of the battery cell. In addition, because the filling height of the electrolyte solution cannot exceed the inner end of the electrolyte solution filling hole, the highest electrolyte solution level of the electrolyte solution in the housing is flush with the inner surface of the top cover, and as a result a total filling amount of the electrolyte solution in the housing is limited, affecting the cycle life of the battery cell.

According to some embodiments of this application, with reference to FIG. 18, the housing assembly 1021 includes the housing 1, the housing 1 defines the accommodating cavity 1A, and the housing 1 includes the first housing wall 11. A surface on a side of the first housing wall 11 that faces the accommodating cavity 1A is an inner surface 11b, and a surface on a side of the first housing wall 11 that is away from the accommodating cavity 1A is an outer surface 11a. That is, the side of the first housing wall 11 that faces the accommodating cavity 1A is an inner side, and the side of the first housing wall 11 that is away from the accommodating cavity 1A is an outer side. The flow channel 1021A includes the electrolyte solution filling hole 31 that is directly or indirectly provided in the first housing wall 11, two ends of the electrolyte solution filling hole 31 are respectively a hole outer end 31a and a hole inner end 31b, and the hole outer end 31a and the hole inner end 31b are disposed in sequence in a direction from the outer surface 11a to the inner surface 11b of the first housing wall 11, that is, the hole outer end 31a and the hole inner end 31b are disposed in sequence in a direction from the outer side to the inner side. For example, when an upper surface of the first housing wall 11 is the outer surface 11a and a lower surface of the first housing wall 11 is the inner surface 11b, the hole outer end 31a and the hole inner end 31b are arranged from top to bottom. In this case, an upper end of the electrolyte solution filling hole 31 is the hole outer end 31a, and a lower end of the electrolyte solution filling hole 31 is the hole inner end 31b.

As shown in FIG. 18, in the embodiments of this application, the hole inner end 31b is located on a side (that is, the outer side) of the inner surface 11b of the first housing wall 11 that is away from the accommodating cavity 1A, that is, the hole inner end 31b of the electrolyte solution filling hole 31 is disposed away from the inner side with respect to the inner surface 11b of the first housing wall 11, or in other words, the hole inner end 31b of the electrolyte solution filling hole 31 is disposed close to the outer side with respect to the inner surface 11b of the first housing wall 11 is. For example, as shown in FIG. 18, a distance by which the hole inner end 31b of the electrolyte solution filling hole 31 protrudes toward the outer side beyond the inner surface 11b of the first housing wall 11 is H1.

In this way, the hole inner end 31b is disposed as being located on the side (that is, the outer side) of the inner surface 11b of the first housing wall 11 that faces away from the accommodating cavity 1A, so that additional accommodating space can be formed on the inner side of the hole inner end 31b of the electrolyte solution filling hole 31. During electrolyte solution filling, the first housing wall 11 is placed horizontally, the upper surface of the first housing wall 11 is the outer surface 11a, the lower surface of the first housing wall 11 is the inner surface 11b, the upper end of the electrolyte solution filling hole 31 is the hole outer end 31a, a lower end of the electrolyte solution filling hole 31 is the hole inner end 31b, and the lower end of the electrolyte solution filling hole 31 is higher than the lower surface of the first housing wall 11, so that the height of the lower end of the electrolyte solution filling hole 31 can be increased, and additional accommodating space is formed below the electrolyte solution filling hole 31, so that a buffering function can be achieved.

In this way, in the process of manufacturing, handling or using the battery cell 102, if the electrolyte solution tends to spill, the electrolyte solution that is about to spill can enter the accommodating space, thereby reducing the probability of the electrolyte solution spilling from the electrolyte solution filling hole 31, and mitigating the problem of the spilled electrolyte solution from contaminating parts (for example, the terminal post or the explosion-proof vent) on the first housing wall 11 and the first housing wall 11, so that the electrolyte solution filling speed is increased during manufacturing to enhance the manufacturability of the battery cell 102, and the reliability of the battery cell 102 is improved.

In addition, because the height of the lower end of the electrolyte solution filling hole 31 is increased, when the height of the filled electrolyte solution reaches the lower end of the electrolyte solution filling hole 31, the filling height of the electrolyte solution is higher than the lower surface of the first housing wall 11, thereby increasing the total filling amount of the electrolyte solution in the housing 1, and extending the cycle life of the battery cell 102. It may be understood that, in the process of using the battery cell 102, the consumption of the electrolyte solution leads to a reduction of the electrolyte solution inside the battery cell 102, affecting the service life of the battery cell 102. The service life of the battery cell 102 is increased by increasing the total filling amount of the electrolyte solution.

In addition, in the process of using the battery cell 102, the electrolyte solution generates gases after participating in reactions, leading to an increase in the pressure in the housing 1. When the pressure reaches a particular level, reliability issues arise. When gases are formed in the housing 1, additional accommodating space formed below the electrolyte solution filling hole 31 can buffer gases to mitigate the reliability issues caused by the increase in pressure, thereby improving the operational reliability of the battery cell 102.

In addition, it may be understood that, after the filling of the electrolyte solution is completed, the electrolyte solution filling hole 31 may be sealed through the sealing structure 1022 to prevent the electrolyte solution from leaking, thereby preventing external contaminants from entering the housing 1 through the electrolyte solution filling hole 31. After the electrolyte solution filling hole 31 is sealed, a placement orientation of the first housing wall 11 is not limited, and may be placed horizontally, or may be placed vertically. The first housing wall 11 may be located at a top portion, a bottom portion, a side portion, or the like of the housing 1, and the orientation of the electrolyte solution filling hole 31 changes correspondingly as the orientation of the first housing wall 11 changes.

For example, the battery cell 102 is placed as follows: when the first housing wall 11 forms a top wall of the housing 1, the upper surface of the first housing wall 11 is the outer surface 11a, the lower surface of the first housing wall 11 is the inner surface 11b, the upper end of the electrolyte solution filling hole 31 is the hole outer end 31a, and the lower end of the electrolyte solution filling hole 31 is the hole inner end 31b.

For another example, the battery cell 102 is placed as follows: when the first housing wall 11 forms a bottom wall of the housing 1, the lower surface of the first housing wall 11 is the outer surface 11a, the upper surface of the first housing wall 11 is the inner surface 11b, the lower end of the electrolyte solution filling hole 31 is the hole outer end 31a, and the upper end of the electrolyte solution filling hole 31 is the hole inner end 31b.

For another example, the battery cell 102 is placed as follows: when the first housing wall 11 forms a left side wall of the housing 1, the left surface of the first housing wall 11 is the outer surface 11a, a right surface of the first housing wall 11 is the inner surface 11b, a left end of the electrolyte solution filling hole 31 is the hole outer end 31a, and a right end of the electrolyte solution filling hole 31 is the hole inner end 31b.

For another example, the battery cell 102 is placed as follows: when the first housing wall 11 forms a right side wall of the housing 1, the right surface of the first housing wall 11 is the outer surface 11a, a left surface of the first housing wall 11 is the inner surface 11b, a right end of the electrolyte solution filling hole 31 is the hole outer end 31a, and a left end of the electrolyte solution filling hole 31 is the hole inner end 31b.

For another example, the battery cell 102 is placed as follows: when the first housing wall 11 forms a front side wall of the housing 1, a front surface of the first housing wall 11 is the outer surface 11a, a rear surface of the first housing wall 11 is the inner surface 11b, a front end of the electrolyte solution filling hole 31 is the hole outer end 31a, and a rear end of the electrolyte solution filling hole 31 is the hole inner end 31b.

For another example, the battery cell 102 is placed as follows: when the first housing wall 11 forms the rear side wall of the housing 1, the rear surface of the first housing wall 11 is the outer surface 11a, the front surface of the first housing wall 11 is the inner surface 11b, the rear end of the electrolyte solution filling hole 31 is the hole outer end 31a, and the front end of the electrolyte solution filling hole 31 is the hole inner end 31b.

For ease of description, "the first housing wall 11 forms a top wall of the housing 1, the upper surface of the first housing wall 11 is the outer surface 11a, the lower surface of the first housing wall 11 is the inner surface 11b, the upper end of the electrolyte solution filling hole 31 is the hole outer end 31a, and the lower end of the electrolyte solution filling hole 31 is the hole inner end 31b" is used as an example for description below.

In some embodiments of this application, as shown in FIG. 18, the mounting portion 8 is disposed on the first housing wall 11, at least a portion of the mounting portion 8 protrudes from a side (that is, the outer side) of the outer surface 11a of the first housing wall 11 that is away from the accommodating cavity 1A. That is, the mounting portion 8 may fully protrude from an outer side of the outer surface 11a of the first housing wall 11, or the mounting portion 8 may partially protrude from the outer side of the outer surface 11a of the first housing wall 11. For example, when the first housing wall 11 is placed horizontally, the upper surface of the first housing wall 11 is the outer surface 11a, and the lower surface of the first housing wall 11 is the inner surface 11b, the mounting portion 8 may be fully higher than the upper surface of the first housing wall 11, or the mounting portion 8 may only be partially higher than the upper surface of the first housing wall 11. The electrolyte solution filling hole 31 is provided in the mounting portion 8, so that it can be easy to obtain that the hole inner end 31b of the electrolyte solution filling hole 31 is located on the side (that is, the outer side) of the inner surface 11b of the first housing wall 11 that is away from the accommodating cavity 1A.

It should be noted that, none of the structure, shape, position, and the like of the mounting portion 8 is limited. For example, the mounting portion 8 may be the terminal post structure 1020 (for example, as shown in FIG. 18), the pressure relief structure 1025 (for example, as shown in FIG. 31), the mounting housing wall 14 (for example, as shown in FIG. 33), or the like.

For example, when the mounting portion 8 is the terminal post structure 1020, the terminal post structure 1020 is disposed on the first housing wall 11, at least a portion of the terminal post structure 1020 protrudes from the outer side of the outer surface 11a of the first housing wall 11, and the electrolyte solution filling hole 31 is formed on the terminal post structure 1020. For example, when the first housing wall 11 is placed horizontally, the upper surface of the first housing wall 11 is the outer surface 11a, and the lower surface of the first housing wall 11 is the inner surface 11b, the terminal post structure 1020 may be fully higher than the upper surface of the first housing wall 11, or the terminal post structure 1020 may only be partially higher than the upper surface of the first housing wall 11. For example, when the mounting portion 8 is the mounting housing wall 14, the plate material of the housing 1 may be stamped, a protruding portion may be used as the mounting housing wall 14, and the remaining portion is the first housing wall 11, thereby obtaining the mounting housing wall 14.

In some embodiments of this application, as shown in FIG. 19, the hole inner end 31b of the electrolyte solution filling hole 31 is located on a side of the outer surface 11a of the first housing wall 11 that is away from the accommodating cavity 1A, that is, the hole inner end 31b of the electrolyte solution filling hole 31 is disposed away from the inner side with respect to the outer surface 11a of the first housing wall 11, or in other words, the hole inner end 31b of the electrolyte solution filling hole 31 is disposed close to the outer side with respect to the outer surface 11a of the first housing wall 11 is. For example, as shown in FIG. 19, a distance by which the hole inner end 31b of the electrolyte solution filling hole 31 protrudes toward the outer side beyond the outer surface 11a of the first housing wall 11 is H2.

In this way, the hole inner end 31b of the electrolyte solution filling hole 31 is disposed on the side of the outer surface 11a of the first housing wall 11 that faces away from the accommodating cavity 1A, so that additional accommodating space can be formed on the inner side of the hole inner end 31b. For example, during electrolyte solution filling, the first housing wall 11 is placed horizontally, the upper surface of the first housing wall 11 is the outer surface 11a, the lower surface of the first housing wall 11 is the inner surface 11b, the upper end of the electrolyte solution filling hole 31 is the hole outer end 31a, a lower end of the electrolyte solution filling hole 31 is the hole inner end 31b, and the lower end of the electrolyte solution filling hole 31 is higher than the upper surface of the first housing wall 11, so that the hole inner end 31b is disposed close to the outer side with respect to the outer surface 11a of the first housing wall 11.

In this way, the height of the hole inner end 31b of the electrolyte solution filling hole 31 can be further increased, and more accommodating space is provided below the electrolyte solution filling hole 31. In this way, in the process of manufacturing, handling or using the battery cell 102, the probability of the electrolyte solution spilling from the electrolyte solution filling hole 31 can be further reduced, thereby improving the reliability of the battery cell 102 and manufacturability. In addition, the filling height of the electrolyte solution may be higher than the upper surface of the first housing wall 11, thereby further increasing the total filling amount of the electrolyte solution in the housing 1, and extending the cycle life of the battery cell 102. In addition, in the process of using the battery cell 102, the electrolyte solution generates gases after participating in reactions, and more gases can be buffered by the accommodating space, so that the reliability issues caused by a pressure increase can be mitigated more effectively, thereby further improving the operational reliability of the battery cell 102.

In some embodiments of this application, the housing 1 includes the first housing wall 11, the housing assembly 1021 includes the housing 1, the accommodating cavity 1A is defined by the housing 1, the housing 1 includes the first housing wall 11, and the flow channel 1021A is disposed at the first housing wall 11. As shown in FIG. 18, the first housing wall 11 is integrally formed with at least one second housing wall 12, and the second housing wall 12 extends toward a side in a thickness direction of the first housing wall 11. Alternatively, as shown in FIG. 36, the first housing wall 11 is an integrally formed cover plate. In this way, the position of the flow channel 1021A can be flexibly designed, thereby expanding the application scope of the battery cell 102 in the embodiments of this application.

It should be noted that, the second housing wall 12 may extend from an edge of the first housing wall 11. When the first housing wall 11 is a rectangle, at least one edge in the four edges of the first housing wall 11 may extend from the second housing wall 12. For example, only one edge of the first housing wall 11 may extend from the second housing wall 12, only two edges of the first housing wall 11 may extend from the second housing wall 12, three edges of the first housing wall 11 may extend from the second housing wall 12, or all the four edges of the first housing wall 11 may extend from the second housing wall 12. For example, when the housing 1 is a rectangular housing, any wall surface of the rectangular housing may be used as the first housing wall 11.

For example, the housing 1 may include a housing body and a cover plate, the housing body defines open space on a side, and the cover plate is disposed at the opens side of the housing body, to form the accommodating cavity 1A between the housing body and the cover plate. In this case, a wall surface on a side of the housing body that is opposite to the cover plate is the first housing wall 11, and a wall surface of the housing body that is connected between the first housing wall 11 and the cover plate is the second housing wall 12. Alternatively, the wall surface on the side of the housing body that is opposite to the cover plate is the second housing wall 12, and the wall surface of the housing body that is connected between the second housing wall 12 and the cover plate is the first housing wall 11. Further alternatively, the cover plate is the first housing wall 11.

According to a second aspect, with reference to FIG. 2 and FIG. 28, this application further provides a battery 100, including a bus component 103 and the battery cell 102 in any foregoing solution. A plurality of battery cells 102 are provided, and at least two battery cells 102 are electrically connected by the bus component 103. In this way, series and/or parallel connection the plurality of battery cells 102 can be achieved. Both the operational reliability and the service life of the battery cell 102 according to the embodiments of this application are enhanced, thereby improving the operational reliability and the service life of the battery 100. It should be noted that, the battery 100 according to the embodiments of this application may include a box body 101 or may not include a box body 101.

For example, when the plurality of battery cells 102 are connected in series, the terminal post cover plate 3 of the anode of one battery cell 102 is connected to the terminal post cover plate 3 of the cathode of a next battery cell 102 by one bus component 103, and the terminal post cover plate 3 of the cathode of the battery cell 102 is connected to the terminal post cover plate 3 of the anode of a previous battery cell 102 by another bus component 103.

In some embodiments, as shown in FIG. 37, when the sealing structure 1022 is engaged with the mounting portion 8 and the electrolyte solution filling hole 31 is formed on the mounting portion 8, the mounting portion 8 includes the terminal post structure 1020, and the terminal post structure 1020 includes the terminal post body 2 and the terminal post cover plate 3. When the electrolyte solution filling hole 31 is formed on the terminal post cover plate 3, the bus component 103 is connected to a surface on a side of the terminal post cover plate 3 that is away from the accommodating cavity 1A to form the second connection portion 104 (for example, form a weld mark through welding), and the electrolyte solution filling hole 31 is staggered from the second connection portion 104, that is, the electrolyte solution filling hole 31 does not overlap with the second connection portion 104. In this way, when the electrolyte solution spills from the electrolyte solution filling hole 31, contamination and corrosion caused to the second connection portion 104 by the electrolyte solution can be reduced. In addition, the sealing structure 1022 covering the electrolyte solution filling hole 31 can be kept from affecting the connection between the bus component 103 and the terminal post cover plate 3, thereby improving the connection convenience and the connection reliability of the bus component 103 and the terminal post cover plate 3.

In some embodiments, as shown in FIG. 37, a boundary portion 34 is formed on the surface of the side of the terminal post cover plate 3 that is away from the accommodating cavity 1A, and the boundary portion 34 is located between the second connection portion 104 and the electrolyte solution filling hole 31. It should be noted that, the boundary portion 34 is a depressed structure or a raised structure. When spilling from the electrolyte solution filling hole 31, the electrolyte solution may be obstructed by the boundary portion 34, for example, may accumulate in the depressed structure or blocked by the raised structure, to reduce the probability of the electrolyte solution coming into contact with the second connection portion 104, thereby reducing contamination and corrosion caused to the second connection portion 104 by the electrolyte solution. In addition, the boundary portion 34 is disposed and can achieve an identification function, so that the connection position between the bus component 103 and the terminal post cover plate 3 can be far away from the electrolyte solution filling hole 31, thereby further reducing the probability of the electrolyte solution spilled from the electrolyte solution filling hole 31 of coming into contact with the second connection portion 104. It should be noted that, neither of the shape and size of the boundary portion 34 is limited, provided that the electrolyte solution filling hole 31 can be obstructed to some extent.

According to a third aspect, embodiments of this application further provide a power consuming apparatus, including the battery 100 in any foregoing solution.

According to some embodiments of this application, this application further provides a power consuming apparatus, including the battery 100 in any foregoing solution. The battery 100 is configured to supply electric energy to the power consuming apparatus. The power consuming apparatus may be any foregoing device or system using the battery 100. The performance of the battery 100 is enhanced, thereby enhancing the operational electrical performance of the power consuming apparatus.

The battery cell 102 according to a specific embodiment of this application is described below.

The battery cell 102 includes the housing assembly 1021, the sealing structure 1022, and the battery cell assembly 7. With reference to FIG. 3 to FIG. 5, the housing assembly 1021 defines the accommodating cavity 1A, the housing assembly 1021 is provided with the flow channel 1021A in communication with the accommodating cavity 1A, the flow channel 1021A includes the electrolyte solution filling hole 31, and the sealing structure 1022 is detachably engaged with the housing assembly 1021 and is configured to open or seal the electrolyte solution filling hole 31.

With reference to FIG. 17, the housing assembly 1021 includes the housing 1 and the terminal post structure 1020, the accommodating cavity 1A is defined by the housing 1, the terminal post structure 1020 includes the terminal post body 2 and the terminal post cover plate 3, the terminal post body 2 is mounted in the housing 1, the terminal post cover plate 3 covers the terminal post body 2, the flow channel 1021A further includes a communication channel 2A, the communication channel 2A is formed in the terminal post body 2 and is in communication with the accommodating cavity 1A, the electrolyte solution filling hole 31 is formed on the terminal post cover plate 3 and is in communication with the communication channel 2A, and the sealing structure 1022 is detachably engaged with the terminal post cover plate 3 to open or seal the electrolyte solution filling hole 31.

With reference to FIG. 17, the terminal post cover plate 3 includes a cover plate portion 36 and a first base seat portion 37, the cover plate portion 36 covers the terminal post body 2, the first base seat portion 37 is mounted at the cover plate portion 36, a portion of the electrolyte solution filling hole 31 is formed on the first base seat portion 37, the remaining portion is formed on the cover plate portion 36, and the sealing structure 1022 is engaged with the first base seat portion 37.

With reference to FIG. 18, the housing 1 includes a first housing wall 11, a surface on a side of the first housing wall 11 that faces the accommodating cavity 1A is an inner surface 11b, a surface on a side of the first housing wall 11 that is away from the accommodating cavity 1A is an outer surface 11a, the terminal post structure 1020 is disposed on the first housing wall 11, two ends of the electrolyte solution filling hole 31 are respectively a hole outer end 31a and a hole inner end 31b, the hole outer end 31a and the hole inner end 31b are disposed in sequence in a direction from the outer surface 11a to the inner surface 11b of the first housing wall 11, and the hole inner end 31b is located on a side of the inner surface 11b of the first housing wall 11 that is away from the accommodating cavity 1A.

With reference to FIG. 18, the communication channel 2A includes a first accommodating groove 211 and an electrolyte solution passage hole 23, the first accommodating groove 211 opens toward the terminal post cover plate 3 to communicate with the electrolyte solution filling hole 31, and the electrolyte solution passage hole 23 penetrates a groove wall of the first accommodating groove 211 and is in communication with the first accommodating groove 211 and the accommodating cavity 1A. The battery cell assembly 7 includes an active substance coating portion 71 received in the accommodating cavity 1A and a conductive portion 72 connected to the active substance coating portion 71, a communication hole 22 for communicating the first accommodating groove 211 and the accommodating cavity 1A is formed in the terminal post body 2, one or more communication holes 22 are provided, at least one communication hole 22 is used as the electrolyte solution passage hole 23, and the conductive portion 72 is passed through the at least one communication hole 22 to be at least partially received in the first accommodating groove 211.

During manufacturing of the battery cell 102, the conductive portion 72 is first passed through the communication hole 22 of the terminal post body 2 to achieve welding of the conductive portion 72 and the terminal post body 2, then the terminal post body 2 is covered with the terminal post cover plate 3, the electrolyte solution is filled through the electrolyte solution filling hole 31 in the terminal post cover plate 3, and the electrolyte solution enters the housing 1 through the communication channel 2A on the terminal post body 2. After electrolyte solution filling is completed, the sealing structure 1022 is mounted in the electrolyte solution filling hole 31, thereby achieving tight sealing.

It needs to be noted that the embodiments in this application and the features in the embodiments may be combined with each other without causing any conflict.

The foregoing descriptions are merely preferred embodiments of this application, but are not intended to limit this application. Persons skilled in the art may make various modifications and changes to this application. Any modification, equivalent replacement, or improvement made without departing from the spirit and principle of this application shall fall within the scope of protection of this application.

## Claims

1. A battery cell, comprising:
a housing assembly, defining an accommodating cavity, and provided with a flow channel in communication with the accommodating cavity; and
a sealing structure, engaged with the housing assembly, and configured to open or seal the flow channel.

2. The battery cell according to claim 1, wherein the sealing structure is engaged with the housing assembly detachably.

3. The battery cell according to claim 2, wherein the sealing structure comprises a first structural member and a second structural member, the second structural member is sealingly engaged with the flow channel, and the first structural member is engaged with the housing assembly in a locking manner and is located on a side of the second structural member that is away from the accommodating cavity to restrict the second structural member to a position of sealing the flow channel.

4. The battery cell according to claim 3, wherein the first structural member is connected to the second structural member.

5. The battery cell according to claim 4, wherein the first structural member is connected to the second structural member detachably.

6. The battery cell according to claim 4 or 5, wherein the connection between the first structural member and the second structural member enables the first structural member and the second structural member to remain in a connected state when the sealing structure is detached with respect to the housing assembly.

7. The battery cell according to any one of claims 4 to 6, wherein a first mating portion is provided on a side of the first structural member that faces the second structural member, a second mating portion is provided on a side of the second structural member that faces the first structural member, one of the first mating portion and the second mating portion is a convex structure and the other is a concave structure, and the convex structure is engaged with the concave structure.

8. The battery cell according to claim 7, wherein the convex structure forms an interference fit, a threaded engagement, or a limiting engagement via a limiting structure with the concave structure to prevent the convex structure from being disengaged from the concave structure.

9. The battery cell according to any one of claims 3 to 8, wherein at least a portion of the first structural member is inserted in the housing assembly.

10. The battery cell according to any one of claims 3 to 9, wherein the first structural member is configured to lock and unlock with the housing assembly via rotational motion.

11. The battery cell according to claim 10, wherein a tool mating hole is provided in a surface on a side of the first structural member that is away from the second structural member.

12. The battery cell according to claim 10 or 11, wherein a positioning structure is provided on the surface on the side of the first structural member that is away from the second structural member.

13. The battery cell according to any one of claims 10 to 12, wherein the first structural member comprises a central portion and a locking portion, the central portion is disposed corresponding to the flow channel, the locking portion is located in a peripheral region of the central portion, a stopper portion and an avoidance hole that are located around the flow channel and are alternately disposed are formed on the housing assembly, a receiving groove is formed on a side of the stopper portion that is close to the accommodating cavity, the avoidance hole penetrates a surface on a side of the housing assembly that is away from the accommodating cavity and is in communication with the receiving groove, and the locking portion rotates through the avoidance hole to enter/exit the receiving groove.

14. The battery cell according to claim 13, wherein a plurality of avoidance holes are provided and are disposed at intervals around the flow channel, the stopper portion is disposed between every two adjacent avoidance holes, a plurality of locking portions are provided and are disposed at intervals around the central portion, and the plurality of locking portions are disposed corresponding to the plurality of avoidance holes respectively.

15. The battery cell according to claim 13 or 14, wherein the housing assembly comprises a support portion, the second structural member comprises a lapping portion, and the lapping portion is lapped on a side of the support portion that is away from the accommodating cavity and is supported on a side of the first structural member that is close to the accommodating cavity, or the first structural member is lapped on the side of the support portion that is away from the accommodating cavity.

16. The battery cell according to any one of claims 13 to 15, wherein a first positioning structure is provided on a side of the stopper portion that faces the receiving groove, a second positioning structure is provided on a side of the locking portion that faces the stopper portion, and the first positioning structure forms a positioning engagement with the second positioning structure to prevent the locking portion from rotating with respect to the stopper portion.

17. The battery cell according to claim 16, wherein one of the first positioning structure and the second positioning structure is a protrusion structure, and the other is a recess structure, and the protrusion structure forms a concave-convex engagement with the recess structure.

18. The battery cell according to claim 17, wherein the protrusion structure comprises a plurality of elongated ribs disposed at intervals in a rotational direction of the first structural member, the recess structure comprises a plurality of elongated grooves disposed at intervals in the rotational direction of the first structural member, and the plurality of elongated ribs are engaged with the plurality of elongated grooves in a one-to-one correspondence.

19. The battery cell according to claim 17, wherein the protrusion structure comprises a boss structure, the recess structure comprises an arc-shaped groove extending along the rotational direction of the first structural member, and the boss structure is engaged with the arc-shaped groove.

20. The battery cell according to any one of claims 13 to 19, wherein the central portion is embedded in the flow channel, and forms a cylindrical surface engagement with the flow channel.

21. The battery cell according to any one of claims 3 to 20, wherein at least a portion of the second structural member is plugged in the flow channel, and forms an interference fit with the flow channel to seal the flow channel.

22. The battery cell according to claim 21, wherein the first structural member forms a cylindrical surface plug-in engagement with the second structural member to make the first structural member rotatable with respect to the second structural member.

23. The battery cell according to claim 21 or 22, wherein the flow channel comprises a first channel section and a second channel section arranged in sequence in an electrolyte solution filling direction, a cross-sectional area of the first channel section is greater than a cross-sectional area of the second channel section, the second structural member is in an interference fit with the second channel section, and at least a portion of the first structural member is embedded in the first channel section.

24. The battery cell according to claim 23, wherein the housing assembly forms a stepped surface at a connection between the first channel section and the second channel section, and the second structural member is locally supported on a side of the stepped surface that is away from the accommodating cavity.

25. The battery cell according to claim 23 or 24, wherein the housing assembly forms the stepped surface at the connection between the first channel section and the second channel section, and the stepped surface obliquely extends toward the accommodating cavity in a direction from a hole wall of the first channel section to the second channel section.

26. The battery cell according to any one of claims 1 to 25, wherein the sealing structure is configured to be at least partially embedded in the flow channel through an inlet of the flow channel.

27. The battery cell according to any one of claims 1 to 26, wherein the housing assembly comprises a mounting portion, the flow channel comprises an electrolyte solution filling hole formed in the mounting portion, the mounting portion comprises a base portion and a base seat mounted on the base portion, and the sealing structure is engaged with the base seat and is configured to open or seal the electrolyte solution filling hole.

28. The battery cell according to any one of claims 1 to 27, wherein the housing assembly comprises a housing and a terminal post structure, the accommodating cavity is defined by the housing, the terminal post structure is disposed in the housing, the flow channel is disposed at the terminal post structure and comprises the electrolyte solution filling hole, and the sealing structure is engaged with the terminal post structure and is configured to open or seal the electrolyte solution filling hole.

29. The battery cell according to claim 28, wherein the terminal post structure comprises a terminal post body and a terminal post cover plate, the terminal post body is mounted in the housing, the terminal post cover plate covers the terminal post body, the flow channel further comprises a communication channel, the communication channel is formed in the terminal post body and is in communication with the accommodating cavity, the electrolyte solution filling hole is formed on the terminal post cover plate and is in communication with the communication channel, and the sealing structure is engaged with the terminal post cover plate to open or seal the electrolyte solution filling hole.

30. The battery cell according to claim 29, wherein the terminal post cover plate comprises a cover plate portion and a first base seat portion, the cover plate portion covers the terminal post body, the first base seat portion is mounted at the cover plate portion, at least a portion of the electrolyte solution filling hole is formed on the first base seat portion, and the sealing structure is engaged with the first base seat portion.

31. The battery cell according to claim 30, wherein a first mounting groove that opens away from the accommodating cavity is provided in the cover plate portion, and at least a portion of the first base seat portion is embedded in the first mounting groove.

32. The battery cell according to any one of claims 29 to 31, wherein the communication channel comprises a first accommodating groove and an electrolyte solution passage hole, the first accommodating groove opens toward the terminal post cover plate to communicate with the electrolyte solution filling hole, and the electrolyte solution passage hole penetrates a groove wall of the first accommodating groove and is in communication with the first accommodating groove and the accommodating cavity.

33. The battery cell according to claim 32, wherein the communication channel further comprises a second accommodating groove, the second accommodating groove is located on a side of the first accommodating groove that is close to the accommodating cavity, the second accommodating groove opens toward the accommodating cavity to be in communication with the accommodating cavity, and the electrolyte solution passage hole penetrates a groove wall of the second accommodating groove to be in communication with the first accommodating groove and the second accommodating groove.

34. The battery cell according to claim 32 or 33, wherein the battery cell comprises a battery cell assembly, the battery cell assembly comprises an active substance coating portion received in the accommodating cavity and a conductive portion connected to the active substance coating portion, a communication hole for communicating the first accommodating groove and the accommodating cavity is formed in the terminal post body, one or more communication holes are provided, at least one communication hole is used as the electrolyte solution passage hole, and the conductive portion is passed through the at least one communication hole to be at least partially received in the first accommodating groove.

35. The battery cell according to claim 28, wherein the terminal post structure comprises a terminal post body, the terminal post body is mounted on the housing, the flow channel further comprises an accommodating groove, both the accommodating groove and the electrolyte solution filling hole are formed in the terminal post body, the electrolyte solution filling hole penetrates a groove wall on a side of the accommodating groove that is away from a groove opening of the accommodating groove to communicate with the accommodating groove, and the sealing structure is engaged with the terminal post body to open or seal the electrolyte solution filling hole.

36. The battery cell according to claim 35, wherein the terminal post body comprises a body portion and a second base seat portion, the body portion is mounted on the housing, the second base seat portion is mounted at the body portion, at least a portion of the electrolyte solution filling hole is formed on the second base seat portion, and the sealing structure is engaged with the second base seat portion.

37. The battery cell according to claim 35 or 36, wherein the accommodating groove comprises a third accommodating groove with a groove opening facing away from the accommodating cavity, and the electrolyte solution filling hole penetrates a groove wall on a side of the third accommodating groove that is close to the accommodating cavity.

38. The battery cell according to claim 37, wherein the accommodating groove further comprises a fourth accommodating groove with a groove opening facing the accommodating cavity, the fourth accommodating groove is located on the side of the third accommodating groove that is close to the accommodating cavity, and the electrolyte solution filling hole penetrates a groove wall on a side of the fourth accommodating groove that is away from the accommodating cavity to communicate the third accommodating groove with the fourth accommodating groove.

39. The battery cell according to claim 35 or 36, wherein the accommodating groove comprises a fifth accommodating groove with a groove opening facing the accommodating cavity, and the electrolyte solution filling hole penetrates a groove wall on a side of the fifth accommodating groove that is away from the accommodating cavity.

40. The battery cell according to any one of claims 1 to 27, wherein the housing assembly comprises a housing and a pressure relief structure, the accommodating cavity is defined by the housing, the pressure relief structure is disposed on the housing, a weak region is provided on the pressure relief structure and/or at a connection between the pressure relief structure and the housing, the flow channel is disposed at the pressure relief structure and comprises the electrolyte solution filling hole, and the sealing structure is engaged with the pressure relief structure and is configured to open or seal the electrolyte solution filling hole.

41. The battery cell according to claim 40, wherein the pressure relief structure comprises a pressure relief body and a third base seat portion, the pressure relief body is disposed on the housing, the third base seat portion is mounted on the pressure relief body, at least a portion of the electrolyte solution filling hole is formed in the third base seat portion, and the sealing structure is engaged with the third base seat portion.

42. The battery cell according to any one of claims 1 to 27, wherein the housing assembly comprises a housing, the accommodating cavity is defined by the housing, a terminal post structure and a pressure relief structure are disposed on the housing, the housing comprises a mounting housing wall spaced apart from the terminal post structure and the pressure relief structure, the flow channel is disposed at the mounting housing wall and comprises the electrolyte solution filling hole, and the sealing structure is engaged with the mounting housing wall and is configured to open or seal the electrolyte solution filling hole.

43. The battery cell according to claim 42, wherein the mounting housing wall comprises a housing wall portion and a fourth base seat portion, the fourth base seat portion is mounted on the housing wall portion, at least a portion of the electrolyte solution filling hole is formed in the fourth base seat portion, and the sealing structure is engaged with the fourth base seat portion.

44. The battery cell according to any one of claims 1 to 43, wherein the housing assembly comprises the housing, the accommodating cavity is defined by the housing, the housing comprises a first housing wall, a surface on a side of the first housing wall that faces the accommodating cavity is an inner surface, a surface on a side of the first housing wall that is away from the accommodating cavity is an outer surface, the flow channel comprises the electrolyte solution filling hole that is directly or indirectly provided in the first housing wall, two ends of the electrolyte solution filling hole are respectively a hole outer end and a hole inner end, the hole outer end and the hole inner end are disposed in sequence in a direction from the outer surface to the inner surface of the first housing wall, and the hole inner end is located on a side of the inner surface of the first housing wall that is away from the accommodating cavity.

45. The battery cell according to claim 44, wherein the mounting portion is disposed on the first housing wall, at least a portion of the mounting portion protrudes from a side of the outer surface of the first housing wall that is away from the accommodating cavity, and the electrolyte solution filling hole is provided in the mounting portion.

46. The battery cell according to claim 44 or 45, wherein the hole inner end is located on the side of the outer surface of the first housing wall that is away from the accommodating cavity.

47. The battery cell according to any one of claims 1 to 46, wherein the housing assembly comprises the housing, the accommodating cavity is defined by the housing, the housing comprises the first housing wall, the flow channel is disposed at the first housing wall, the first housing wall is an integrally formed cover plate, or the first housing wall is integrally formed with at least one second housing wall, and the second housing wall extends toward a side in a thickness direction of the first housing wall.

48. A battery, comprising a bus component and the battery cell according to any one of claims 1 to 47, wherein a plurality of battery cells are provided, and at least two battery cells are electrically connected by the bus component.

49. A power consuming apparatus, comprising the battery according to claim 48.
